(19) Europäisches Patentamt
European Patent Office
Office européen des brevets

(11) **EP 3 523 865 B1**

(12) **EUROPÄISCHE PATENTSCHRIFT**

(45) Veröffentlichungstag und Bekanntmachung des Hinweises auf die Patenterteilung:
**16.06.2021 Patentblatt 2021/24**

(21) Anmeldenummer: **17784550.0**

(22) Anmeldetag: **05.10.2017**

(51) Int Cl.:
*H02H 9/04* (2006.01)    *H05B 33/08* (2020.01)
*H05B 41/285* (2006.01)    *H05B 41/292* (2006.01)
*H05B 41/298* (2006.01)    *H02H 9/00* (2006.01)
*H02H 9/06* (2006.01)    *F21V 23/00* (2015.01)
*F21K 9/238* (2016.01)    *H02H 9/02* (2006.01)
*F21V 23/04* (2006.01)

(86) Internationale Anmeldenummer:
**PCT/EP2017/025301**

(87) Internationale Veröffentlichungsnummer:
**WO 2018/065120 (12.04.2018 Gazette 2018/15)**

(54) **BETRIEBSGERÄT MIT GESTAFFELTEM ÜBERSPANNUNGS- UND ÜBERSTROMSCHUTZ UND ANTENNE FÜR DIE ANSTEUERUNG VON INTELLIGENTEN LEUCHTMITTELN UND GERÄTEN**

OPERATING DEVICE WITH STAGGERED PROTECTION CIRCUITS AGAINST OVERVOLTAGE AND OVERCURRENT AND ANTENNA FOR DRIVING INTELLIGENT LAMPS AND LIGHTING APPLIANCES

APPAREIL DE COMMANDE MUNI D'UNE PROTECTION ÉCHELONNÉE CONTRE LES SURTENSIONS ET LES SURINTENSITÉS POUR LA COMMANDE DE MOYENS D'ÉCLAIRAGE ET D'APPAREILS INTELLIGENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2016 DE 102016011815**

(43) Veröffentlichungstag der Anmeldung:
**14.08.2019 Patentblatt 2019/33**

(73) Patentinhaber: **iAd Gesellschaft für Informatik, Automatisierung und Datenverarbeitung mbH**
**90613 Grosshabersdorf (DE)**

(72) Erfinder:
• **HAMPEL, Hermann**
**90613 Grosshabersdorf (DE)**

• **BEROLD, Ulrich**
**90427 Nürnberg (DE)**
• **PIEGER, Markus**
**91301 Forchheim (DE)**
• **HAMPEL, Johannes**
**90613 Grosshabersdorf (DE)**

(74) Vertreter: **Dreykorn-Lindner, Werner**
**Patentanwalt**
**Steinlachstrasse 2**
**90571 Schwaig (DE)**

(56) Entgegenhaltungen:
EP-A1- 2 944 863    WO-A1-2012/022555
WO-A1-2012/146212    WO-A1-2015/179200
FR-A1- 2 665 031    US-A1- 2010 085 179
US-A1- 2015 048 754    US-A1- 2015 259 078
US-A1- 2015 279 207

**Beschreibung**

Die Erfindung betrifft ein Betriebsgerät und ein daran angeschlossenes Leuchtmittel gemäß Anspruch mit einem eingangsseitigen Grobschutz, einem Ausgang mit getrennten Schnittstellenschaltungen und einem ausgangsseitigen Feinschutz sowie einer zwischen dem Grobschutz und dem Feinschutz angeordneten, als Filter ausgebildeten Entkopplung zum Schutz, Steuerung und Stromversorgung daran angeschlossener Leuchtmittel.

In der Telekommunikationstechnik (Fernmeldevermittlungsanlagen, Signalanlagen, u.a.) sind Schaltungsanordnungen zum kombinierten Schutz elektronischer Einrichtungen vor Überspannung und Überstrom, welche allgemein als Sekundär- oder Feinschutz bezeichnet werden, seit langem bekannt. Für den sogenannten Grobschutz oder Primärschutz werden Überspannungsableiter auf Glimmstreckenbasis oder Funkenstrecken verwendet. Für den Feinschutz sind drei Grundanordnungen und deren Kombinationen bekannt:

1. Varistoren in Parallelschaltung zur Spannungsbegrenzung,
2. Einsatz von temperaturabhängigen Widerständen in Reihen- und Parallelschaltung zur Strom- und Spannungsbegrenzung,
3. Einsatz von Halbleitern wie Transistoren, Thyristoren, Triacs und Dioden in Reihen- und Parallelschaltung zur Strom- und Spannungsbegrenzung.

Während temperaturabhängige Widerstände eine zu große Zeitkonstante aufweisen um einen idealen Schutz zu bieten, sind Varistoren auf nur einen Spannungswert - die Nennspannung - fixiert. Diese Nennspannung kann im unterschiedlichen Betriebsfall bei kleinen Widerständen schon zu Zerstörungen bestimmter Anlagenteile führen. Ein wirklich ausreichender Schutz empfindlicher elektronischer Geräte ist nur durch kombinierte Strom- und spannungsbewertende Halbleiterschaltungen zu erreichen. Aus der DD 260 153 A1 ist eine Schaltungsanordnung zum zuverlässigen Schutz vor Überstrom und Überspannung bekannt, bei der durch den Einsatz eines Leistungsschaltelements im Überlastfall ein bidirektionaler Schalter mit einem über Strom- und Spannungsfühler gesteuerten Querstrom Strom und Spannung am Ausgang begrenzt.

Weiterhin ist aus der DD 264 094 A1 eine Anordnung zum Schutz der Eingangsbauelemente einer Niederspannungssteuerung für Hochspannungsleistungsschalter bekannt, wobei in der Steuerleitung der zu schützenden den Schaltvorgang auslösenden elektronischen Halbleiterbauelemente Grobschutz- und Feinschutzmittel unter Verwendung von Überspannungsschutzelementen und frequenzselektiver Verzögerungsglieder vorgesehen sind. Im Einzelnen ist das Grobschutzmittel aus einer Widerstandskombination, in welcher ein Widerstand, ein Varistor und ein weiterer Widerstand in Reihe geschaltet sind gebildet. Weiterhin besteht das Feinschutzmittel zum einen für Störimpulszeiten größer als die Ansprechzeit des Varistors aus einem Tiefpass, der aus einer zum Varistor parallel geschalteten Reihenschaltung von einem Widerstand und einem Kondensator gebildet ist, und zum anderen für Störimpulszeiten kleiner als die Ansprechzeit des Varistors aus einer in der Widerstandskombination der Widerstände einbezogenen zwischen den beiden letzteren Widerständen in Reihe sowie zum Kondensator parallel geschalteten Z-Diode und einem zum Kondensator parallel geschalteten HF-Kondensator. In diese Parallelschaltung von Z-Diode, HF-Kondensator sind wiederum als Parallelschaltung hierzu die Steuerelektrode bzw. Steuerelektroden des elektronischen Halbleiterbauelementes bzw. der elektronischen Halbleiterbauelemente integriert.

In der null- und niederfrequent betriebenen Schwachstromtechnik (Netze mit Spannungen <50 V und Strömen <2 A) und Starkstromtechnik bis 380$V_{eff}$ werden als Überspannungsschutz Einzelelemente in Form von Funkenstrecken, gasgefüllten Überspannungsableiter, Varistoren und Dioden mit stark nichtlinearer Kennlinie, z.B. Zenerdioden eingesetzt. Dort, wo es die zu verarbeitenden elektrischen Werte zulassen, verwendet man auch relativ teure Trenntransformatoren als Einzelelemente zur Begrenzung und galvanischen Entkopplung. Messtechnische Untersuchungen ergaben, dass ein derartiger Überspannungsschutz aus einem Einzelelement nicht in der Lage ist, insbesondere sehr steil ansteigende und länger andauernde Überspannungen wirkungsvoll auf Werte zu begrenzen, die für das zu schützende Gerät bzw. die Anlage ungefährlich sind. Bei Schutzelementen auf Halbleiterbasis besteht aufgrund der geringen Stoßstromtragfähigkeit über längere Zeit die Gefahr der thermischen Zerstörung. Trenntransformatoren verlieren durch Sättigungseffekte ihre Schutzwirkung. Ungünstig ist auch ihr induktives Speichervermögen, dadurch wird die einlaufende Überspannungsenergie zwar zunächst absorbiert, dann jedoch gegenphasig, allerdings mit veränderter Zeitcharakteristik an das zu schützende Gerät bzw. die Anlage abgegeben. Um dies zu vermeiden ist aus der DD 300 256 A1 eine Einrichtung zur Begrenzung von Überspannungen in niederfrequenten Nachrichten-, Datenübertragungs-, Mess-, Steuer- und Regelanlagen sowie in Elektroenergieerzeugungs-, -verteilungs- und -verbraucheranlagen mit Gleich- oder Wechselspannung bis zu 380$V_{eff}$ bekannt, besteht die Überspannungsschutzeinrichtung aus der Zusammenschaltung eines gasgefüllten Überspannungsableiters als Grobschutz über ein geeignetes, verbindendes Bauelement mit einem Zinkoxid- Varistor als Feinschutz. Dabei ergänzen sich Überspannungsableiter und Zinkoxid-Varistor zeitlich und quantitativ in der Realisierung der Schutzfunktion. Das Verbindungsbauelement, in der Regel ein ohmscher Widerstand oder eine Induktivität, begünstigt diesen Prozess und bewirkt sowohl den Energiefluss unter normalen Betriebsbedingungen als auch eine Steuerung der durch die eintreffende Überspannung eingetragenen Energie und ihre Verteilung auf die beiden, die Überspannung begrenzenden Bauelemente. In der steilen Anstiegsphase einer einlaufenden Überspannung begrenzt während der Zündverzugszeit des Überspannungsableiters zunächst der Zinkoxid-Varistor mit seinem vorgeschalteten ohmschen oder induktiven Widerstand. Mit Eintritt der Zündung des Überspannungsableiters verteilt sich die Energieabsorption der Überspannung auf alle Bauelemente der Überspannungsschutzeinrichtung, dabei kommen sowohl die große Stoßstromtragfähigkeit des Überspannungsableiters als auch die vorteilhaft niedrige und in weiten Grenzen wählbare Begrenzungsspannung des Zinkoxid-Varistors vorteilhaft zur Wirkung. Die Schutzwirkung tritt dabei unabhängig von der Polarität der Überspannung ein und mit einer Staffelung der Begrenzungsspannungen der Zinkoxid-Varistoren von 25V bis zu 800V lassen sich die unterschiedlichsten Spannungsebenen für beispielsweise NF-Sprechverbindungen bis zu 20 kHz beherrschen.

Um einen Überspannungsschutz für eine Spannungsversorgung anzugeben, die über eine weite Bandbreite eine gute Sperrwirkung gegen Überspannungen jeder Art aufweist ist aus der DE 20 2006 016 649 U1 eine aus einem eingangsseitigen Grobschutz und einem ausgangsseitigen Feinschutz sowie einer zwischen dem Grobschutz und dem Feinschutz angeordneten Entkopplung bestehende Schutzschaltung bekannt, bei der die Bauelemente des Grobschutzes, die Bauelemente des Feinschutzes und die Bauelemente der Entkopplung eng benachbart auf einem gemeinsamen Bauteileträger in einem gemeinsamen Gehäuse angeordnet sind. Der Grobschutz besteht aus Varistoren, wobei ein Varistor über einen gasgefüllten Überspannungsableiter, welcher den Grobschutz galvanisch vom Erdleiter trennt, mit dem Erdleiter verbunden ist. Nur bei Auftreten einer Überspannung schaltet der Überspannungsableiter durch, so dass nur kurzzeitig ein Strom über den Erdleiter PE fließt. Weiterhin sind Abtrennvorrichtungen vorgesehen, welche eine Temperaturüberwachung für die Varistoren bilden und zweckmäßig zum Beispiel durch ein Temperaturlot gebildet sind.

Schmilzt das Temperaturlot aufgrund einer entsprechenden Überlastung der Varistoren, wird der überlastete Varistor vom Netz getrennt. Spricht aufgrund einer Überlastung eine der Abtrennvorrichtungen an, wird der überlastete Varistor vom Netz getrennt und die Betriebsanzeige in Form einer LED für den jeweiligen Varistor erlischt. Die Entkopplung zwischen dem Grobschutz und dem Feinschutz ist als Filter ausgebildet, der als Gleichtaktfilter, Gegentaktfilter bzw. Tiefpassfilter gestaltet sein kann. Ein derartiger Filter besteht aus einer in jeder Leitung angeordneten Reihenschaltung aus einer Induktivität und einem ohmschen Widerstand, sowie aus einem zwischen den Leitungen der Phase angeschlossenen Kondensator. Die Induktivitäten sind zweckmäßig als Längsspulen ausgebildet, insbesondere als Spule mit einem Eisenkern. Zwischen den Anschlüssen L1 und N des Ausgangs zur angeschlossenen Elektronik ist innerhalb des gemeinsamen Gehäuses ein Varistor angeordnet, der als Feinschutz eventuell auftretende differentielle Spannungen egalisiert.

Weiterhin ist aus der DE 10 2005 063 443 A1 eine Kommunikationszentrale zur Aufnahme, Verarbeitung und Abgabe von analogen und oder digitalen Signalen zur Ausbildung eines Kommunikationssystems bekannt. Um die vielfältigsten Kommunikations- und Datenerfassungsaufgaben zu erfüllen, Gerätebaugruppen standardisiert zu verbinden und auch Belange der verschiedensten Antennenarten bei den unterschiedlichen Anwendungsgebieten wie RFID, WLAN oder Platz- und Ausbreitungsbedingungen für Antennenarrays zu berücksichtigen und sinnvoll zu integrieren, sind am oder im Mast mehrere Module angeordnet, welche die funktionell unterschiedliche Kommunikationseinrichtungen enthalten. Dabei sind immer mehrere Module über eine Gleichstromversorgungseinheit an die Strom führende Leitung des Mastes angeschlossen und am Mast arretiert. Insbesondere sind die Module untereinander mit einem einheitlichen elektrischen Stecksystem so miteinander verbunden, dass die Stromversorgung für die Module gewährleistet wird und sind untereinander mit einem einheitlichen Bussystem für analoge Signale und/oder IP-basierende Daten schnurgebunden und/oder schnurlos verbunden. Außerdem ist die Kommunikationszentrale über mindestens eine Kommunikationseinrichtung an das Internet angeschlossen. Ein Blitzschutz der Kommunikationseinrichtungen kann dadurch erreicht werden, dass der Mast und die Kartuschen metallische Abschirmelemente enthalten und geerdet sind. Weiterhin sind auch die elektrischen Kontaktelemente, wie die der Module oder Kartuschen mit blitzschutzgerechten Kabeldurchführungen und Überspannungsschutzelementen ausgeführt. Der Überspannungs-Grobschutz für hohe Überspannungen in Sicherungen der in die Kommunikationszentrale eingeführten Stromversorgungsleitungen und der Überspannungs-Feinschutz der Module (für kleine Spannungsbereiche) erweitert die Funktion dieses Zonen-Blitzschutzkonzeptes. Die in den Modulen enthaltenen Kommunikationseinrichtungen können Funkantennen und/oder Verstärker und/oder Gleichrichter und/oder Baugruppen zur Energiegewinnung und/oder Datenverarbeitungsgeräte, wie internetprotokollverarbeitende Geräte sein. Die Datenverarbeitungsgeräte können beispielsweise Geräte zur Datenerfassung sein, beispielsweise zur Klimadatenerfassung, Biometriedatenerfassung oder Transpondertechnik. Die Datenverarbeitungsgeräte können auch Geräte zur Datenabgabe sein, beispielsweise Anzeige- und Signaltechnik, Lautsprechersysteme oder Katastrophenschutzsignaltechnik. Module für unterschiedliche Anwendungsgebiete sind beispielsweise das Modul Peripheriesteuerung, welches Anschlussfelder zum Bereitstellen von Anschlüssen von Aktoren, Sensoren hat und zum Optimieren oder Anpassen der Beleuchtungsverhältnisse in den Straßenbeleuchtungstrassen ausgelegt werden kann, d.h. eine Auslegung für Ampelschaltung über Nahbereichsfunk oder Infrarotschnittstelle wie von Handys, PDA's ist denkbar; das Modul Terminal hat visuellen und mechanischen sowie elektronischen Ein- und Ausgabefunktion (Tastatur, Touchscreen) und kann eine Schnellladestation für mobile Kommunikationsgeräte wie Handy, PDA, Armbanduhren über mechanisch-elektrischen Kontakt oder über elektromagnetischen Kontakt enthalten; das Modul Klimadatenerfassung hat Sensoren zur lokalen Erfassung und Weiterleitung der Klimadaten; das Modul Biometriedaten mit Funktionseinheiten für Generierung, Erfassung, Auswertung, Weiterleitung von Fingerabdruck, Gesicht, Iris, Displaydarstellung von Handys, PDA; das Modul Optimierung der Wegewahl und des Datenverkehrs, welches Trennfilter 53 zur Optimierung des Datenverkehrs bei Nutzung von PLC zu Hauptbaugruppen besitzt und die Daten der Powerline-Modems (PLC) zwischen den Kommunikationszentralen trennt; das Modul zur Authentifizierung von Nutzern, Abrechnung und zusätzlicher Verschlüsselung von Daten, um eine Passanten-Maut oder ein Ticketing zu realisieren, wozu die Software eines Moduls die von einem Handy gesendeten Authentifizierungsinformationen (RFID oder elektronische Signatur) auswertet und die Tarifinformationen an ein elektronisches Bezahlsystem übergibt; ein Modul zur Positionsbestimmung und Auswertung von GPS-Daten der Endgeräte; ein Modul Fernüberwachung, welches eine Videokamera einschließlich Fernsteuerung beinhaltet und für die Erkennung eines Einbruchversuchs in die Kommunikationszentrale zuständig ist; ein Modul Katastrophenschutztechnik und Durchsagetechnik, welches Verstärkertechnik zum Ansteuern von Sirenen oder Lautsprechern beinhaltet und die Einkopplung von Durchsagedaten zum Beispiel mittels Voice-over-Internetprotokoll (VOIP)-fähigen Kommunikationseinrichtungen erlaubt, wobei dem Modul zur Erreichbarkeit eine separate Internetadresse zugeordnet und für Einkopplung von Durchsagedaten vom mobilen Gerät, wie vom Handy aus, ist.

Weiterhin ist aus dem DE 296 02 914 U1 eine Schaltungsanordnung für elektronische Vorschaltgeräte mit einem aktiven Oberwellenfilter zum Betreiben von Gasentladungslampen, die den Einschaltstrom begrenzt und das elektronische Vorschaltgerät vor Überspannungen schützt, bekannt. Die wesentlichen Schaltungselemente der Schaltungsanordnung sind ein zur Einschaltstrombegrenzung und zum Überspannungsschutz dienender Feldeffekt-Transistor und ein Bipolar-Transistor zur Ansteuerung des Feldeffekt-Transistors. Der Feldeffekt-Transistor ermöglicht im leitenden Zustand über seine durchgeschaltete Source-Drain-Strecke ein Aufladen eines Elektrolyt-Kondensators des an die Ausgangsanschlüsse der Schaltungsanordnung angeschlossenen elektronischen Oberwellenfilters. Im gesperrten Zustand ist die Source-Drain-Strecke des Feldeffekt-Transistors unterbrochen und der Ausgangsanschluss von dem Eingangsanschluss getrennt, so dass der Eingangskondensator des Oberwellenfilters nicht mehr aufgeladen wird. Als weiteres Schaltungselement ist ein wärmeempfindlicher Widerstand zwischen Source- und Drainanschluss des Feldeffekt-Transistors geschaltet, der den Feldeffekt-Transistor vor kurzzeitigen Spannungsspitzen schützt. Für einen wirksamen Überspannungsschutz ist es nicht erforderlich, den Feldeffekt-Transistor in Bezug auf die maximal auftretende Eingangsspannung zu dimensionieren, da die Ausgangsspannung der Schaltungsanordnung stets um die Drain-Source-Durchbruchspannung gegenüber der Eingangsspannung reduziert ist. Um den irrtümlichen Fehlanschluss des Vorschaltgeräts zwischen zwei Phasen zu vermeiden, ist eine zusätzliche Überspannungsabschaltung in dem elektronischen Vorschaltgerät, z.B. in dem elektronischen Oberwellenfilter, vorgesehen, die den Betrieb des Wechselrichters des elektronischen Vorschaltgeräts unterbricht, wenn die Überspannungsschutzschaltung Schaltungsanordnung aktiviert ist, so dass hohe Verlustleistungen vermieden werden.

Weiterhin ist aus der DE 10 2009 031 967 B3 ein Adapter für Kompaktleuchtstofflampen oder Leuchtdiodenlampen mit integriertem Vorschaltgerät bekannt, welcher eine Schaltungsanordnung zur Unterdrückung von leitungsgebundenen oder feldgebundenen elektromagnetischen Störungen aufweist. Eine Seite des Adaptergehäuses 2 ist mit einem Gewindesockel ausgestattet an der gegenüberliegenden Seite des Adaptergehäuses ist eine Gewindefassung mit handelsüblichen Gewinden (beispielsweise E27 oder E14 Gewinden) vorgesehen. Zur Unterdrückung von leitungsgebundenen und/oder feldgebundenen elektromagnetischen Störungen weist die Schaltungsanordnung des Adapters zwei Kondensatoren zwischen den Versorgungsleitungen der Schaltungs-anordnung auf. Zwischen den Kondensatoren sind Drosseln in den beiden Versorgungsleitungen angeordnet, wobei diese Drosseln einzeln in den Leitungen vorgesehen sein können oder die Drosseln einen gemeinsamen Kern aufweisen können. Um beispielsweise hochwertige Lampen gegen eine netzseitige Überspannung zu schützen, ist ein spannungsabhängiger Widerstand parallel zu den Kondensatoren zwischen den Leitungen geschaltet. Hierbei handelt es sich vorzugsweise um einen sogenannten Varistor bzw. VDR (Voltage Dependent Resistor), dessen Widerstand oberhalb einer bestimmten Schwellspannung abrupt kleiner wird, sodass netzseitig der Stromfluss kurzgeschlossen und die in die Fassung eingeschraubte Lampe vor einer Überspannung geschützt wird. Weiterhin weist die Schaltungsanordnung des Adapters zur Sicherung gegen Überstrom und/oder Übertemperaturen in Reihe zu der Drossel in der Leitung netzseitig eine Sicherung, beispielsweise eine Schmelzsicherung oder Feinsicherung, auf.

Weiterhin ist aus der DE 10 2013 102 312 B3 eine Betriebsschaltung zum Betreiben eines Leuchtmoduls an einer separaten, externen Strom- oder Spannungsquelle bekannt. Die Betriebsschaltung hat einen Lastzweig mit einem Leuchtmodul und eine in Reihe zum Leuchtmodul geschaltete Strombegrenzungsschaltung. Parallel zum Lastzweig ist eine Schutzschaltung mit einem spannungsgesteuerten Schalter, beispielsweise einem IGBT, welcher große Ströme aufnehmen kann und thermisch stark belastbar ist, geschaltet. Eine an der Strombegrenzungsschaltung anliegende Steuerspannung dient als Steuersignal für den Steuereingang des spannungsgesteuerten Schalters. Die Strombegrenzungsschaltung begrenzt den Laststrom durch das Leuchtmodul. Steigt die Eingangsspannung an der Betriebsschaltung an, so nimmt auch die Steuerspannung an der Strombegrenzungsschaltung zu. Die Modulspannung am Leuchtmodul bleibt im Wesentlichen konstant. Erreicht oder überschreitet die Steuerspannung einen Schwellenwert, wird der gesteuerte Schalter leitend. Die in einem energiespeicherndem Bauteil der Strom- oder Spannungsquelle, an die die Betriebsschaltung angeschlossen ist, gespeicherte überschüssige elektrische Energie kann dadurch sehr schnell über den spannungsgesteuerten Schalter abgebaut werden, da anders als über den Lastzweig durch die Schutzschaltung ein großer Strom fließen kann, welcher nicht durch die Strombegrenzungsschaltung begrenzt wird.

Weiterhin ist aus der DE 20 2004 020 723 U1 eine Vorrichtung zum Schutz vor Überspannungen und zum automatischen Schalten eines elektrischen Geräts bekannt, welche zwischen einer Netzsteckdose und dem Gerät angeordnet ist, bekannt. Dabei ist eine Blitzschutzvorrichtung vorgesehen, welche einerseits mit der Netzsteckdose andererseits mit einem Spannungswandler, bestehend aus einem Transformator und einer an der Sekundärwicklung des Transformators angeschlossenen Gleichrichterschaltung, verbunden ist. Weiterhin besteht die Blitzschutzvorrichtung aus einem Gasentladungssensor, zwei Varistoren und zwei Schmelzsicherungen, wobei am Mittelabgriff der zwischen Phasenleiter und Rückstromleiter des Betriebsstromkreises liegenden Schmelzsicherungen der Gasentladungssensor angeschlossen ist, welcher andererseits am PE-Leiter (Protective Earth = Schutzleiter) anliegt. Ferner ist eine an den Spannungswandler angeschlossene Steuereinrichtung vorgesehen, welche mit mindestens einem Eingabemittel zur Programm-und/oder Zeitsteuerung und mit mindestens einem Anzeigemittel zur Betriebszustandsanzeige verbunden ist und mit der Steuereinrichtung ist eine Schalteinrichtung verbundenen, welche als bistabiles Relais ausgestaltet ist. Die Steuereinrichtung steht mit mindestens einem Sensor, insbesondere Bewegungsmelder, und der Blitzschutzvorrichtung in Verbindung und nimmt nach Maßgabe dieser das programm-/zeitgesteuerte Ein- oder Abschalten des Gerätes vom Stromversorgungsnetz vor. Ferner kann die Blitzschutzvorrichtung eine für das Ansprechen von Gasentladungssensor, Varistoren und Schmelzsicherungen gemeinsame LED-Anzeige aufweisen. Zur Datenübertragung und/oder Kommunikation über das Stromversorgungsnetz oder über ein Bussystem oder über eine Amtsleitung eines Fernmelde-oder Datennetzes ist eine Schnittstellenschaltung mit einem Kommunikationsbaustein an den Spannungswandler angeschlossen, welcher mit der Steuereinrichtung in Verbindung steht. Die Steuereinrichtung ist von einer Fernbedienung aus fernsteuerbar, wofür die Vorrichtung einen Empfänger, insbesondere einen Infrarot-Empfänger, aufweist.

Weiterhin wurden in den letzten Jahren zunehmend Überlegungen zu Intelligenten Netzen angestellt, insbesondere um den Strombedarf zu senken, wobei das intelligente Stromnetz durch die Unterstützung des Demand Side Managements (DMS) den Vorteil bieten soll, dass auf der Verbraucherseite Prognosen des Verbrauchs und Einsparmöglichkeiten zu identifizieren ermöglicht werden sollen. Mit diesen Informationen können Nutzer ihren Verbrauch an der aktuellen Erzeugungssituation ausrichten, indem sie sich an dynamischen Tarifen orientieren. Beispielsweise ist aus dem EP 1 850 500 B1 der Anmelderin ein Datenerfassungs- und Steuerungssystem mit Datenübertragung über Funkstrecken und elektrischen Energieverteilnetze und Verfahren hierzu bekannt. Um das Datenerfassungs- und Steuerungssystem im Heimbereich derart auszugestalten, welches sowohl ein kombiniertes Erfassen von Verbrauchsdaten als auch das Durchführen von Steuerungen ermöglicht, weist dieses:

- mindestens ein mit einer Antenne verbundenes Funkmodul zur Anbindung mindestens eines mit einem Funksender und/oder Funkempfänger ausgestatteten Remotemoduls eines Gerätes oder eines Verbrauchszählers über Kurzstreckenfunk,
- eine mit dem Funkmodul in Verbindung stehende Steuereinrichtung mit einem Programm- und Datenspeicher zur Zwischenspeicherung der vom Funkmodul zugeführten Daten,
- ein mit der Steuereinrichtung verbundenes Kommunikationsmodul und ein damit verbundenes erstes Ankoppelmodul zur Übertragung der zugeführten Daten über Stromversorgungsleitungen, und
- ein mit den Stromversorgungsleitungen über ein Kommunikationsmodul und ein damit verbundenes zweites Ankoppelmodul in Verbindung stehendes Kommunikationsgateway, welches am Ort eines Summen-Stromzählers angeordnet ist, auf,
- so dass das Kommunikations-Gateway zusammen mit den Stromversorgungsleitungen im Haushalt ein Backbone-Netz für die Datenübertragung ausgestaltet und der Austausch von Daten zwischen einer Mehrzahl von Remotemodulen oder Verbrauchszählern, die nicht in Funkreichweite des Kommunikations-Gateways stehen mit dem Kommunikations-Gateway im kombinierten Funk-/Powerline-Betrieb stattfindet, und so dass das Kommunikationssystem unabhängig von anderen technischen Gegebenheiten universell einsetzbar ist und die Möglichkeit zur nachträglichen Erweiterung bietet.

Das Verfahren gemäß dem EP 1 850 500 B1 der Anmelderin mit Funkdatenübertragung zwischen einem Funkmodul und mindestens einem weiteren mit einem Funksender und/oder Funkempfänger ausgestatteten Remotemodul eines Gerätes oder einem Verbrauchszähler, wobei das Funkmodul eine Steuereinrichtung, ein mit der Steuereinrichtung verbundenes Kommunikationsmodul und ein erstes Ankoppelmodul aufweist, und mit Stromversorgungsleitungen vom einem zweiten Ankoppelmodul zu einem Kommunikations-Gateway, welches am Ort eines Summen-Stromzählers angeordnet ist, ist dadurch gekennzeichnet, dass:

- zur Anbindung des Remotemoduls oder Verbrauchszählers über Kurzstreckenfunk das Funkmodul dient,

- das Kommunikations-Gateway eine Knotenfunktion übernimmt und Daten von und zu einer zentralen Mess- oder Übergabestelle überträgt,
- das Kommunikations-Gateway zusammen mit den Stromversorgungsleitungen im Haushalt ein Backbone-Netz für die Datenübertragung ausgestaltet,
- der Austausch von Daten zwischen einer Mehrzahl von Remotemodulen oder Verbrauchszählern, die nicht in Funkreichweite des Kommunikations-Gateways stehen mit dem Kommunikations-Gateway im kombinierten Funk-/Powerline-Betrieb stattfindet, und so dass das Kommunikationssystem unabhängig von anderen technischen Gegebenheiten universell einsetzbar ist und die Möglichkeit zur nachträglichen Erweiterung bietet und
- das Kommunikations-Gateway eine Schnittstelle für weitere Mehrwertdienstleistungen im Bereich Multi Utility, Sicherheitstechnik, Haus- und Gebäudemanagement sowie Automatisierungstechnik bis hin zu Dienstleistungen im Bereich Home Automation einschließlich der Energiesteuerung bildet.

Das Verfahren gemäß dem EP 1 850 500 B1 der Anmelderin weist den Vorteil auf, dass dieses sowohl eine zentrale Datenerfassung und Fernauslesung, d. h. Harmonisierung der Dienste aller Verbrauchsmengen zu wirtschaftlichen Konditionen, als auch eine Energiesteuerung auf der Basis von gemessenen Werten/Historie ermöglicht. Das Datenerfassungs- und Steuerungssystem gemäß dem EP 1 850 500 B1 der Anmelderin basiert auf Powerline - Datenübertragung (bestehende Infrastruktur), so dass Zählerstände über das Stromnetz im Wohngebäude an das zentral installierte Kommunikations-Gateway zeitnah weitergeleitet und von da aus ohne personellen Aufwand abgefragt werden. Neben der Erfassung des elektrischen Verbrauchs übernimmt das erfindungsgemäße Verbrauchsdatenerfassungs- und Energiesteuerungssystem die Bündelung der Kommunikation von verschiedenen Messeinrichtungen, d.h. Zählwerte von Heizkostenverteilern, Wasserzählern, etc. über eine integrierte Funklösung. Das Auslesen und das Einwirken der dargestellten Schritte erfolgt vom jeweiligen Gateway über WAN-Verbindungen (GSM, GPRS, ISDN, etc.). Eine Erweiterung des Systems auf unterschiedliche Breitband- bzw. Telekommunikationsdienste ist ohne Änderung des erfindungsgemäßen Verfahrens möglich. Über ein CPE (Customer Premises Equipment, ein flexibles IP integriertes Service-Gateway für Breitband und embedded Applikationen) können schrittweise weitere hausinternen (Computer, Telefone, Drucker, Video- und TV-Anlagen) und externe Vernetzungen (VoiceOverIP, Internet) aufgebaut werden.

Drahtlose Netzwerke, wie WLAN (Wireless Local Area Network) oder WPAN (Wireless Personal Area Network) sind seit langem bekannt. Für die Datenübertragung zwischen Geräten über kurze Distanz per Funktechnik wird zunehmend als Schnittstelle/Funkverfahren Bluetooth benutzt, über die sowohl mobile Kleingeräte wie Mobiltelefone und PDAs als auch Computer und Peripheriegeräte miteinander kommunizieren können. Hauptzweck von Bluetooth ist das Ersetzen von Kabelverbindungen zwischen Geräten. Geräte nach den Standards der Bluetooth SIG (Special Interest Group) senden als Short Range Devices (SRD) in einem lizenzfreien ISM-Band (Industrial, Scientific and Medical Band) zwischen 2,402 GHz und 2,480 GHz und können weltweit zulassungsfrei betrieben werden. Um Robustheit gegenüber Störungen zu erreichen, wird ein Frequenzsprungverfahren (frequency hopping spread spectrum FHSS) genutzt, bei dem das Frequenzband in 79 Kanäle mit einem Kanalabstand von 1-MHz-Abstand eingeteilt und die zu übertragende Information nacheinander auf viele Kanäle verteilt wird, d.h. zu einem Zeitpunkt wird immer nur ein Frequenzkanal genutzt. Das adaptive Frequenzsprungverfahren (AFH), das z. B. seit Bluetooth 1.2 zum Einsatz kommt, bietet einen besseren Schutz gegen Störungen, indem bereits genutzte oder gestörte Frequenzkanäle in der Sprungsequenz (vorübergehend) vermieden werden. Am unteren und oberen Ende gibt es jeweils ein Frequenzband als Sicherheitsband (guard band) zu benachbarten Frequenzbereichen. Theoretisch kann eine Datenübertragungsrate von 706,25 kbit/s beim Empfang bei gleichzeitigen 57,6 kbit/s beim Senden erreicht werden (asymmetrische Datenübertragung). Die tatsächlich erzielbare Reichweite, welche bei einer Leistung von 2,5 mW (Klasse 2) im Gebäude bei ca. 10m und im Freien bei ca. 50m liegt, hängt neben der Sendeleistung von einer Vielzahl Parameter ab. Hierzu zählen beispielsweise die Empfindlichkeit eines Empfängers und die Bauformen der auf Funkkommunikationsstrecken eingesetzten Sende- und Empfangsantennen. Bluetooth-Datenpakete bestehen aus einem 72-Bit-Zugriffscode, einem 54-Bit-Header sowie einem variablen Nutzdatenfeld von 0 Bit bis 2745 Bit (Pakettyp DH5) Länge. Für Bluetooth 2.0 + EDR sind bis zu 8168 Bit Nutzdaten pro Paket (3-DH5) möglich. Mit dem Protokoll Bluetooth V4.0 Low Energy ist ein verbindungsloser Betrieb in Sende- und Empfangsrichtung möglich. Der Standard 4.0 ist nicht abwärtskompatibel mit allen Vorgänger-Versionen. Für Verbindungen mit den bisherigen Protokollen kommt eine verbesserte Fehlerkorrektur zum Einsatz, für das erforderliche Maß an Sicherheit soll eine AES-Verschlüsselung mit 128 Bit verwendet werden. Im Dezember 2014 wurde der Bluetooth 4.2 Standard vorgestellt. Hauptaugenmerk bei der Entwicklung waren erweiterte Sicherheitsmerkmale, eine höhere Übertragungsgeschwindigkeit und ein noch sparsamerer Bluetooth Low Energy modus. Eine Verbindung kann von einem beliebigen Gerät ausgehen, das sich dadurch zum "Master" über die antwortenden "Slaves" erhebt, wobei der Empfänger synchron mit dem Sender dieselben Kanäle anspringen muss.

ZigBee ist eine Spezifikation für drahtlose Netzwerke mit geringem Datenaufkommen, wie z. B. Hausautomation, Sensornetzwerke, Lichttechnik. ZigBee baut auf dem IEEE 802.15.4 Standard auf und erweitert dessen Funktionalität, insbesondere um die Möglichkeit des Routings und des sicheren Schlüsselaustausches, wobei der Schwerpunkt von ZigBee in kurzreichweitigen Netzwerken (10 bis 100 Meter) liegt. Die ZigBee Spezifikation erweitert den IEEE 802.15.4-Standard um eine Netzwerk- und Anwendungsschicht. ZigBee-RF4C (radio frequency for consumer electronics) ist eine weitere auf dem IEEE 802.15.4-Standard aufbauende Spezifikation, welche einfache und kostengünstige drahtlose Netzwerke zur Steuerung von Geräten z. B. Homeentertainment und Lichtsteuerung spezifiziert. Um insbesondere die Interoperabilität von Produkten verschiedener Hersteller zu gewährleisten, werden in sogenannten ZigBee Profile/Cluster für einen bestimmten Anwendungsfall Systemvoraussetzungen und Geräte definiert. Beispielsweise wird im Profil ZigBee Light Link, welches zur Steuerung von Lichttechnik aller Art dient, die Steuerung von Farbanteilen, Helligkeit und Ein- und Ausschalten von Lampen spezifiziert. Die Kommunikation im Cluster erfolgt nach dem Client/Serverprinzip und immer verschlüsselt durch einen Netzwerkschlüssel. Dieser wird an ein dem Netzwerk beitretendes Funkmodul durch den sogenannten Masterkey verschlüsselt mitgeteilt. Als Blockverschlüsselungsalgorithmus wird AES-128 eingesetzt. Das Profil ZigBee Home Automation dient der allgemeinen Steuerung von Geräten in kleineren Gebäuden und kann auch zur Steuerung von Lichttechnik benutzt werden. Die Übertragung erfolgt ebenfalls durch einen Netzwerkschlüssel verschlüsselt. Auch hier wird der Netzwerkschlüssel beim Eintritt eines Endgeräts (ZigBee End Device, ZED) in das Netzwerk durch einen Masterkey verschlüsselt mitgeteilt. Hierzu meldet sich das Endgerät, beispielsweise ein Funkmodul (welches eine eindeutige 64-Bit IEEE-Adresse besitzt) an einem Router seiner Wahl an, welcher eine 16-Bit-Kurzadresse vergibt. Das Routing im Netzwerk erfolgt entweder entlang eines sich so bildenden Baumes (Stackprofil ZigBee) oder durch dynamisches Routing als Meshnetzwerk (Stackprofil ZigBee PRO).

Weiterhin sind PLC (PowerLine Communication) - Systeme als Nachrichtenübertragungssysteme (Trägerfrequenzanlage), welche die Information über das Medium Energiekabel verteilen, seit langem bekannt. Insbesondere ist hierbei die Übertragungsstrecke zwischen Trafostation im Niederspannungsnetz und Kundenanlage im Haus von Bedeutung. Die Topologie dieses Netzabschnittes besitzt meist eine Punkt-zu-Multipunkt-Struktur mit der Trafostation als Knotenpunkt. An diesem Knotenpunkt kann beispielsweise eine Sende-Empfangseinheit angeordnet werden, die hochfrequente Signale bis 30 MHz separat in die abgehenden Kabel einspeist und dem 50Hz Energiestrom überlagert. Weitere Sende-Empfangseinheiten können sich bei der Kundenanlage an der Schnittstelle zwischen Niederspannungsverteilnetz der Energieversorger und Hausinstallationsnetz der Kundenanlage befinden. Hier werden ebenfalls hochfrequente Signale in das Energiekabel eingespeist und empfangen. Die Einrichtung eines Powerline-Netzwerks als Heimnetzwerk ist vom Benutzer einfach und schnell durchzuführen. Hierfür sind Powerline-Adapter (Zwischenstecker) vorgesehen, welche vom Benutzer in die jeweils vorhandene Steckdose der Hausinstallation gesteckt werden. Mit Hilfe des bereits bei anderen Übertragungsverfahren (z.B. xDSL oder WLAN) eingesetzten Orthogonal frequency-division multiplexing (OFDM) wird dazu auf der Sendeseite jeweils eine Vielzahl an Signalen gleichzeitig auf eine Trägerfrequenz phasen- und amplitudenmoduliert (Frequenzmultiplexverfahren). Das je nach Übertragungsstandard zur Verfügung stehende Frequenzspektrum wird dabei in Kanäle aufgeteilt, um die Störanfälligkeit zu verringern bzw. entsprechende Gegenmaßnahmen (Fehlerkorrektur- und Interleavingverfahren) zu ermöglichen. Die aufmodulierten Daten werden dann über die Stromleitung zum Empfänger gesendet und dort per Bandpass wieder von den Trägerfrequenzen getrennt (demoduliert). Die meisten PowerLAN-Standards arbeiten im Hochfrequenzbereich zwischen 2 MHz und 68 MHz. Powerline-Netzwerke im privaten Bereich weisen üblicherweise eine Peer-to-Peer-Netzwerktopologie auf, d.h., jeder Adapter kommuniziert gleichberechtigt mit jedem anderen, ohne besondere Hierarchisierung. Eine Attacke des Powerline-Netzwerks ist nur über den direkten Zugang zum Stromnetz, also über eine Steckdose im Haus oder der Wohnung möglich, wobei zusätzlich ein Eindringling dann auch noch die Verschlüsselung (AES 128 Bit) analysieren und entschlüsseln muss. Die Reichweite ist, neben der Sendeleistung des Adapters, maßgeblich von der Qualität der Stromleitungen im Haus oder der Wohnung abhängig. Dazu kommen noch Geräte, beziehungsweise "Störquellen", innerhalb des Stromnetzes, wie beispielsweise Kühlschränke oder andere Elektrogeräte, die über einen Elektromotor verfügen, der für Störsignale im Stromnetz sorgt. Die Reichweite wird auch durch den Stromzähler begrenzt. Die Dämpfung des Signals ist so groß, dass eine Übertragung darüber hinaus oft nicht möglich ist oder nur sehr schwach erfolgt. Die Datenrate liegt bei derzeit im Handel befindlichen Powerline-Adaptern bei ca. 1.000 MBit/s. Für die Versorgung von Tablets (d.h. ein tragbarer, flacher Computer in besonders leichter Ausführung mit einem Touchscreen (Bildschirmtastatur)) oder Smartphones (ein Mobiltelefon (umgangssprachlich Handy), mit berührungsempfindlichen Bildschirm, auf dem sowohl Standard-Webseiten als auch mobil optimierte Webseiten dargestellt werden können, mit umfangreichen Computer-Funktionalitäten einschließlich Digital- und Videokamera und GPS-Navigationsgeräts und Verbindung mit Internet, wahlweise mittels einer mobilen Breitbandverbindung über den Mobilfunkanbieter oder per WLAN und einem Internet-Downloadportal (einen "App Store") für das Herunterladen von Zusatzprogrammen ("Apps")) können auch Powerline-Adapter mit integriertem WLAN-Access-Point eingesetzt werden. Dabei erfolgt die Nachrichtenübertragung per Funk zum Powerline-Adapter dann per Stromleitung zum Modem (in der Regel DSL-Modem) und von diesem ins Internet.

Eine weitere Heimnetzwerktechnologie ist G.hn (HomeGrid-Standard), bei der die digitale Vernetzung über Strom-, Telefon- und Kabelfernsehkabel mit Datenübertragungsraten von bis zu 1Gbit/s erfolgt. G.9955 ist ein ergänzender Standard, der eine vereinfachte, schmalbandigere Variante für Intelligente Stromnetze (d.h. die kommunikative Vernetzung und Steuerung von Stromerzeugern, Speichern, elektrischen Verbrauchern und Netzbetriebsmitteln in Energieübertragungs- und -verteilungsnetzen der Elektrizitätsversorgung) und Heimautomation-Anwendungen spezifiziert.

G.hn ist ein Trägerfrequenzverfahren, das mit einer (Brutto-)Signalrate von insgesamt einem Gigabit pro Sekunde arbeitet. Es werden mehrere Teildatenströme mittels des Orthogonalen Frequenzmultiplexverfahrens (OFDM) auf mehrere Träger aufmoduliert über das Medium geschickt. Die Unterträger werden jeweils mit Quadraturamplitudenmodulation (QAM) bis zu 4096-QAM (12-Bit-QAM) moduliert.

Netzwerke, die auf völlig unterschiedlichen Netzwerkprotokollen basieren, können über einen Netzübergang (Gateway) miteinander verbunden werden. Der gesamte Netzübergang, beispielsweise in der Telekommunikation (digitale Sprach-, Audio- oder Bildinformationen), welcher das Zusammenschalten der unterschiedlichen Netzwerktypen ermöglicht, setzt sich für die digitale Transkodierung der unterschiedlichen Medien (z.B. Sprache) aus dem Media Gateway, dem Media Gateway Controller und dem Signaling Gateway zusammen.

Beispielsweise ist aus der US 2014/300293-A1 eine LED-Beleuchtungsvorrichtung und eine LED-Beleuchtungsnetzwerksystem mit zwei oder mehr LED-Beleuchtungsvorrichtungen bekannt. Um Netzwerkprobleme bei drahtlosen Beleuchtungsnetzen, verursacht durch Hindernisse im Erfassungsbereich und durch begrenzte Übertragungsreichweite, zu überwinden, umfasst die LED-Beleuchtungsvorrichtung eine LED-Beleuchtungseinheit, eine LED-Treiberschaltung, eine Steuereinheit (Controller) und ein Wi-Fi-Modul (Wireless Fidelity, durch die WiFi-Alliance anhand der IEEE-Standards für WLAN zertifizierte Geräte), welches zum Senden und Empfangen von Wi-Fi-Signalen konfiguriert ist. Das Wi-Fi-Modul kann im Innern der LED-Beleuchtungsvorrichtung auf der gleichen Leiterplatte, welche die LED-Treiberschaltung enthält, integrieren werden. Weiterhin weist das Wi-Fi-Modul für Signale im Frequenzbereich von 2,4 GHz oder 5 GHz eine externe Antenne oder eine intern integrierte Antenne auf, welche mit dem Wi-Fi-Modul integriert sein kann und auf der gleichen Leiterplatte angeordnet sein kann. Der Controller steht in Verbindung mit dem Wi-Fi-Modul und der Treiberschaltung, welche wiederum mit der LED-Beleuchtungseinheit verbunden ist und kann die LED-Lichtbetriebszustände, wie beispielsweise, ob die LED-Beleuchtungsvorrichtung ein- oder ausgeschaltet ist, überwachen oder Lichtintensitätsmessungen durchführen. Jede LED-Beleuchtungsvorrichtung kann als Gateway, Netzwerkzugriffspunkt (network access point) oder Repeater fungieren. Die LED-Beleuchtungsvorrichtungen können ein Netzwerk oder ein Ad-hoc-Netzwerk bilden, das an ein lokales Netzwerk oder das Internet angeschlossen ist. Dadurch kann der Benutzer die LED-Beleuchtungsvorrichtungen aus der Ferne überwachen und steuern. Als Remote-Terminal (Gegenstelle), welches den Status jeder LED-Beleuchtungsvorrichtung des LED-Beleuchtungsnetzwerksystems überwacht und kontrolliert, kann vom Benutzer ein Computer, ein Tablet oder ein Smartphone benutzt werden. So kann beispielsweise ein Smartphones (mit der richtigen Programm/dem richtigen App) zur Fernsteuerung Schalten der LED-Beleuchtungseinrichtungen ein / aus, oder Einstellen der Lichtintensität, Lichtfarbe, etc. benutzt werden. Dies ermöglicht es Benutzern beispielsweise die Beleuchtung von großen Gebäuden - wie Bürogebäuden oder Einkaufszentren - zu steuern. Weiterhin können in einigen Ausführungsformen verschiedene Sensoren an einer LED-Beleuchtungsvorrichtung angebracht werden, um andere Parameter zu messen. Beispielsweise können - um die Lichtintensität zu messen - Sensoren auf der LED-Beleuchtungsvorrichtung angeordnet werden, oder Feuchte- oder Temperatursensoren können in der LED-Beleuchtungsvorrichtung angeordnet werden, um Feuchtigkeit und Temperatur zu messen. Die Messdaten von verschiedenen Sensoren können durch die Wi-Fi-Signale übertragen werden und an einem Steueranschluss, welcher mit der LED-Beleuchtungsvorrichtung verbunden ist, abgerufen werden. Der Controller kann auf der Basis der Messwerte von den Sensoren die LED-Beleuchtungsvorrichtungen steuern (z.B. Lichtintensität zu verringern, wenn die gemessene Betriebstemperatur zu hoch ist). Weiterhin können die Benutzer im Internet oder Netzwerk surfen und Daten mittels eines solchen Wireless Access Point herunterladen. In einigen Ausführungsformen kann eine LED-Beleuchtungsvorrichtung mit einer Anzeigeeinheit verwendet werden, um verschiedene Parameter, wie LED-Netzwerk-Konnektivität, Energieverbrauch, Lebensdauer, Lichtintensität usw. anzuzeigen. Zum Beispiel kann die Anzeigeeinheit für das LED-Beleuchtungsnetzwerk mittels Markierungen anzeigen, ob jede LED-Beleuchtungseinrichtung aktiv mit dem Wi-Fi-Netzwerk verbunden ist. Das Bedienterminal kann auch verwendet werden, um Informationen vom Controller anzuzeigen, wie beispielsweise eine Alarmmeldung, einen Alarm, eine Anzeige usw.

Ein ähnliches Fernsteuersystem für intelligente Terminals, insbesondere eine intelligente Lampe mit Netzteil, Funk-Mikrocontroller, LED-Treiberchip und LEDs, ist aus der CN 204291046-U bekannt. Zur Fern-Steuerung der intelligenten Lampen können diese über ein Bluetooth Gateway oder Zigbee-Gateway oder einem im Gateway angeordneten Ethernet-Controller-Chip und einem Cloud-Server mit intelligenten Endgeräten, wie PDA, Smartphone oder Tablet, in Verbindung stehen. Zur Fernüberwachung und flexiblen Anpassung, insbesondere zur Erzielung eines geringen Stromverbrauchs, werden die mit Hilfe der intelligenten Lampen gelieferten relevanten Daten gesammelt, zum Cloud-Server übertragen und schließlich über das Internet zum PDA, Smartphone oder Tablet übertragen.

Weiterhin ist aus der US 7,079,808 B2 ein zwischen einer Lampenfassung und einer Glühbirne zum Beispiel einer Deckenleuchte angeordnetes Adapterteil mit WLAN-Repeater und Steuereinheit bekannt. Das Adapterteil weist auf der einen Seite einen sich in Längsrichtung erstreckenden Gewindeteil auf, welches an der Außenseite das Schraubgewinde für die Lampenfassung und auf der gegenüberliegenden Seite einen an der Innenseite angeordneten Gewindeabschnitt für eine Glühbirne aufweist. Auf diese Weise kann ein WLAN-Repeater sehr schnell und ohne Werkzeug an jedem Ort, wie ein Leuchtmittel/eine Glühbirne installiert werden. Wenn der Lichtschalter, welcher normalerweise die Glühbirne kontrollieren würde eingeschaltet ist, wird die Stromversorgung des WLAN-Repeaters und der Steuereinheit eingeschaltet. Wenn der WLAN-Repeater und die Steuereinheit ein Funksignal, insbesondere gemäß der Bluetooth-Wireless-Spezifikation empfangen, sendet dieser das empfangene Funksignal mit einer vorbestimmten Amplitude aus. Zum Ein- und Ausschalten werden die vom WLAN-Repeater und Steuereinheit empfangenen Funksteuersignale ausgewertet. Dadurch kann der WLAN-Repeater und Steuereinheit sowohl zur Funkbereichserweiterung als auch zur Funkfernsteuerung des Lichts benutzt werden.

Weiterhin ist aus der DE 10 2011 007 416 A1 eine Leuchte mit einem Adapter bzw. einem solchen Adapter zur Steuerung der Leuchte, insbesondere zur Steuerung der Beleuchtung, beispielsweise dimmbare Leuchtstoff-Leuchten, von großen Gebäuden im gewerblichen Bereich bekannt, wobei im Adapter ein Funk-Netzwerkmodul, insbesondere ein WLAN- oder WPAN-Modul zur drahtlosen Kommunikation über eine integrierte oder extern angeschlossene Funkantenne eingebettet ist. Zur Leuchtensteuerung umfasst der Adapter eine im Adapter eingebettete Recheneinheit, beispielsweise ein hierzu programmierter Mikroprozessor. Zur Bereitstellung einer Schnittstelle zu DALI-kompatiblen Betriebsgeräten ist die Recheneinheit insbesondere gemäß DALI (Digital Addressable Lighting Interface) programmiert. Ferner umfasst der Adapter einen integrierten Server zur Bereitstellung einer Benutzerschnittstelle über Funk. Die elektrische Steuerung erfolgt über den DALI-Bus anhand eines elektrischen Anschlusses, der hierzu im Adapter vorgesehen ist. Recheneinheit und Server sind derart programmiert, dass die Leuchte anhand der Benutzerschnittstelle, beispielsweise durch ein WLAN- oder WPAN-fähiges Smartphone, über Funk fernbedienbar ist. Der Server ist hierbei als Softwarekomponente ausgestaltet und kann beispielsweise durch die Recheneinheit implementiert werden. Der Server kann auch durch ein - eventuell von der Recheneinheit physikalisch getrenntes - Funk-Netzwerkmodul realisiert sein. Die in der DE 10 2011 007 416 A1 beschriebene Lösung ist also im Wesentlichen ein "Funknetzwerk-zu-Leuchtenschnittstelle" Adapter, welcher eine direkte und einfache Ansteuerung beispielsweise über WLAN (Wireless Local Area Network) und DALI ermöglicht. Insbesondere bei Adaptern mit WLAN gemäß IEEE 802.11 oder WiFi (d.h. durch die WiFi-Alliance anhand der IEEE-Standards für WLAN zertifizierte Geräte) kann die Leuchte mit jedem gängigen WLAN-fähigen Gerät, z. B. einem sogenannten Smartphone (Mobiltelefon mit Zusatzfunktionen), bedient werden. Anstelle von WLAN sind auch andere verbreitete Standards möglich, beispielsweise WPAN (Wireless Personal Area Network), insbesondere gemäß IEEE 802.15 oder Bluetooth. Dabei umfasst der Adapter neben einer gängigen Funkschnittstelle eine DALI-Steuereinheit und hiermit verbunden einen Server, welcher über ein standardisiertes Protokoll bei WLAN, beispielsweise HTTP, oder aber über eine für den Adapter entwickelte Anwendung, beispielsweise eine APP (Applikation) für das gewünschte Smartphone, eine Benutzerschnittstelle zur Verfügung stellt. Die Benutzerschnittstelle ist unabhängig vom Endgerät und somit über jedes handelsübliche Gerät mit Internet-Browser bedienbar. Der Adapter ist auch zum Einbau unmittelbar in ein Leuchtengehäuse, beispielsweise einer Hängeleuchte oder einer Standleuchte, geeignet, wodurch auch bei geringer Leistung inhärent gute WLAN-Signalstärke gewährleistet werden kann. Durch den Adapter kann man Leuchten direkt und einfach beispielsweise mit einem Smartphone oder einem Netbook ansteuern. Ein wesentlicher Vorteil liegt demnach in der Ausnutzung der heutzutage allgegenwärtig vorhandenen tragbaren WLAN-fähigen Geräte zur Leuchtensteuerung, insbesondere Smartphones oder Netbooks. Hierdurch erübrigen sich spezielle bzw. zusätzliche Funk-Fernbedienungen. Außerdem können mehrere und unterschiedliche Benutzer die gewünschte Leuchte mit ihrem eigenen Gerät bedienen oder beispielsweise nach Wunsch konfigurieren. In einer bevorzugten Ausführungsform umfasst der Adapter ein Funknetzwerkmodul, das als WLAN-Modul, vorzugsweise als WLAN-Accesspoint gemäß IEEE 802.11 Standard ausgebildet ist. In dieser Ausführungsform ist der Server vorzugsweise zur Kommunikation mit einem Internet-Browser, insbesondere als HTTP-Webserver, ausgebildet. In einer anderen bevorzugten Ausführungsform ist das Funknetzwerkmodul als WPAN-Modul, vorzugsweise als sogenanntes Bluetooth- Modul, insbesondere als Bluetooth-Accesspoint gemäß IEEE 802.15 Standard ausgebildet. In dieser Ausführungsform ist der Server vorzugsweise zur Kommunikation mit einer adapterspezifisch programmierten Anwendung, insbesondere einer Smartphone-Anwendung (APP) ausgestattet. Trotz geringerer Reichweite im Vergleich zu WLAN-Modulen ist ein WPAN-Modul besonders geeignet für eine kostensparende Ausführung auch in Verbindung mit einer herstellerspezifischen und Smartphone-geeigneten Anwendung (APP). Neben den für den DALI-Bus geeigneten elektrischen Anschlüssen umfasst der erfindungsgemäße Adapter vorzugsweise eine Anschlussklemme mit Anschlüssen für weitere elektrische Geräte, insbesondere Taster und/oder Sensoren zur Steuerung der Leuchte, oder auch zur Spannungsversorgung des Adapters und seiner Module. Bei einer Ausführung des Adapters mit einem Sensoranschluss ist die Recheneinheit so programmiert, dass ein Stellwert zur Helligkeitsregelung der Leuchte berechnet wird. Die Berechnung kann ausgehend von Messwerten, d. h. durch einen externen Lichtsensor ermittelten Ist-Werten, und von über die Benutzerschnittstelle vorgebbaren Soll-Werten erfolgen. Die Recheneinheit gibt dann über die Automatisierungsschnittstelle den berechneten Stellwert als Steuerbefehl an die Leuchte aus. In einer weiteren bevorzugten Ausführungsform ist die Recheneinheit sowohl zur Leuchtensteuerung gemäß Datenschnittstelle als auch zur Bereitstellung des Servers programmiert, beispielsweise eines HTTP-Webservers oder eines HPP-Servers. Der Server kann hingegen auch im eigentlichen Funknetzwerkmodul integriert sein. Hierdurch können entsprechende, bereits handelsüblich erhältliche Komponenten verwendet werden. Ein besonderer Vorteil des Adapters liegt darin, dass er einfach in das Leuchtengehäuse einer Leuchte integriert werden kann. Hierzu hat der Adapter vorzugsweise ein Adaptergehäuse mit verhältnismäßig kleinen Abmessungen, so dass auch Funknetzwerkmodule mit geringer Reichweite ohne weiteres angesteuert werden können. Der Adapter kann in eine Innenraumleuchte, beispielsweise eine Hänge-, Deckeneinbau-, Deckenanbau-, Wandanbau-, oder Wandeinbauleuchte oder auch in eine Außenleuchte eingesetzt werden. Unabhängig vom Typ der Leuchte ist es mit dem Adapter möglich Leuchten direkt und einfach mit einem Smartphone oder einem Notebook oder ähnlichen Geräten anzusteuern. So können beispielsweise HTML- und/oder HPP-basierende Leuchtensteuerungen für tragbare Endgeräte auf kostengünstige Weise angeboten werden. Aufgrund der weiten Verbreitung von Smartphones, Netbooks oder Notebooks erübrigt sich die Verwendung von speziell hergestellten Funkfernbedienungen. Fernwartung per Internet, d.h. ein zentrales Steuern mehrerer Adapter ermöglicht eine Hostsoftware mittels direkter Adressierung der einzelnen Adapter bzw. deren DALI Adressen. Bei geeigneter Ausführung des Servers ist auch die Verwendung von IP-Sensorik und IP-Interfaces (z. B. Bedienstellen, Fernbedienungen, Webseiten, Software, ...) möglich.

Weiterhin ist aus der DE 10 2012 109 829 A1 ein Verfahren und eine Vorrichtung zum Steuern von Straßenlampen mit einem mobilen Endgerät und einem Gateway bekannt, bei dem eine Ereignisinformation, welche anzeigt, dass ein vorbestimmtes Ereignis bei der Straßenlampe aufgetreten ist, und eine Benachrichtigungsinformation, die angibt, dass die Ereignisinformation empfangen worden ist, bei einem Benutzer des mobilen Endgeräts in Echtzeit angezeigt wird. Das mobile Endgerät kann zum Beispiel eine elektronische Vorrichtung sein, die von einem Benutzer getragen wird, wie zum Beispiel ein Mobiltelefon, ein Smartphone, ein persönlicher digitaler Assistent (PDA), ein Netbook, ein Notebook, eine tragbare Vorrichtung oder dergleichen. Das Gateway kann eine Datenübertragung, insbesondere der empfangenen Daten zwischen dem mobilen Endgerät und der Mehrzahl von Straßenlampen weiterleiten. Hierzu weist das Gateway mehrere Sub-Gateways und ein Haupt-Gateway zum Verwalten der Sub-Gateways auf. In diesem Fall sind die Sub-Gateways jeweils mit mehreren Straßenlampen verbunden und das Gateway/ Haupt-Gateway steht mit dem mobilen Endgerät über ein drahtgebundenes/drahtloses Netzwerk, d.h. das Internet, ein lokales Netzwerk (LAN), ein drahtloses lokales Netzwerk (Wireless LAN), ein Großraumnetzwerk (WAN), ein persönliches Netzwerk (PAN) oder dergleichen unter Verwenden eines Kommunikationsmoduls, das in jedem der mobilen Endgeräte und dem Gateway angeordnet ist, in Verbindung. Der Benutzer des mobilen Endgeräts kann überprüfen, ob ein vorbestimmtes Ereignis in einer bestimmten Straßenlampe, zum Beispiel in der ersten Straßenlampe in Echtzeit unter Bezugnehmen auf die Benachrichtigungsinformation, die unter Verwenden der Benutzerschnittstelleneinheit in Echtzeit geliefert wird, auftritt. In diesem Fall kann der Benutzer Steuerinformation zum Steuern der ersten Straßenlampe an die erste Benutzerschnittstelle eingeben. Die Steueranweisung kann zum Beispiel eine Anweisung zum Durchführen mindestens eines Diagnosevorgangs von der ersten Straßenlampe, eines Vorgangs zum Einschalten/Ausschalten der ersten Straßenlampe, eines Vorgangs zum Abblenden der ersten Straßenlampe und eines Vorgangs zum Rückstellen der ersten Straßenlampe in einen vorbestimmten ursprünglichen Status sein. Die Benutzerschnittstelleneinheit kann zum Beispiel eine Karte anzeigen, auf der Information in Bezug auf die Position von mindestens einer Straßenlampe unter der Mehrzahl von Straßenlampen gemäß einer Eingabe durch den Benutzer dargestellt wird. In diesem Fall kann die Benutzerschnittstelleneinheit die Information in Bezug auf die Position von mindestens einer Straßenlampe unter der Mehrzahl von Straßenlampen auf einer Karte abbilden, die in das mobile Endgerät eingebettet ist, oder auf einer Karte abbilden, die über das Internet bereitgestellt wird. In diesem Fall kann die über das Internet bereitgestellte Karte eine Karte sein, die von einem Internet-Serviceprovider wie zum Beispiel Google, Naver, Yahoo, oder dergleichen bereitgestellt wird. Zusätzlich kann, wenn das mobile Endgerät einen GPS-Empfänger (Global-Positionierungs-System) aufweist, eine Statusinformation in Bezug auf Bereiche, die an das mobile Endgerät angrenzen oder in Bezug auf Straßenlampen, die angrenzend zu dem mobilen Endgerät positioniert sind, überprüft werden.

Weiterhin ist aus der DE 10 2006 037 803 A1 eine eingebaute Antenne für ein kabelloses/tragbares Kommunikationsendgerät, beispielsweise ein persönliches Kommunikationsdienst-Endgerät (PCS =Personal Communication Services), ein PDA (= Personal Digital Assistant), ein Smartphone, ein Kommunikationsendgerät der nächsten Generation (IMT-2000), ein kabelloses LAN-Endgerät (LAN = Local Area Network) bekannt. Um ein Antennenmodul vorzusehen, welches einen begrenzten Raum in einem Endgerätkörper nutzt, um Miniaturisierung zu erreichen und HF-Eigenschaften mit hoher Empfangsempfindlichkeit zu erhalten, weist ein im Kommunikationsendgerät eingebautes Antennenmodul wenigstens einen ersten Strahler für eine Basisstation und wenigstens einen zweiten Strahler für Bluetooth auf. Im Einzelnen ist ein Sockel mit dem ersten und zweiten Strahler vorgesehen, die auf einer Außenfläche desselben angebracht sind, wobei der Sockel so auf einer Platine angebracht ist, dass jedes Ende des ersten und zweiten Strahlers elektrisch mit der Platine des Endgerätkörpers verbunden ist. Weiterhin ist ein Bluetooth-Chipsatz vorgesehen, welcher an dem Sockel befestigt ist und elektrisch mit dem zweiten Strahler verbunden ist. Der erste Strahler (Sende-/Frequenzband ungefähr im 800 MHz-Bereich oder im 1800 MHz-Bereich) und zweite Strahler (Sende-/Empfangsfrequenzband im 2,4 GHz-Bereich) sind als Planarantenne ausgestaltet, insbesondere als Antennen-Leiterbahn auf, welche auf eine Außenfläche des Sockels gedruckt ist. Der erste Strahler weist an seinem einen Ende wenigstens einen Sende-/Empfangsanschluss auf, wobei der Sende-/ Empfangsanschluss ein unteres freies Ende aufweist, das mit einer Verbindungs-Kontaktstelle der Platine in Kontakt ist und elektrisch mit dieser verbunden ist. Der zweite Strahler weist an seinem einen Ende wenigstens einen Sende-/Empfangsanschluss mit einem unteren freien Ende auf, das mit einer Verbindungs-Kontaktstelle des Bluetooth-Chipsatzes in Kontakt ist und elektrisch mit dieser verbunden ist. Jedes der unteren freien Enden der Sende-/Empfangsanschlüsse ist gebogen, um federnden Kontakt mit der Verbindungs-Kontaktstelle zu halten. Der Bluetooth-Chipsatz enthält eine biegsame Platine mit Chip-Bestandteilen wie beispielsweise einer kabellosen Schaltung, einem Basisbandsignal-Prozessor, einem Hauptprozessor, einem SRAM und einer Flash-Vorrichtung, die auf einer Oberfläche desselben angebracht sind. Diese Chip-Bestandteile sind durch eine Schutzabdeckung abgedeckt, welche die Chip-Bestandteile vor Umwelteinflüssen oder schädlicher elektromagnetischer Strahlung schützen.

Weiterhin ist aus der US 2015/0279207 A1, das als nächstliegender Stand der Technik betrachtet wird, eine Vorrichtung zur Bereitstellung einer Kommunikationsschnittstelle für eine Festkörperleuchte bekannt, welche zum Beispiel als ein Dongle konfiguriert sein, um elektrisch mit Stromleitungen zwischen einem Treiber und einer Festkörperlichtquelle gekoppelt zu werden. Die Vorrichtung kann Leistung von den Stromleitungen beziehen, während sie auch den Strom, der zur Lichtquelle geht, einstellt und, falls gewünscht, überwacht. In einigen Ausführungsformen teilt die Vorrichtung Strom, der vom Treiber empfangen wird, in einen ersten Teil, der an den Treiber zurückgegeben wird oder innerhalb der Vorrichtung verbraucht wird, und einen zweiten Teil, der zeitmoduliert und der Lichtquelle zugeführt wird. In einigen anderen Ausführungsformen stellt die Vorrichtung eine zeitlich veränderliche Impedanz in Reihe mit dem Treiber bereit, wobei der Strom, der von der Lichtquelle empfangen wird, zeitmoduliert reduziert wird. In jedem Fall kann die Vorrichtung optional konfiguriert sein, um zu bewirken, dass die Lichtquelle ein pulsierendes Lichtsignal ausgibt, das mit Daten codiert ist. Das Verfahren zur Kommunikation unter Verwendung einer Festkörperleuchte gemäß der US 2015/0279207 Alumfasst :

- Empfangen eines ersten Signals von mindestens einem von einer Festkörperlichtquelle der Festkörperleuchte über ein elektrisch parallel zu einer Ausgangsstromleitung eines Treibers der Festkörperleuchte gekoppeltes Leistungskonditionierungsmodul und einer Eingangsleistungsleitung einer Festkörperlichtquelle der Festkörperleuchte,
- einen Sensor, der operativ mit dem Leistungskonditionierungsmodul gekoppelt ist; und
- ein Kommunikationsmodul, das operativ mit dem Leistungskonditionierungsmodul gekoppelt und konfiguriert ist, um mit einer Signalquelle außerhalb der Festkörperleuchte zu kommunizieren; und
- Ausgeben eines zweiten Signals an mindestens einen von dem Treiber und dem Kommunikationsmodul über das Leistungskonditionierungsmodul. Im Einzelnen ist das Kommunikationsmodul konfiguriert, um mit der externen Signalquelle unter Verwendung von mindestens einem von einem digitalen Multiplexer (DMX)-Schnittstellenprotokoll, einem Wi-Fi-Protokoll, einem Bluetooth-Protokoll, einem digital adressierbaren Beleuchtungsschnittstellen (DALI)-Protokoll und einem Zigbee-Protokoll zu kommunizieren, und wobei das Verfahren ferner das Einstellen der Leistung umfasst, die der Festkörperlichtquelle bereitgestellt wird, als Reaktion auf den Empfang eines Signals durch das Kommunikationsmodul von der externen Signalquelle. Der Sensor umfasst mindestens einen Umgebungslichtsensor und/oder einen Belegungssensor, wobei die Leistung, die der Festkörperlichtquelle bereitgestellt wird, auf Daten, die von dem mindestens einen Umgebungslichtsensor und dem Belegungssensor stammen, basiert.

Weiterhin offenbart die WO 2012/146212 A1 eine gestaffelte Überspannung- und Überstromschutzschaltung zum Schutz eines Leuchtmittels, mit einer zusätzlichen Schnittstelle zum Anschließen eines Displays.

Weiterhin offenbart die WO 2012/022555A1 einen gestaffelten Überspannungs- und Überstromschutz für ein Leuchtmittel, wobei der Schutz aus einem Grobschutz, einem Netzfilter und einem Feinschutz besteht.

Weiterhin offenbart die FR 2 665 031 A1 eine gestaffelte Überspannungs- und Überstromschutzschaltung mit einem Grobschutz, einem Mittelschutz und einem Feinschutz.

Weiterhin offenbart die US 2015/0048754 A1 eine zweite Thermosicherung zwischen dem N-Leiteranschluss und dem Grobschutz.

Die US 2010/0085179 A1 und die US 2015/0259078 A1 offenbaren Licht-Betriebsgeräte mit Mikroprozessoren, die, wenn nicht benötigt, ausgeschaltet werden.

Weiterhin offenbart die WO 2015/179200 A1 im LED-Leuchtmittel integrierte Antennen.

Schließlich ist aus der US 2015/0342006 A1 ein bidirektionales Beleuchtungssystem mit mindestens einer Glühbirne bekannt, welche an der Stirnseite in Abstrahlrichtung eine Vielzahl von lichtemittierenden Elementen, einen Diffusor und Sensoren umfasst. Der Diffusor kapselt vorzugsweise die Sensoren (beispielsweise einen Umgebungslichtsensor) innerhalb der Glühbirne ab. Auf einem Substrat sind die lichtemittierenden Elemente in festen vorbestimmten Positionen und eine Vielzahl von Sensoren, insbesondere Lichtsensoren, angebracht. Weiterhin sind mindestens ein drahtloses Kommunikationsmodul (welches ein oder mehrere Kommunikationsprotokolle unterstützt) mit einer Antenne zur Kommunikation mit einem externen Gerät und einem in der Glühbirne angeordneten Prozessor (Mikroprozessor, CPU) vorgesehen. Der Prozessor ist zur Bestimmung der räumlichen Orientierung für die Glühbirne, Identifizierung des jeweiligen lichtemittierenden Elements, Erfassung eines Kontext-Ereignisses, Zuordnung und Speicherung eines räumlichen Lichtmusters sowie eines Zeitstempels (RAM, ROM, Flash-Speicher, EEPROM, CD (Compact Disc), DVD (Digital Versatile Disc), Festplatte, Diskettenlaufwerk) zu dem kontextuellen Ereignis und zur selektiven Steuerung der lichtemittierenden Elemente konfiguriert. Die lichtemittierenden Elemente können LEDs (Licht emittierende Dioden), OLEDs (organic light emitting diodes), PLEDs (Polymer - LED), Solid-State Lighting, LECs (Light-Emitting Electrochemical Cell), Laser, biolumineszierende Beleuchtung, chemolumineszente Beleuchtung, Leuchtstofflampen, Gasentladungsröhren, phosphoreszierendes Licht, ESL-Beleuchtung (Energiesparlampe oder Kompaktleuchtstofflampe), Glühlampe oder ein beliebig anderes Leuchtmittel sein. Die lichtemittierenden Elemente können in konzentrischen Ringen (beispielsweise Kreise, Rechtecke) oder in einer Spirale (beispielsweise kreisförmige Spirale, logarithmische Spirale, quadratische Spirale) angeordnet werden. Das emittierte Licht kann sichtbar (z.B. rot, grün und blau) oder unsichtbar (beispielsweise Infrarot-Licht) sein. Das Kommunikationsprotokoll kann beispielsweise WiFi, ZigBee, Z-Wave (Funkfrequenzen zwischen 850 und 950 MHz), wireless USB, NFC, Bluetooth oder bei drahtgebundener Kommunikation Powerline, Ethernet u.a. sein. Die Sensoren können beispielsweise Lichtsensoren zur Erfassung des Umgebungslichts (z.B. Photometer, Fotodioden, Fotowiderstände, Fototransistoren), Bildsensoren oder Kameras (z.B. CCD - Kameras, CMOS - Kameras, etc.), optische Detektoren; Ortungssensoren eines Positionierungssystems (z.B. GPS), Orientierungssensoren (Beschleunigungsmesser, Gyroskop, digitaler Kompass), Stromsensoren, Schallsensoren (Mikrofon) oder ein beliebig anderer Sensor sein. Das externe Gerät kann ein mobiles Gerät (z.B. Smartphone, Tablet) oder ein Lichtsensor oder eine Kamera des Gerätes oder eine zweite Glühbirne sein. Damit ist es möglich jederzeit eine Überprüfung und Einstellung (an der geographischen Position des gewünschten Beleuchtungsziels Steuerung einer Vielzahl von Lichtparametern, insbesondere Lichtrichtungseinstellung durch selektives Betreiben der lichtemittierenden Elemente oder beweglicher Betätigungsmechanismus für einen beweglichen Beleuchtungskörper oder schwenkbare Stütze oder drehbare Glühbirne/Gruppe von lichtemittierenden Elementen) des räumlichen Lichtmusters des Beleuchtungssystems, vorzugsweise mit einem Mobilgerät durchzuführen. Maßnahmen zum Schutz des Beleuchtungssystems vor Über- oder Störspannungen sind in der US 2015/0342006 A1 nicht angesprochen.

Wie die vorstehende Würdigung des Standes der Technik aufzeigt, sind Betriebsgeräte zum Schutz von an Netz-Leitungen angeschlossenen Geräten, Lampen u.a. vor Über- oder Störspannungen oder von Vorrichtungen zur Verbrauchsreduzierung elektrischer Geräte, Leuchten u.a. für verschiedene Anwendungen und Ausgestaltungen bekannt. Der wesentliche Nachteil des oben stehend beschriebenen Standes der Technik liegt darin, dass in der Vergangenheit stets getrennte Maßnahmen getroffen werden, um einerseits die Überspannungsschutzvorrichtung, andererseits die Steuerung, beispielsweise zur Kommunikation, Verbrauchsreduzierung o.ä. im Rahmen der Hausinstallation zu realisieren. Auch fehlt in der Praxis ein universell einsetzbares Betriebsgerät, welche auch einen ungeübten Benutzer eine einfache Montage bzw. Aufstellung und eine sichere Bedienung im Rahmen der Hausinstallation von Wohnhäusern oder Gebäuden mit ähnlichen Zwecken (Geschäfte, Arztpraxen, kleine Gewerberäume etc.) erlaubt. Insbesondere bei der Nutzung eines tragbaren Kommunikationsendgerät kommt der Antennenstruktur im Hinblick auf nutzbarer Bandbreite und Richtdiagramm eine hohe Bedeutung zu.

Die Zukunft der Energieversorgung gehört den "intelligenten" Netzen, den sogenannten Smart Grids in Verbindung mit Komponenten und Diensten im sogenannten Internet der Dinge (Internet of Things, IoT) oder im Bereich Industrie 4.0.

Im Bereich der Energieversorgung sind das Systeme, bei denen mithilfe der heute verfügbaren Informations- und Kommunikationstechnologie die unterschiedlichen Stromerzeuger mit Stromspeichern, mit den Übertragungs- und Verteilnetzen sowie mit den Energieverbrauchern miteinander verbunden sind. Das hat den Vorteil, dass die Primärenergie effizienter für die Stromerzeugung eingesetzt werden kann. Mit den Smart Grids, wo alles mit allem verbunden ist, bieten sich ganz neue Möglichkeiten der gegenseitigen flexiblen, aktiven Anpassung von Stromerzeugung, Netzführung und Verbrauch.

Das Internet der Dinge IoT bezeichnet die Verknüpfung eindeutig identifizierbarer physischer Objekte mit einer virtuellen Repräsentation in einer Internet-ähnlichen Struktur, bei der viele reale Dinge die eigenen Zustandsinformationen für die Weiterverarbeitung im Netzwerk zur Verfügung stellen. Solche Zustandsinformationen können Informationen über die aktuelle Nutzung, über Alterung, aber auch über besondere Umweltbedingungen an dem Ort des Teilnehmers sein. Solche Informationen können sowohl zur Verbesserung der Nutzbarkeit des Teilnehmers selbst ausgewertet werden (Früherkennung von Wartung oder Austausch etc.), als auch zur Verbesserung der Situation des umgebenden Bereiches (so kann z. B. die Reduktion des Energieaufwandes zur Heizung oder Kühlung an eine Vielzahl von Informationen im ganzen Raum gebunden werden, und so besser wirken als in der Regelinstallation, die mit einem einzelnen Sensor [an häufig ungeeigneter Stelle montiert] auskommen muss). In einem weiteren Schritt können digitale Services als Teil des IoT die Parametrierung von Geräten so erleichtern und verbessern, dass sie auch dort geschieht wo sie heute aus Kostengründen nicht stattfindet. Neben der Gebäudeautomation im Objektbereich wird zukünftig die Vernetzung und Steuerung von Geräten und Teilen der Gebäudetechnik im Wohnbereich, gemäß dem Konzept Intelligentes Wohnen oder Smart Home (auch Intelligentes Haus, vernetztes Haus, Haussteuerung, Home Automation oder Smart Living genannt) erfolgen. Die für Industrie 4.0 notwendige Automatisierungstechnik in der Fertigungstechnik und der Logistik soll durch die Einführung von Verfahren der Selbstoptimierung, Selbstkonfiguration, Selbstdiagnose und Kognition intelligenter werden und die Menschen bei ihrer zunehmend komplexen Arbeit besser unterstützen. Im Wohnbereich steht der Begriff Intelligentes Wohnen für die Datenvernetzung und Steuerung (auch Fernsteuerung) von elektrischen Geräten, der Beleuchtung, Unterhaltungselektronik, Heizung, Lüftung und anderen, wobei hinsichtlich des Energieverbrauchs die Funktionen besonders sinnvoll, wenn sie mit den sogenannten Intelligenten Stromnetzen (Smart Grids) gekoppelt werden. Gleiches gilt für die "intelligente Fabrik" (Smart Factory) bzw. Computerintegrated manufacturing. Ziel der Konzepte ist:

- den Komfort (z.B. rechtzeitiges Anschalten der Heizung) und die Sicherheit,
- die Energieeffizienz (z.B. rechtzeitiges Abschalten der Heizung oder Küchengeräte),
- die Wirtschaftlichkeit zu verbessern und
- die Erzeugung bzw. das Angebot von Strom und den Bedarf besser aufeinander abzustimmen.

Es kann jedoch festgestellt werden, dass es derzeit noch an konkreter Umsetzung der Konzepte fehlt, insbesondere:

- die Standardisierung der Komponenten und Dienste im Internet der Dinge IoT oder der Fertigungstechnik HOT.
- die Einführung einer einfach zugänglichen, sicheren und allgemeinen Netzwerkanbindung, geeignet für alle Geräte mit eingebautem Mikrocontroller.
- die Reduktion der Kosten für in das IoT integrierte Teilnehmer. (Gerätekosten, Inbetriebnahmekosten, Anschlusskosten etc.)
- Entwicklung von kostenarmen, automatisierten (bis hin zu autonomen) digitalen Services im Netzwerk, welche den zusätzlichen Nutzen der Vernetzung realisieren.

Besonders bedeutsam ist dies, weil sowohl die einschlägigen Industrien, insbesondere die Unterhaltungs-, Computer-, Telekommunikations- und Maschinenbauindustrie als äußerst fortschrittliche, entwicklungsfreudige Industrien anzusehen sind, die schnell Verbesserungen und Vereinfachungen aufgreifen und in die Tat umsetzen.

Der Erfindung liegt die Aufgabe zugrunde, ein universell einsetzbares, flexibles und hoch integriertes Betriebsgerät für die Ansteuerung verschiedener Leuchtmittel derart auszugestalten, dass einerseits Leuchtmittelarten z.B. LED, HQI, NDL usw. unterstützt werden und andererseits dieses in verschiedenen Leistungsklassen mit hoher Effektivität betrieben werden kann. Weiterhin soll das Betriebsgerät angeschlossene Leuchtmittel eigenständig steuern, regeln und überwachen, es soll ein zuverlässiger Schutz vor Überstrom und Überspannung, insbesondere der angeschlossenen Geräte erreicht werden und es soll auch einem ungeübten Benutzer eine sichere Bedienung und Betrieb, insbesondere eine einfache Anpassung an die jeweiligen Bedürfnisse, ermöglicht werden. Auch soll für die Nutzung, insbesondere zur BLE-Kommunikation, das 3D-Richtdiagramm einer im Betriebsgerät integrierten Antenne möglichst kugelförmig sein, d.h. soweit vermeidbar keine Raumbereiche mit schlechter Übertragung entstehen und die Antenne soll eine ausreichende nutzbare Bandbreite aufweisen.

Diese Aufgabe wird bei einem Betriebsgerät und einem Leuchtmittel mit den Merkmalen des Patentanspruchs 1 gelöst.

Das erfindungsgemäße Betriebsgerät/Vorschaltgerät weist den Vorteil auf, dass auf überraschend einfache Art und Weise durch die gestaffelt aufgebauten Schutzmaßnahmen ein effektiver Schutz des gesamten Vorschaltgeräts einschließlich angeschlossener Leuchtmittel und Geräte gewährleistet wird. Die Wirkungsweise der Schutzeinrichtungen ist so dimensioniert, dass die jeweiligen Einrichtungen alle nachfolgenden Schaltungsteile effektiv schützen von primär sowie sekundär.

Weiterhin wird diese Aufgabe, gemäß Patentanspruch 11, dadurch gelöst, dass die Lampe aus einem oberen Lampenteil mit Leuchtdioden und einem als Gerätefuß mit Anschlusssockel ausgestalteten unteren Lampenteil besteht, dass der Anschlusssockel als Schraubgewinde-Ringkontakt und Fußkontakt ausgeführt ist und in diesem die Elektronik des Betriebsgerät sowohl für die Leuchtdioden-Ansteuerung, als auch für die powerline communication PLC- und Bluetooth Low Energy BLE-Kommunikation angeordnet ist.

Schließlich wird diese Aufgabe, ausgehend von einem Betriebsgerät und Leuchtmittel nach Anspruch 1 mit einer Antenne, gemäß Patentanspruch 12, dadurch gelöst, dass diese als gewinkelter Dipol mit mindestens einem Strukturelement, welches die Antenne in die 3. Dimension erweitert, ausgestaltet ist.

Das erfindungsgemäße Betriebsgerät/Vorschaltgerät weist den Vorteil auf, dass auf überraschend einfache Art und Weise durch die gestaffelt aufgebauten Schutzmaßnahmen ein effektiver Schutz des gesamten Vorschaltgeräts einschließlich angeschlossener Leuchtmittel und Geräte gewährleistet wird. Die Wirkungsweise der Schutzeinrichtungen ist so dimensioniert, dass die jeweiligen Einrichtungen alle nachfolgenden Schaltungsteile effektiv schützen von primär sowie sekundär.

Weiterhin wird diese Aufgabe, ausgehend von einem Betriebsgerät für eine intelligente Lampe mit integriertem Netzübergang zwischen drahtlosen und drahtgebundenen Netzwerken zur Steuerung oder Vernetzung von Geräten, gemäß Patentanspruch 11, dadurch gelöst, dass die Lampe aus einem oberen Lampenteil mit Leuchtdioden und einem als Gerätefuß mit Anschlusssockel ausgestalteten unteren Lampenteil besteht, dass der Anschlusssockel als Schraubgewinde-Ringkontakt und Fußkontakt ausgeführt ist und in diesem die Elektronik des Betriebsgerät sowohl für die Leuchtdioden -Ansteuerung, als auch für die PLC- und BLE-Kommunikation angeordnet ist.

Das erfindungsgemäße Betriebsgerät weist den Vorteil auf, dass auf überraschend einfache Art und Weise eine universell einsetzbare Vorrichtung kostengünstig aufgebaut werden kann, welche sowohl einen Schutz vor Überspannungen als auch ein automatisches Schalten von elektrischen Geräten und Leuchtmitteln ermöglicht und welche auf zuverlässige Weise betrieben werden kann. Insbesondere erlaubt diese dem Verbraucher eine einfache Montage (Austausch des Leuchtmittels) und dieser kann ohne Komfort-Einbußen Preisvorteile realisieren, indem er über Geräte verfügt, die automatisch vorzugsweise während Niedertarif-Zeiten arbeiten, wie beispielsweise Wärmepumpen mit Latentwärmespeichern, Tiefkühlschrank, Elektroboiler, Wasch- oder Geschirrspüler. Durch den Einsatz des erfindungsgemäßen Betriebsgeräts können moderne Systeme flexibler und intelligenter arbeiten, was insbesondere für die Einbeziehung erneuerbarer Energien wichtig ist. Beispielsweise kann der konkrete Einschaltzeitpunkt eines intelligenten Kühlschranks in einem gewissen Zeitintervall so verschoben werden, dass er mit dem Angebot an elektrischer Leistung eher übereinstimmt, ohne dass dabei die gekühlten Lebensmittel unzulässig stark erwärmt werden. Die im erfindungsgemäßen Betriebsgerät/der intelligenten Lampe integrierte Blitzschutzvorrichtung weist den Vorteil auf, dass ein gestufter Grob-/ Feinschutz ermöglicht wird.

Bei einer bevorzugten Ausgestaltung der Erfindung weist, gemäß Patentanspruch 2, der Grobschutz einen Gasableiter und in Reihe zum Gasableiter zwei Varistoren auf und dass zur thermischen Kopplung eine Thermosicherung sehr nahe an den Varistoren platziert ist, so dass ein am Lebenszeitende der Varistoren durch diese fließender erhöhter Leckstrom detektiert wird.

Im Gegensatz zu einer elektrischen Sicherung wird die Auslösung der erfindungsgemäßen Thermosicherung nicht primär durch den sie durchfließenden Strom beeinflusst, sondern durch ihre Temperatur. Vorzugsweise ist die erfindungsgemäße Thermosicherung eine Kombination aus Thermosicherung und Überstromschalter realisiert auf der Ausgangsseite mit einem PTC-Widerstand (Positive Temperature Coefficient, Kaltleiter).

Vorzugsweise weist, gemäß Patentanspruch 10, das Betriebsgerät zur Steuerung des Betriebsgeräts, zur Abfrage von Statusmeldungen des Betriebsgeräts, zur Initialisierung der Parameter eines Leuchtmittels und zum Update der Firmware des Betriebsgeräts mindestens eine Powerline-Kommunikationsschnittstelle auf und das Betriebsgerät arbeitet zwischen den einzelnen Kommunikationsschnittstellen als Gateway.

Die weitere Ausgestaltung der Erfindung weist den Vorteil auf, dass es möglich ist, verschiedene Netzwerktopologien miteinander zu verbinden. Durch eine derartige Verbindung verschiedener Netzwerke erhöhen sich die Kommunikationsreichweiten. Weiterhin kann das erfindungsgemäße Betriebsgerät durch eine DALI-Bussignal (Digital Addressable Lighting Interface ist in der Gebäudeautomatisierung ein Protokoll zur Steuerung von lichttechnischen Betriebsgeräten) über die Powerline-Kommunikationsschnittstelle angesteuert werden, so dass ohne Mitführung einer zusätzlichen Steuerleitung in der Versorgungsleitung bis zu beispielsweise 64 Leuchten an einem Bussegment betrieben, Zustände rückgemeldet werden können und es möglich ist auch im ausgeschalteten Zustand der Leuchten/einzelner Leuchtmittel die Stand-by-Verluste zu reduzieren.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:

FIG. 1      ein Blockschaltbild für einen Überspannungs- und Überstromschutz,
FIG. 2      ein Blockschaltbild für einen Grobschutz als Blitzschutz,
FIG. 3      ein Blockschaltbild für einen Energieabsorber,
FIG. 4      ein Blockschaltbild für eine Schnittstellenschaltung des erfindungsgemäßen Betriebsgeräts,
FIG. 5a     ein Blockschaltbild für ein Betriebsgerät mit angeschlossenen LED-Leuchtmitteln, Wi-Fi-Adapter und Videokamera,
FIG. 5b     ein Blockschaltbild für das Variieren von isolierten und nicht isolierten Aufbau,
FIG. 6      ein Blockschaltbild für kaskadierte Betriebsgeräte für ein System nach FIG. 5,
FIG. 7      eine zweite Ausführungsform für ein Betriebsgerät gemäß der Erfindung,
FIG. 8      ein Blockschaltbild für das System nach FIG.7,
FIG. 9      eine Antenne für ein Betriebsgerät gemäß vorstehender Ausführungsformen der Erfindung,
FIG. 10a    den zeitlichen Verlauf eines Norm-Strompulses 8/20$\mu$s am Eingang des Grobschutzes G,
FIG: 10b    den zeitlichen Verlauf der zugehörigen Klemmenspannung des Grobschutzes G,
FIG. 10c    den zeitlichen Verlauf der Ausgangsspannung des Netzfilters NF,
FIG. 10d    den zeitlichen Verlauf des Stroms durch die Klemmschaltung K des erfindungsgemäßen Betriebsgeräts und
FIG. 11     den Aufbau eines Netzfilters NF gemäß der Erfindung.

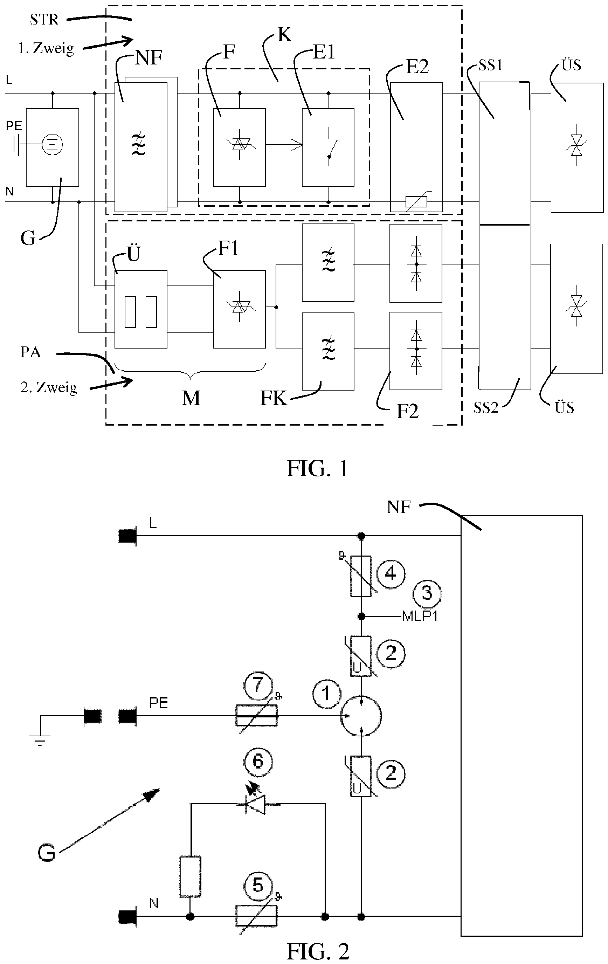

FIG. 1 zeigt ein Blockschaltbild für einen Überspannungs- und Überstromschutz des Betriebsgeräts, welcher die Hardware gegen Überspannungen und Überströme schützt. Der Schutz besteht aus verschiedenen nacheinander gestaffelten und aufeinander abgestimmten Schaltungsbereichen. Jeder dieser Schaltungsbereiche übernimmt unterschiedliche Aufgaben für den Schutz.

Die erste Ausführungsform des erfindungsgemäßen Betriebsgeräts weist sowohl einen ersten Zweig für den Anschluss eines Leuchtmittels (mit einem Schutz der Stromversorgung STR, siehe Strichlinie) als auch einen zweiten Zweig (mit einem Schutz, insbesondere einer Powerline Ankopplung PA, siehe Strichlinie) für den Anschluss mindestens eines Kommunikationsmoduls eines Geräts an getrennte erste und zweite Schnittstellenschaltungen SS1, SS2 am Ausgang des Betriebsgeräts auf.

Am Eingang des Betriebsgeräts ist eine für ersten und zweiten Zweig gemeinsame Grobschutzschutzschaltung G (siehe FIG. 2), nachfolgend Grobschutz genannt angeordnet, welcher einen Gasableiter 1 und in Reihe zum Gasableiter 1 zwei Varistoren 2 aufweist und das System gegen große Pulse schützt. Hierbei werden Überspannungen auf eine niedrigere Spannung begrenzt und der Puls am Eingang des Systems kurzgeschlossen. Für den Überspannungs- und Überstromschutz hat ein am Ausgang des Grobschutzes G im ersten Zweig angeschlossenes Netzfilter NF die Aufgabe, den durch den Grobschutz G begrenzten Spannungspuls für nachfolgende Schaltungsteile zu verzögern, reduzieren und zu falten und die Anstiegsgeschwindigkeit zu reduzieren (siehe im Einzelnen die weiter unten beschriebenen vier Aufgaben zum erfindungsgemäßen Netzfilter NF). Ist nach dem Netzfilter NF die Restspannung des Pulses für die nachfolgenden Schaltungsteile zu hoch, wird diese durch eine am Ausgang des Netzfilters NF angeschlossene Klemmschaltung K, bestehend in der 1. Stufe aus einem Feinschutz F und in der 2. Stufe aus einem ersten Energieabsorber E1, begrenzt. Hierbei aktiviert der Feinschutz F den ersten Energieabsorber E1 und es erfolgt ein Kurzschluss des Spannungspulses, um die nachfolgenden Schaltungsteile vor Schäden zu schützen. Mit Erreichen des nächsten Nulldurchgangs der Netzspannung wird der Kurzschluss wieder deaktiviert. Bei weiterem Ansprechen des Feinschutzes F erfolgt eine erneute Aktivierung von erstem Energieabsorber E1.

Weiterhin ist im ersten Zweig am Ausgang der Klemmschaltung K ein zweiter Energieabsorber E2 angeschlossen, welcher beim Einschalten mit Hilfe eines NTC-Widerstands NTC (Negative Temperature Coefficient Thermistor, Heißleiter) den Strom begrenzt. Dies schützt die Schaltung vor hohen Strömen und entlastet gleichzeitig das Versorgungsnetz. Im Normalbetrieb ist der Widerstand NTC überbrückt, um die Verlustleistung zu minimieren. Erkennt der zweite Energieabsorber E2 einen Überspannungspuls, so wird diese Überbrückung wieder aufgehoben. Dadurch erhöht sich der Innenwiderstand der Schaltung und es verringert sich die auftretende Energie in den nachfolgenden Schaltungsteilen. Weiterhin wirkt der zweite Energieabsorber E2 als Einschaltstrombe grenzung.

Die Powerline Ankopplung PA (2. Zweig) koppelt die Kommunikationssignale einer Powerline Ankopplung direkt auf die Netzversorgungsleitungen. Aus diesem Grund schützt nur der Grobschutz G die Ankopplung, nicht jedoch nachfolgende Schutzeinrichtungen. Aufgrund der Klemmspannung des Grobschutzes G, deren Wert noch Schäden an der Ankoppelschaltung auslösen würde, benötigt die Schaltung zusätzliche Schutzmaßnahmen. Hierzu ist am Ausgang des Grobschutzes G im zweiten Zweig ein Mittelschutz M mit einem Übertrager Ü angeschlossen, welcher während des Überspannungspulses in Sättigung geht. Die Sättigungseffekte des Übertragers Ü bewirken eine stark eingeschränkte Übertragung der Pulsenergie auf die Sekundärseite des Übertragers Ü. Zusätzlich befinden sich auf der Sekundärseite Komponenten, nämlich eine erste Feinschutzschaltung F1, ein damit verbundenes Filter FK zur Trennung von parallel ins Stromversorgungsnetz eingespeisten Kommunikationssignalen und eine zweite-mit diesem Filter FK verbundene zweite Feinschutzschaltung F2, die den restlichen Spannungspuls begrenzen. Erfindungsgemäß ist die erste Feinschutzschaltung F1 der Powerline Ankopplung PA mit der Sekundärseite des Übertragers Ü verbunden, welcher störungsempfindliche Komponenten der Schaltung, insbesondere alle Eingänge eines Mikroprozessors MP zusätzlich durch spannungsbegrenzende Komponenten (Klemmdioden) schützt.

Zum Schutz der Ausgangsstufe des Betriebsgeräts/Vorschaltgeräts vor Überspannungen und Überströmen, die von dem Leuchtmittel auf das Vorschaltgerät einwirken, ist diese erste Schnittstellenschaltung SS1 mit entsprechenden Begrenzungsschaltungen versehen. Die zweite Schnittstellenschaltung SS2 hat zum Schutz des Vorschaltgeräts ebenfalls einen Überspannungs- und Überstromschutz (siehe FIG. 1 vorgeschaltete zweite Feinschutzschaltung F2). Durch die gestaffelt aufgebauten Schutzmaßnahmen wird ein effektiver Schutz des gesamten Betriebsgeräts/Vorschaltgeräts gewährleistet. Die Wirkungsweise der Schutzeinrichtungen ist so dimensioniert, dass die jeweiligen Einrichtungen alle nachfolgenden Schaltungsteile effektiv schützen und zwar von primär sowie sekundär.

Nachfolgend eine detaillierte Beschreibung der einzelnen Elemente des Überspannungs- und Überstromschutzes. Der in FIG. 2 dargestellte Grobschutz G schützt das System vor größeren Spannungs- und Strompulsen, wie diese z.B. bei Blitzereignissen auftreten.

Im Fall eines Pulses zündet ein Gasableiter 1 und limitiert dadurch den Puls. Bei der Dimensionierung des Ableiters 1 ist darauf zu achten, dass dieser ausschließlich bei Überspannungs- bzw. Überstrompulsen zündet und nicht im normalen Betriebsfall. Zum Löschen des Ableiters 1 ist es notwendig den Strom durch den Ableiter 1 zu begrenzen. Aus diesem Grund sind zwei Varistoren 2 in Reihe zum Ableiter 1 geschaltet. Ein Varistor 2 ist zwischen dem L - Leiter und Ableiter 1 geschaltet. Der zweite Varistor 2 ist zwischen N-Leiter und Ableiter 1 geschaltet. Um den Strom durch den Ableiter 1 entsprechend zu begrenzen ist es notwendig, dass die "stand off" Spannung der beiden Varistoren 2 in Summe größer als die Netzspannung ist. Aufgrund der Versorgungsnetztopologie können die Varistoren 2 unsymmetrisch dimensioniert sein, mit der Folge, dass die Klemmspannung des Grobschutzes G verringert wird. Hierbei ist davon ausgegangen, dass der Neutralleiter N und der Erdleiter PE im Netz verbunden sind. Damit ist gewährleistet, dass sich keine größeren Potentialunterschiede zwischen Neutralleiter N und Erdleiter PE ergeben.

Am Lebenszeitende der Varistoren 2 erhöht sich der durch sie fließende Leckstrom. Dadurch erwärmen sich die Varistoren 2, was zu einer thermischen Zerstörung der Komponenten führen kann. Um dies zu verhindern, ist eine Thermosicherung 4 sehr nahe an den Varistoren 2 platziert (Thermische Kopplung). Bei einer übermäßigen Erwärmung der Varistoren 2 löst diese Sicherung 4 aus und trennt die Schaltung von der Versorgungsspannung (Phase L), um eine thermische Zerstörung der Varistoren 2 zu verhindern.

Das Abtrennen des Grobschutzes G von der Versorgungsspannung L führt zu einem Verlust der Schutzwirkung des Grobschutzes G. Aus diesem Grund erkennt eine Monitoring Schaltung 3 das Abtrennen des Grobschutzes G, und meldet dies an den Mikroprozessor MP des Betriebsgeräts/Vorschaltgeräts.

Für die funktionale Sicherheit des Systems ist eine zweite Thermosicherung 5, zwischen dem N-Leiteranschluss und dem Grobschutz G installiert. Diese Sicherung löst bei Überströmen des Systems aus und verhindert dadurch einen Kurzschluss der primären Netzversorgung. Außerdem löst diese Sicherung ebenfalls bei einer übermäßigen Erwärmung des Gerätes aus. In beiden Fällen erfolgt eine sichere Trennung des Betriebsgeräts/Vorschaltgeräts vom Netz. Eine Statusanzeige/Anzeigemittel 6, insbesondere eine Leuchtdiode/LED, zeigt die Trennung am Gehäuse des Betriebsgeräts/Vorschaltgeräts an.

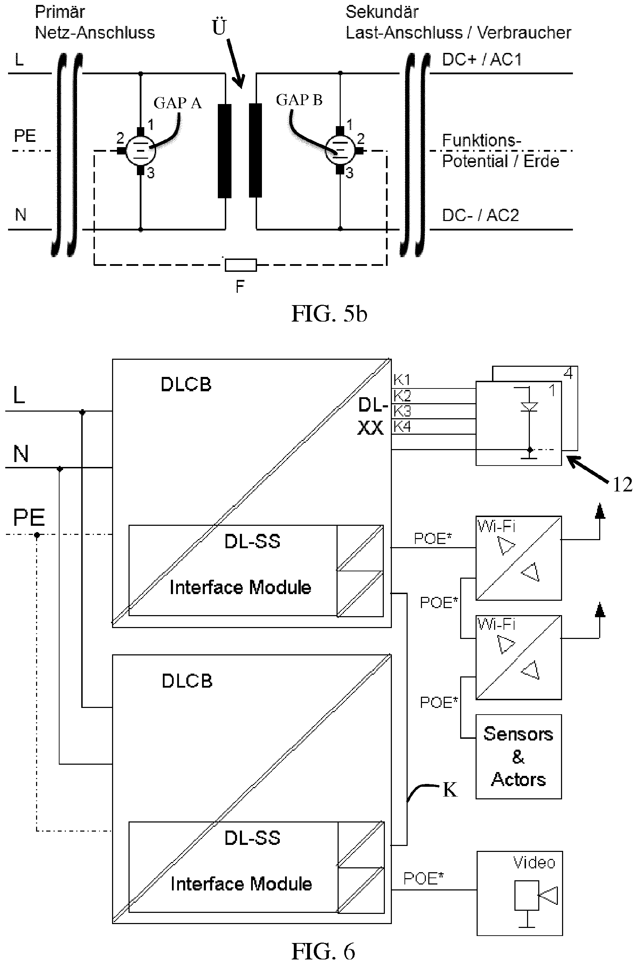

Die Anordnung der beiden Thermosicherungen 4, 5 ermöglicht einen optimalen Schutz bei minimaler Verlustleistung der Sicherungen, da sich nur eine Sicherung im Energiepfad befindet. Optional ist auch ein reduzierter Schutz ohne Erdleiter PE möglich. Dies erlaubt den Einsatz des Betriebsgeräts/Vorschaltgeräts als Gerät der Schutzklasse II (Geräte der Schutzklasse II müssen nicht mit einem Schutzleiter verbunden sein und auf den Schutzleiter kann verzichtet werden, d.h. der Berührungsschutz wird durch eine Schutzisolierung gewährleistet, wobei alle spannungsführenden Teile neben der Betriebs-Isolierung noch eine weitere Isolation haben). Optional kann der Erdleiter PE auch für den Schutz der ersten Schnittstellenschaltung SS1 verwendet werden. Hierfür wird der Erdleiter PE intern mit der Schnittstellenschutzschaltung verbunden. Geräte der Schutzklasse I müssen mit einem Schutzleiter verbunden sein, d.h. alle Metallteile, die während des Betriebs und der Wartung im Fehlerfall Spannung aufnehmen können, müssen leitend mit dem Erdleiter verbunden sein. Im Einzelnen hierzu siehe nachfolgende Beschreibung zu FIG. 5b.

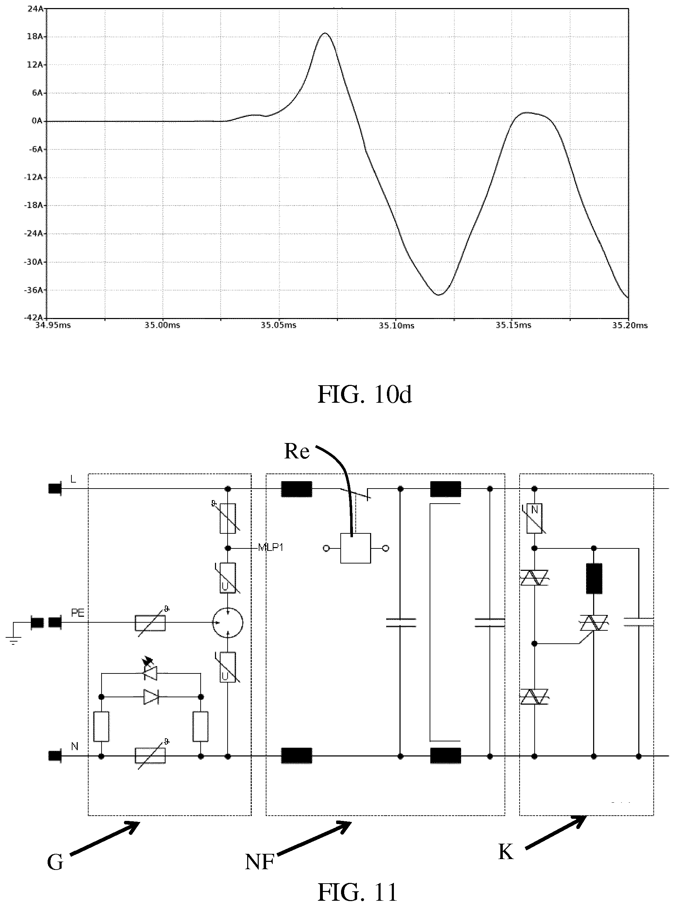

Um den aus einer Norm für sichere elektrische Trennung geforderten Abstand zwischen Phase L und Erdleiter PE bzw. Neutralleiter N und Erdleiter PE von 4mm zu gewährleisten, ist am Erdleiter-Anschlusspunkt des Gasableiters 1 eine zusätzliche Thermosicherung 7 implementiert (siehe FIG. 2 und FIG. 11). Dadurch sind in jedem Pfad zwei Thermosicherungen mit jeweils 2mm Trennabstand in Reihe geschaltet.

Alle Thermosicherungen, nämlich 4, 5 und 7 sind thermisch mit den Varistoren 2 gekoppelt. Hierdurch wird der am Lebenszeitende erhöhte Leckstrom der Varistoren 2 detektiert.

Der im ersten Zweig angeordnete Netzfilter NF übernimmt im Betriebsgerät/Vorschaltgerät vier Aufgaben: Erstens wird im Fall eines Überspannungs- bzw. Überstrompulses die Klemmenspannung L, die am Ausgang der Grobschutzschaltung G anstehen bleibt, gefaltet (durch die Eigenschaften des Netzfilters NF wird die Energiezeitverteilung verändert/ im Zeitbereich verzögert) und der Puls verzögert an nachfolgende Schaltungsteile weitergegeben. Die Faltung des Spannungspulses bewirkt eine Verringerung des Spitzenwertes bei einer gleichzeitigen Verlängerung des Pulses.

Mathematisch gesehen wird die Funktion des Pulses "p" mit der Funktion "f" des Netzfilters NF gefaltet. Die Berechnung erfolgt im Zeitbereich. Das Ergebnis der Faltung ist:

$$y(t) = p(t) * f(t) = \int p(t - \tau) \times f(\tau) d\tau$$

Durch beispielsweise eine Laplace Transformation werden die Funktionen in den Frequenzbereich transformiert.

Im Frequenzbereich wird aus der Faltung eine Multiplikation gemäß der Gleichung

$$Y = P \times F$$

wobei durch eine geeignete Wahl der Filterfunktion der Spitzenwert des Pulses verringert und gleichzeitig die Dauer des Pulses verlängert wird. Die Energie des Pulses bleibt hierdurch unverändert.

Durch die Verzögerung des Pulses wird erreicht, dass der Blitzschutz als erste Maßnahme bei einem Überspannungs- oder Überstromereignis anspricht. Dadurch erfolgt der Abbau der Hauptenergie des Pulses am Grobschutz G.

Die zweite Aufgabe des Netzfilters NF ist eine Filterung der vom System, z.B. im internen Netzteil und in der Lampenansteuerung erzeugten Gleichtakt-Störungen und Gegentakt-Störungen.

Die dritte Aufgabe des Netzfilters NF ist die Generierung einer hohen Impedanz für die parallel ins Netz eingespeisten Powerline Kommunikationssignale. Die Kommunikation über Powerline erfolgt in einem Frequenzbereich zwischen 30 kHz und 500 kHz. Dieser Frequenzbereich erfordert die hohe Impedanz um die Kommunikationssignale nicht kurzzuschließen bzw. durch eine niedrige Impedanz stark zu dämpfen. Eine hohe Impedanz ermöglicht eine gute Signalübertragung vom Netz zur Ankoppelschaltung und umgekehrt.

Die vierte Aufgabe des Netzfilters NF ist der Schutz des ersten Energieabsorber E1 vor schnellen Stromanstiegsgeschwindigkeiten, die aus dem Kurzschließen eines Überstromimpulses resultieren.

FIG. 11 zeigt eine bevorzugte Ausgestaltung des Netzfilters NF gemäß der Erfindung, nämlich ein LC-Filter 4. Ordnung mit Tiefpassverhalten. Die Eckfrequenz (-3dB) ist bei 2kHz festgelegt. Der Netzfilter NF ist gegen das Erdpotential/Erdleiter PE isoliert. Durch die Isolation wird verhindert, dass Power-Line-Communications Signale auf das Erdpotential/Erdleiter PE eingekoppelt werden. Ebenso wird verhindert, dass Störungen auf dem Erdpotential/Erdleiter PE die Power-Line-Communication PLC beeinflussen. Dies ist ein wesentlicher Unterschied zu den konventionellen Netzfiltern.

Zusammenfassend hat der Netzfilter NF also vier Funktionen:

1) Entstörung des Netzes von internen Schaltstörungen des Betriebsgeräts.
2) Stellt einen hochimpedanten Abschluss/Barriere für die Power-Line-Communication PLC dar.
3) Faltung der Energieimpulse bei Blitzeinschlag/Ereignissen.
4) Verringert die Anstiegsgeschwindigkeit von Stromimpulsen auf einen vom Triac (siehe FIG. 1, erster Energieabsorber E1) verträglichen Wert.

Oben beschriebene Lösung ist eine reine Hardware-technische Implementierung/Entwicklung und benötigt keinerlei Software/Firmware- Eingriffe.

Zusätzlich ist ein Schutz gegen temporäre Überspannung enthalten. Das Betriebsgerät soll durch Netzfehler bedingte Überspannungen erkennen und den Eingangsanschluss von Netz abtrennen, um die nachgeschaltete Bauteile vor Überspannung zu schützen. Sobald der Überspannungsfehler gelöst ist, schaltet das Betriebsgerät den Eingang wieder zu und der ordnungsgemäße Betrieb wird fortgesetzt. Als Ab- bzw. Anschalter ist ein in der Phase L eingeschleiftes Relais Re (siehe FIG. 11) eingesetzt. Somit können die Anforderungen an Isolationsabstände sichergestellt werden. Die Funktion des Grobschutzes G, des Netzfilters NF und der Klemmschaltung K ist bei jedem Betriebszustand des Gerätes gegeben, d.h. auch ohne Versorgungsspannung wirken die Schutzmaßnahmen der beschriebenen Schaltungsteile.

Die Klemmschaltung K ist zweistufig aufgebaut. Die erste Stufe (Feinschutz) erkennt eine Überspannung, die ggf. am Ausgang des Netzfilters ansteht. Diese Stufe begrenzt die Überspannung. Durch die Begrenzung wird die zweite Stufe (Energieabsorber E2, mit Schalter, z.B. MosFet, TRIAC) ausgelöst, welche die Restenergie (Überspannung) letztendlich kurzschließt. Im Design des Betriebsgerät/Vorschaltgerät wird die erste Stufe durch Klemmdioden realisiert. Als zweite Stufe wird ein TRIAC eingesetzt. Die Begrenzung und der Kurzschluss der Klemmschaltung begrenzt die Spannung für die nachfolgenden Schaltungsteile. Der TRIAC löscht beim Erreichen des nächsten Nulldurchgangs der Netzspannung L automatisch.

Zum Schutz der Komponenten in der Klemmschaltung K vor schnellen Spannungs- und Stromanstiegen ist am Eingang der Klemmschaltung K eine Induktivität installiert. Die Induktivität verlangsamt die Anstiege. Eine weitere Aufgabe der Induktivität ist die Begrenzung des Spannungsanstiegs beim Löschen des TRIACs. Durch die Begrenzung des Anstiegs wird ein Wiederzünden des TRIACs verhindert.

Eine Überwachungsschaltung 3 detektiert einen möglichen Ausfall der Schaltung und meldet diesen an den Mikroprozessor MP des Betriebsgeräts/Vorschaltgeräts weiter.

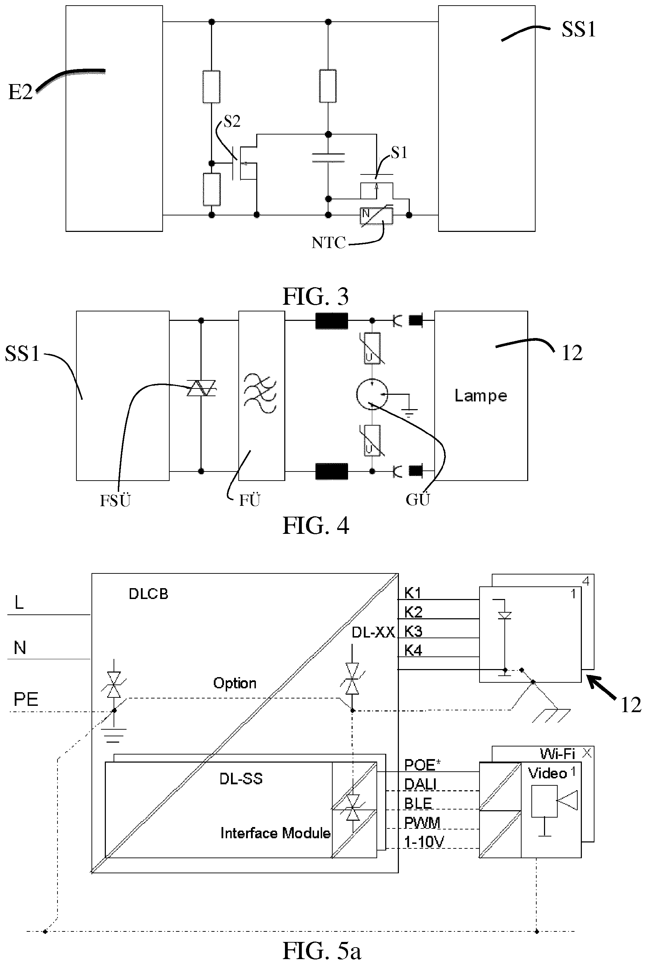

Vor dem Einschalten des Systems sind alle Kapazitäten des Systems entladen. Eine entladene Kapazität stellt im Einschaltmoment einen Kurzschluss dar. Um diesen Kurzschluss im Einschaltmoment zu verhindern, ist im Betriebsgerät/Vorschaltgerät eine Einschaltstrombegrenzung integriert, welche in FIG. 3 dargestellt und nachfolgend näher beschrieben ist.

Im Einschaltmoment begrenzt ein temperaturabhängiger Widerstand, insbesondere ein NTC - Widerstand NTC den Einschaltstrom. Dies schützt zum einen die Schaltung vor unzulässig hohen Strömen, und bewirkt zum anderen auch eine Reduzierung der Belastung des Versorgungsnetzes. Nach dem Einschaltmoment, d.h. nach wenigen Netzperioden, wird der NTC-Widerstand NTC automatisch über einen ersten Schalter S1 kurzgeschlossen. Dies verringert die Verlustleistung des Systems.

Während eines Überspannungsereignisses detektiert der zweite Energieabsorber E2 diese Überspannung. Daraufhin wird der NTC - Widerstand NTC automatisch wieder mittels eines ersten Schalters S2 in die Schaltung geschaltet Dies erhöht den Innenwiderstand der Schaltung. Der erhöhte Innenwiderstand verhindert, dass nachfolgende Schaltungsteile mit hohen Energiepulsen belastet werden. Nach dem Abklingen des Spannungspulses erfolgt ein erneuter Kurzschluss des NTC-Widerstands NTC.

Die Powerline Ankopplung PA koppelt die Kommunikationssignale direkt auf die Netzversorgungsleitungen. Aus diesem Grund schützt nur der Grobschutz G, nicht jedoch nachfolgende Schutzeinrichtungen die Ankopplung.

Aufgrund der Klemmspannung des Grobschutzes G, deren Wert noch Schäden an der Ankoppelschaltung auslösen würde, benötigt die Schaltung zusätzliche Schutzmaßnahmen

Der im Mittelschutz M vorhandene Übertrager Ü (siehe FIG. 1) geht während des Überspannungspulses in Sättigung. Die Sättigungseffekte des Übertragers Ü bewirken eine stark eingeschränkte Übertragung der Pulsenergie auf die Sekundärseite des Übertragers Ü. Zusätzlich befinden sich auf der Sekundärseite Komponenten, insbesondere die erste Feinschutzschaltung F1, die den restlichen Spannungspuls begrenzen. Zur Erzeugung von Sicherheitskleinspannung (SELV-Spannung, Safety Extra Low Voltage) ist der Übertragers Ü so gebaut, dass ein Kurzschluss zwischen Primärwicklung und Sekundärwicklung sowie deren Anschlüssen nicht möglich ist. Die Wicklungen des Primärstromkreises bzw. Sekundärstromkreises können nur dann übereinander liegen, wenn dazwischen eine doppelte oder verstärkte Isolierung als galvanische Trennung liegt. Alternativ können die Wicklungen über- oder nebeneinander in getrennten Isolierstoffkammern untergebracht werden. Die Sicherheitskleinspannung ist eine kleine elektrische Spannung, die aufgrund ihrer geringen Höhe - unter 25 Volt AC oder 60 Volt DC - und der Isolierung gegen Stromkreise höherer Spannung besonderen Schutz gegen einen elektrischen Schlag bietet.

Alle Komponenten der Ankopplung auf der Netzseite des Übertragers Ü sind für die Klemmspannung des Grobschutzes G ausgelegt.

Die empfindlichen Ein- und Ausgänge der Ankopplung an den digitalen und analogen Signalverarbeitungsbausteinen bzw. Klasse A/B Verstärker sind durch Feinschutzmaßnahmen in Form von Klemmdioden F1 zusätzlich geschützt. Diese sind so ausgelegt, dass sie das Kommunikationssignal, insbesondere das Powerlinesignal nicht beeinflussen.

Die in FIG. 4 dargestellte und in der Schnittstelle SS1 zu den Leuchtmitteln angeordnete Schutzbeschaltung ÜS schützt das System vor Pulsen, die von der Seite der Leuchtmittel kommend auf das System einwirken. Hier sei als Beispiel ein Blitzeinschlag in das Gehäuse der Leuchte aufgeführt, der eine Überspannung generiert, die vom Leuchtmittel auf das Betriebsgerät/Vorschaltgerät einwirkt. Der Schutz ist in der gleichen Art wie der Grobschutz G am Eingang des Betriebsgeräts /Vorschaltgeräts aufgebaut, d.h. ebenfalls mit Filter und Feinschutz (Klemmdiode).

Die Schutzbeschaltung ÜS erfüllt bei SELV-Lampenausgängen (als Stromquelle dient hierbei der Übertrager Ü /Sicherheitstransformator) weiterhin die Aufgabe, die maximale Ausgangsspannung auf ein sicheres Niveau zu begrenzen. Dies ist vor allem im Fehlerfall notwendig, da dann kurzzeitig höhere Spannungen auftreten können, bis interne Sicherheitsmechanismen wirken.

Im Falle einer LED-Beleuchtungsanwendung sind die LEDs meist in Serie geschaltet und werden mit einem konstanten Strom betrieben, damit sie eine optimale, einheitliche Helligkeit, Farbe und Intensität erreichen. Konstantstromquellen verfügen (bei einem offenen Stromkreis) über eine maximale Ausgangsspannung. Die vorzusehenden Sicherungen müssen robust genug sein, um Stromstöße mit üblicherweise 3 kA, aber auch bis 6 kA, standzuhalten. Außerdem müssen sie schnell genug reagieren, um den Ausfall von Bauteilen zu verhindern. Kriterien für die Auswahl der vorgeschalteten Sicherung am AC-Eingang sind unter anderem Spannung, Stromstärke und der $I^2t$-Wert.

Zum Schutz der Benutzer des Betriebsgeräts/Vorschaltgeräts vor elektrischem Schlag sind sämtliche Schnittstellen, d.h. die Leuchtenansteuerung und die Kommunikationsschnittstellen (außer PLC) vom Versorgungsnetz getrennt ausgeführt. Dabei kann die Schnittstelle für die Lampenansteuerung den Regeln für Sicherheitskleinspannung (SELV) durch:

- Potentialtrennung aller Schnittstellen, inklusive der Lampenansteuerung, vom Versorgungsnetz,
- Trennung der Schnittstellen sowohl mit Übertragern als auch optisch,
- Spannungsversorgung der zusätzlichen Module und Geräte erfolgt ebenfalls potentialgetrennt,
- sichere Trennung und Begrenzung aller Ausgangsspannung auf kleiner gleich 120VDC, zum Einhalten der SELV (safety extra low voltage)-Kriterien,

entsprechen.

Wird keine Funktion des Betriebsgeräts/Vorschaltgeräts benötigt, schaltet der Mikroprozessor MP des Betriebsgeräts/Vorschaltgeräts aus, indem er die Hilfsspannungsversorgung deaktiviert. In diesem Modus ist ausschließlich die ECO Mode Schaltung in Betrieb. Dieser Betriebsmodus erlaubt einen sehr niedrigen Energieverbrauch (<100 mW) ohne die Netzspannung abschalten zu müssen, wobei die Schutzwirkung im aktiven ECO Mode erhalten bleibt.

Für die Versorgung der ECO-Mode Schaltung sind drei Möglichkeiten vorgesehen:

1. Spannungsversorgung über eine DC - Spannung, welche auch den Mikroprozessor MP des Betriebsgeräts/Vorschaltgeräts versorgt.

Die Spannungsversorgung steht nur im normalen Betriebszustand zur Verfügung. Mit dem Ausschalten der Hilfsspannungsversorgung wird auch diese Spannungsversorgung abgeschaltet.

2. Spannungsversorgung über eine hochohmige Schaltung mit der Netzspannung.

Die hochohmige Verbindung begrenzt dabei den Stromfluss. Außerdem muss der Wert der Spannungsversorgung begrenzt werden, um die ECO - Mode-Schaltung vor Schäden zu schützen. In der vorliegenden Schaltung wird zwecks Bauteilreduktion die Monitoring Schaltung/Überwachungsschaltung 3 (siehe FIG. 2) für den Blitzschutz (Grobschutz G) gleichzeitig für die Spannungsversorgung der ECO-Mode Schaltung benutzt.

3. Spannungsversorgung über Kondensator.
Im eingeschalteten Betriebsfall (Punkt 1) oder im Fall der Versorgung mit Netzspannung (Punkt 2) lädt sich ein Kondensator auf. Sobald nun die Eingangsspannungen abgeschaltet sind, kann sich die ECO - Mode Schaltung längere Zeit aus dem Kondensator versorgen.

Für das Verlassen des ECO - Mode stehen verschiedene Möglichkeiten zur Verfügung:

1. Zeitgesteuert: Hierbei stellt der Mikroprozessor MP des Betriebsgeräts/Vorschaltgeräts den ECO - Mode auf eine bestimmte Zeit ein. Nach Ablauf dieser Zeit schaltet der ECO - Mode das System (wieder) ein.
2. Bei einen Power-Cycle (Aus- und wieder Einschalten der Netzspannung) schaltet sich das Betriebsgeräts/Vorschaltgerät automatisch wieder ein. Dies ist auch der Fall insofern vor dem Ausschalten der ECO - Mode aktiv war.
3. Ein an das Betriebsgeräts/Vorschaltgerät angeschlossenes Kommunikationsmodul (z.B. Bluetooth-, Ethernet-Modul, etc.) kann den Betriebszustand von ECO-Mode auf den Normalbetrieb schalten.

Für die Kommunikation besitzt jedes Betriebsgerät/Vorschaltgerät vorzugsweise eine Powerline Kommunikationsschnittstelle, welche sich für folgende Aufgaben eignet:

- Steuerung des Betriebsgeräts/Vorschaltgeräts (Leuchtmittel An-, Ausschalten und Dimmen etc.),
- Abfragen von Statusmeldungen des Betriebsgeräts/Vorschaltgeräts,
- Initialisierung der Parameter des Leuchtmittels,
- Update der Firmware des Betriebsgeräts /Vorschaltgeräts.

Zusätzlich zur Powerline-Kommunikation können weitere Kommunikationsschnittstellen zur Verfügung stehen. Die nachfolgende Liste zeigt einige Beispiel, ist aber nicht als vollständig anzusehen:

- Bluetooth
- Ethernet
- Lichtwellenleitertechnik (LWL)
- Wireless LAN (WLAN)
- Digital Addressable Lighting Interface (DALI)
- 1-10 V Schnittstelle
- PWM (Pulsweitenmodulation)

Alle dieser Schnittstellen dienen für folgende Aufgaben:

- Steuerung des Vorschaltgeräts (Leuchtmittel An-, Ausschalten und Dimmen etc.)
- Abfragen von Status Meldungen des Vorschaltgeräts
- Initialisierung der Parameter des Leuchtmittels
- Update der Firmware des Vorschaltgeräts
- Anschluss von externen Geräten (z.B. Überwachungskamera, Bewegungsmelder, Sensoren und Aktoren, etc.)

Das Betriebsgerät/Vorschaltgerät kann zwischen den einzelnen Kommunikationsschnittstellen (z.B. zwischen WLAN und Powerline) als Gateway arbeiten. Damit ist es möglich verschiedene Netzwerktopologien miteinander zu verbinden. Durch eine derartige Verbindung verschiedener Netzwerke erhöhen sich die Kommunikationsreichweiten.

Die Ethernet-Schnittstelle besitzt zwei Anschlüsse und arbeitet auch als Ethernet-Switch. Somit können am Betriebsgerät/Vorschaltgerät bis zu zwei unterschiedliche Ethernet-Geräte angeschlossen werden, die somit auch ohne den Mikroprozessor MP des Betriebsgerät/Vorschaltgeräts miteinander kommunizieren können.

Der Kommunikationsweg zwischen dem Betriebsgerät/Vorschaltgerät und den Kommunikationsmodulen ist von dem Versorgungsspannungsnetz galvanisch getrennt. Ebenso können diese Schnittstellen zusätzlich über eine galvanisch getrennte Versorgungsspannung vom Betriebsgerät/Vorschaltgerät versorgt werden.

Das kompakt konstruierte Gehäuse (in der Zeichnung nicht dargestellt) gewährleistet eine Vielzahl an Anschluss- sowie Systemvariationen des Betriebsgerät/Vorschaltgeräts. Die verschiedenen Variationen der Gehäusekonstruktion ermöglichen eine einfache, kostengünstige Herstellung ohne Zusatzkosten sowie eine komplexe Lösung. Ebenso ermöglicht die Konstruktion eine einfache und schnelle Montage der Bestandteile (z.B. der bestückten Leiterplatten, Kühlkörper und Trennwände) des Betriebsgeräts/Vorschaltgeräts in das Gehäuse. Zudem erfüllt das Gehäuse alle gültigen Vorgaben gegen direktes Berühren und Eindringen von Flüssigkeiten und Kleinstpartikeln.

Das Gehäuse des Betriebsgeräts/Vorschaltgeräts besteht aus zwei symmetrischen Halbschalen (in der Zeichnung nicht dargestellt), die mittels Schnapptechnik, d.h. durch Zusammenführen mehrere Schnappverschlüsse verbunden bzw. geschlossen werden. Daraus ergibt sich eine einfache und sichere Montage. Die Schnappverschlüsse der Halbschalen befinden sich außerhalb des abgedichteten Bereichs.

Das Gehäuse ist so ausgelegt, dass je nach Anwendungsgebiet verschiedene Baugruppen (Controller-Board mit Mikroprozessor MP, unterschiedliche Ballastcontrol- und Kommunikationsmodule) darin verbaut sein können. Flächige sowie seitliche Befestigungsbohrungen im Überstand der Halbschalten ermöglichen variable Einbaulagen des Geräts.

Je nach Kabeleinführung (mittels Kabelverschraubung oder Durchführungstülle) und Art des Vergusses (eingefüllte Vergussmasse) lässt sich eine Schutzart von bis zu IP68 erreichen. Der Verguss einer Baugruppe in einer Halbschale kann variabel stufenweise (1 bis 4 Stufen) erfolgen. Hierdurch lässt sich die Menge der Vergussmasse je nach Aufbau der verwendeten Baugruppe minimieren und für deren Schutz optimieren. Optional lässt sich auch das gesamte Gehäuse vergießen, wobei zwar mehr Vergussmasse nötig ist, sich jedoch der Herstellungsaufwand verringert.

Die Halbschalen besitzen in den Seitenwänden eine Nut. Hier lässt sich optional eine Dichtschnur einlegen, um eine Dichtheit des Gehäuses zu erreichen. In diesem Fall kann das Vergießen entfallen.

Durch im Gehäuse eingelegte Kühlbleche (in der Zeichnung nicht dargestellt), erfolgt ein effizientes Wärmemanagement für Komponenten mit höherer Wärmeentwicklung durch optimierte Wärmeabgabe an die Umgebung. Zum Ausgleich unterschiedlicher Bauteilhöhen lassen sich zudem optional Kühlblöcke in das Gehäuse einlegen. Durch Verwendung einer Wärmeleitfolie, welche an der Gehäuseaußenseite, in einer, in den Halbschalen eingeprägten Vertiefung aufgeklebt ist (in der Zeichnung nicht dargestellt), lässt sich die Wärmeabgabe noch weiter verbessern, indem an dieser Stelle eine direkte thermische Kopplung mit dem Befestigungsträger erfolgt.

Um durch Potentialanbindung eine verbesserte EMV-Schirmung zu erreichen lassen sich die Kühlbleche per Gewindebolzen und Schraube mit den Leiterplatten verbinden. Optional kann eine Potentialtrennung oder -bindung zwischen Schutzerde (auf Netzeingangsseite) und den Funktionserden (auf Leuchtmittel- und Schnittstellenseite) erfolgen.

In den Halbschalen sind Führungen für die Verbindungsstecker (in der Zeichnung nicht dargestellt) eingearbeitet, wodurch die korrekte Ausrichtung der Baugruppen (Controller-Board und ggf. Kommunikationsmodul bzw. Ballastcontrol) in der jeweiligen Halbschale gewährleistet ist. Da hierdurch auch ein Toleranzausgleich der Leiterplattenfertigung erfolgt ist eine weitere Befestigung der Baugruppen und Stecker nicht erforderlich. Die Führungen sind voreilend, so dass ebenso eine Ausrichtung zwischen den beiden Halbschalen erfolgt.

Durch die Halbschalen ergibt sich einen Funktionstrennung des Gerätes: Eine Halbschale enthält das Controller-Board mit Mikroprozessor und optional eine universelle Schnittstelle für zusätzliche Varianten von Kommunikationsmodulen. Die andere Halbschale enthält die Ballastcontrol, dessen Model abhängig von der Leistungsklasse des verwendeten Leuchtmittels ist. Diese Funktionstrennung ermöglicht eine einfache Anpassung des Vorschaltgeräts an das zu verwendete Leuchtmittel, Leistungsklassen, Potentialtrennung und Schutzklasse sowie eine einfache und effiziente (schnelle) Reparatur mit optimierte Ersatzteilhaltung für die Geräte.

Auf den Leiterplatten können beispielsweise bis zu acht Statusanzeigen/Anzeigemittel (SMD-LEDs) direkt verbaut sein, da die Lichtleitung durch einfache Lightpipes in der Vergussmasse direkt zur Gehäuseaußenwand erfolgt. Hierzu befinden sich in den Gehäusehalbschalen an den Stellen, wo die Lightpipes auf die Gehäusehalbschale treffen, Führungsringe und Vertiefungen in der Gehäusewand (in der Zeichnung nicht dargestellt). Durch diese Vertiefungen ist bessere Sichtbarkeit der Statusanzeigen gegeben. Die Führungsringe dienen zur Lichtleitung sowie Justierung der Lightpipe und gleichzeitig zum Schutz vor unbeabsichtigtem Einfließen der Vergussmasse in den Lichtkanal.

FIG. 5a zeigt als Beispiel das Betriebsgerät/Vorschaltgerät (beziehungsweise dessen Controller Board DLCB mit Mikroprozessor MP) und dessen Einbindung in einer Installation. An der Lampenschnittstelle K1, K2, K3, K4 (d.h. Kanal 1-4) sind beispielsweise vier LED-Leuchtmittel 12 angeschlossen, welche von einer im Betriebsgerät/Vorschaltgerät befindlichen Gleichstromquelle mit Energie versorgt werden. Die optionale Schnittstelle DL-SS ist in diesem Fall für ein Ethernet-Modul, wobei alternativ auch ein DALI-, BLE-(Bluetooth Low Energy, stromsparender Modus von Bluetooth), PWM (Pulsweitenmodulation)- oder 1-10V- Modul (siehe punktierte Linie DALI, BLE, PWM, 1-10V) möglich wäre. An der einen Schnittstelle des Ethernet-Moduls ist eine Überwachungskamera Video (1) angeschlossen, an der anderen ein Wi-Fi Adapter Wi-Fi (x). Die Spannungsversorgung beider Geräte erfolgt über passives Power-over-Ethernet (POE*).

Weiterhin ist es im Rahmen der Erfindung möglich, isolierten und nicht isolierten Aufbau zu variieren (siehe FIG. 5a strichpunktierte Linie zu PE und die Strichlinie "Option"), was nachfolgend anhand FIG. 5b näher erläutert wird. FIG. 5b zeigt die Anordnung von Primär-Überspannungsschutz sowie Sekundär-Überspannungsschutz in einem isolierten Gehäuse, vorzugsweise mit 3-poligen GAP (gas disturber tube, siehe auch FIG. 2: Ableiter 1) für jede der beiden Versorgungsleitungen L, N. Die Potentialtrennung erfolgt durch die Wandler Ü in der Stromversorgung STR. Die Anordnung erlaubt den Potentialausgleich von Sekundär nach Primär über die Verbindung GAP A / Pkt. 2 nach GAP B / Pkt. 2 (Kopplung über Widerstand F erfolgt nur zum Potentialausgleich im Ableitfall), oder separatem Erdanschluss.

Weiter ist es auch möglich die Primärseite mit der Netzerde PE zu verbinden, d.h. GAP A / Pkt. 2 keine Verbindung zu GAP B / Pkt. 2 und stattdessen GAP B / Pkt.2 und als Funktionspotential FP für die Sekundärseite zur Ableitung bzw. Bezugspotential zu nutzen. Der Überspannungsschutz der Primärseite wird durch GAP A erreicht, Sekundär durch GAP B. Die Kombinationsmöglichkeiten sind nachfolgender Tabelle zu entnehmen:

| System - Funktion | Geh. A / Aufbau | Geh. B | Prot. Prim | Verb. (P-S) | Prot. Sek. | Last / Elektronik | Geh. C / Aufbau | Geh. D / Aufbau |
|---|---|---|---|---|---|---|---|---|
| ISO | ISO | ISO | k. A. | verb. | k. A. | ISO | ISO | ISO |
| ISO | ISO | ISO | E-verb. | k. verb. | k. A. | X | X | X |
| ISO | ISO | ISO | E-verb. | k. verb. | FP-verb. | X | X | X |
| ISO | E-verb. | ISO | E-verb. | verb. | k. A. | ISO | ISO | ISO |
| ISO | E-verb. | ISO | k. A.. | k. verb. | FP-verb. | ISO | ISO | ISO |
| N-ISO | E-verb. | ISO | E-verb. | verb. | FP-verb. | X | X | X |
| | | ISO | | | | | | |

Dabei bedeutet:

Geh.    Gehäuse

ISO    isoliert

N-ISO    Nicht isoliert

k. A.    kein Anschluss

E    Erde

FP    Funktions Potential (Erde)

P    Primär

Prot.    Protektion / Schutz

S    Sekundär

verb.    verbunden / Verbindung

k. verb.    Keine Verbindung

Bei Geräten der Schutzklasse II oder III ist eine Trennung von Funktionserde (Funktions Potential (Erde) FP) und Schutzerde (Prot.) vorhanden. Die Schutzerde eines Verbrauchers darf, bis auf wenige Ausnahmen, nicht an die Funktionserde angeschlossen werden, da die Funktionserde nicht dafür vorgesehen ist, Schutzleiter-Funktionen zu übernehmen; umgekehrt ist dies jedoch möglich. Ein Anschluss des Schutzleiters an den Funktionserdeanschluss (FP) kann die Personensicherheit nicht gewährleisten jedoch ist eine leitende Verbindung zwischen Schutzerde (Prot.) und Funktionserde (FP) an verschiedenen Stellen möglich. Die Funktionserdung (FP) ist ein funktioneller Teil und für den regulären Betrieb eines Geräts wesentlich, während die Schutzerdung (Prot.) zum Schutz von Personen vor einem elektrischen Schlag dient und in einem Fehlerfall Schutz bietet.

FIG. 6 beschreibt ein Anwendungsbeispiel für den Fall, dass die Versorgung des Schnittstellenmoduls für die Überwachungskamera Video nicht ausreicht. Gezeigt ist zweimal das Betriebsgerät/Vorschaltgerät (beziehungsweise deren Controller Boards DLCB mit Mikroprozessor MP), jeweils mit Ethernet-Modul als optionale Schnittstelle DL-SS, wobei beide Vorschaltgeräte über eine Ethernet-Schnittstelle kaskadiert (siehe Leitung K) sind. An dem oberen Vorschaltgerät sind wie schon in FIG. 5 beschrieben, an allen vier Kanälen K1 bis K4 der Lampenschnittstelle jeweils ein LED-Leuchtmittel 12 angeschlossen. An der noch freien Ethernet-Schnittstelle des oberen Betriebsgeräts/Vorschaltgeräts sind zwei kaskadierte Wi-Fi Adapter, und daran mögliche Sensoren und/oder Aktoren (z.B. Helligkeitssensor, Wettersensor, etc.) angeschlossen. Die Spannungsversorgung aller dieser Geräte erfolgt über passives Power-over-Ethernet POE.

Bei dem unteren Betriebsgerät/Vorschaltgerät hingegen ist an der noch freien Ethernet-Schnittstelle eine Überwachungskamera Video angeschlossen, welche in diesem Fall einen stärkeren Verbraucher darstellen soll. Um den Energieverbrauch dieser Überwachungskamera Video über Power-over-Ethernet POE sicherzustellen, ist die Gleichstromquelle, welche im anderen Fall die an den vier LED-Kanälen angeschlossenen LED-Leuchtmittel 12 versorgt, dazu verwendet, die Überwachungskamera Video mit Energie zu versorgen, da die Versorgung des Schnittstellenmoduls hier alleine nicht ausreichen würde.

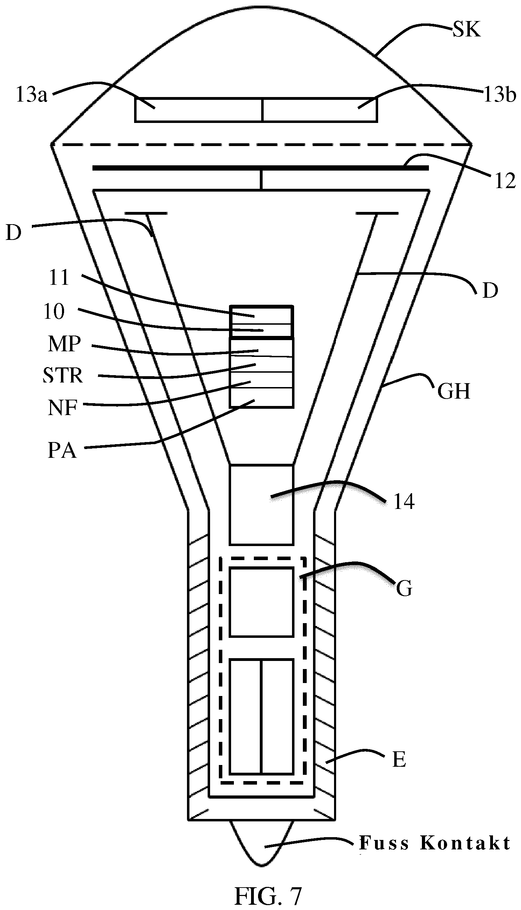

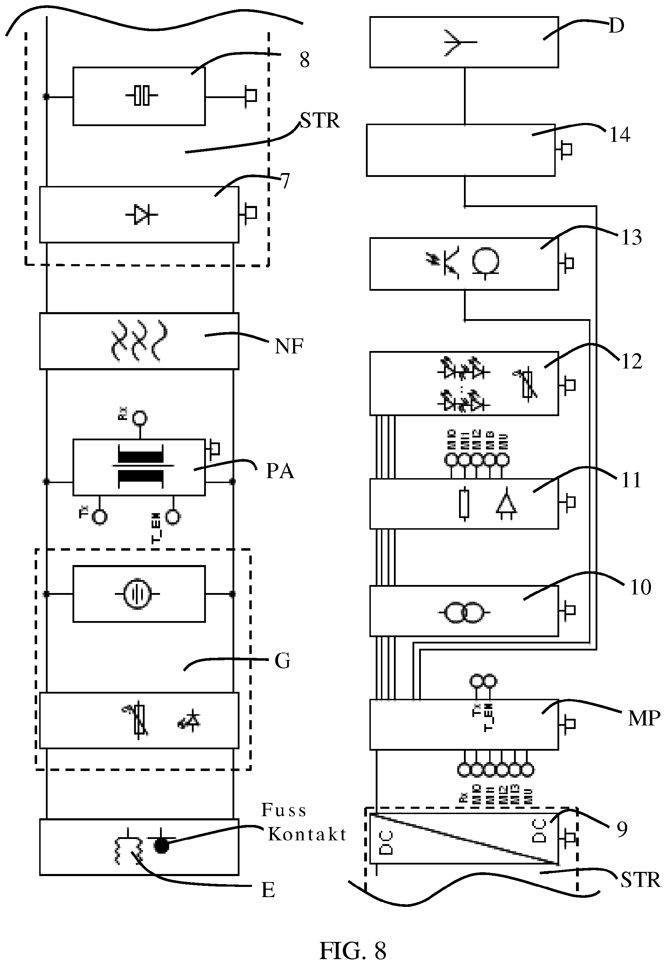

FIG. 7 und FIG. 8 zeigen eine zweite Ausgestaltung eines erfindungsgemäßen Betriebsgerät/Vorschaltgerät integriert in eine LED-Lampe für 230V/115V mit Elektronik im Lampenfuß E, z.B. E-Gewinde einer handelsüblichen Glühlampe, zur Realisierung eines Gesamtgeräts. Das Gesamtgerät integriert eine LED-Lampe 12 und ein Gateway, wobei die für die Lampenfunktion notwendige Elektronik für den Betrieb der LEDs 12 im Gerät enthalten ist, deren Funktion jedoch bekannt ist und daher nicht weiter beschrieben wird. Für die identischen Baugruppen/Module werden in FIG. 7 und FIG. 8 die gleichen Bezugszeichen wie für die, insbesondere anhand FIG. 1 beschriebene Ausgestaltung eines erfindungsgemäßen Betriebsgerät/Vorschaltgerät benutzt.

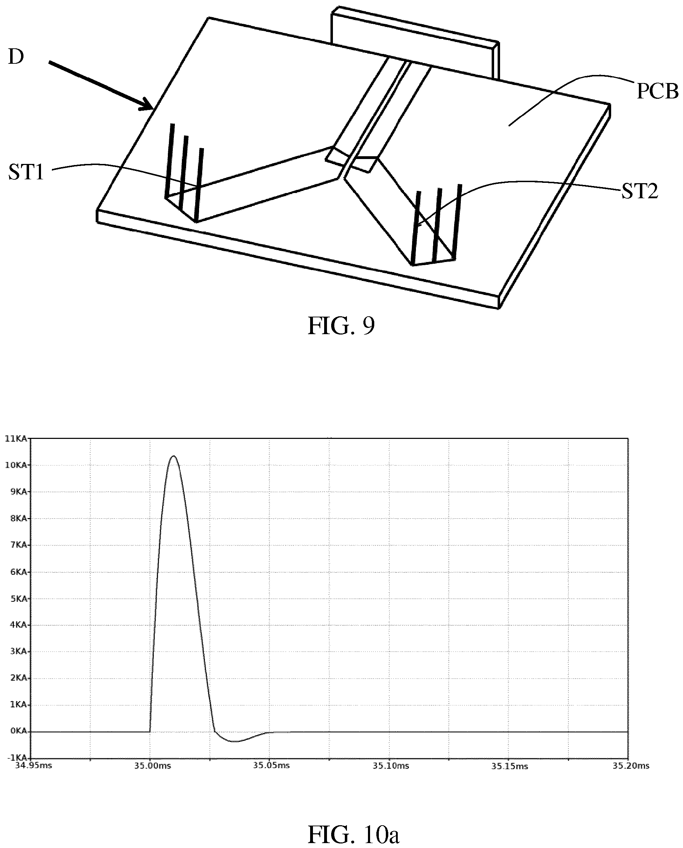

Wie die konstruktive Ausgestaltung gemäß FIG. 7 zeigt, besteht das Gesamtgerät aus einem "Leuchtkörper" und einem Gerätefuß E mit Anschlusssockel (E-Gewinde und Fußkontakt . Im oberen Lampenteil mit der Schutzkappe SK sind die LEDs 12 und eine Optik zur Lichtverteilung 13a (Diffusor) sowie Sensoren 13b (insbesondere Helligkeit, Farbe) enthalten, der untere Teil beinhaltet die gesamte Elektronik, sowohl für die LED-Ansteuerung, als auch für die PLC- und BLE-Kommunikation. Durch diese räumliche Anordnung wird die Temperaturbeeinflussung der Elektronik verringert. Der dazwischen liegende Raum wird vorzugsweise für einen Bluetooth-Empfänger und Balun 14 sowie einer Antenne D genutzt, wobei die Gehäuseform es ermöglicht, auf überraschend einfache Art und Weise einen entsprechenden Öffnungswinkel des gewinkelten Dipols D zu realisieren (im Einzelnen hierzu siehe FIG. 9).

Das untere Ende des Gehäuses GH der Lampe ist als Schraubgewinde-Anschlusssockel E ausgeführt. Dabei kommen Standardgewinde wie bei herkömmlichen Glühlampen mit z.B. E27-Gewinde zur Anwendung. Weitere Anschlüsse sind nicht notwendig. Dies erleichtert die Installation durch den Anwender.

Die Elektronik implementiert weiterhin ein Funk-Kommunikationssystem, hier wird aufgrund des sehr geringen Energieverbrauchs und einer weiten Verbreitung Bluetooth-Low-Energy vorgesehen. Dieser Funkstandard wird durch alle aktuellen Smartphones und sehr viele Laptops direkt unterstützt.

Die elektrische Verschaltung der Baugruppen miteinander ist aus dem Blockschaltbild gemäß FIG. 8 ersichtlich. Die Grobschutzschaltung G am unteren Ende des Gehäuses GH der Lampe umfasst neben einer Thermosicherung eine Anzeige, welche auch für die funktionale Sicherheit verwendet wird. Durch diese räumliche Anordnung wird ein blendfreies Ablesen der Anzeige, insbesondere in Form von LED's ermöglicht. Die Powerline Ankopplung PA weist erfindungsgemäß den Übertrager Ü und die erste Feinschutzschaltung F1 auf. In der Stromversorgung STR bzw. Spannungsversorgung des Gesamtgeräts sind in Reihe liegend ein Brückengleichrichter 7, ein Zwischenkreiskondensator 8 und ein Gleichspannungswandler (DC/DC-Wandler) angeordnet. Der Mikroprozessor MP weist die Anschlüsse Rx (siehe Sekundärseite vom Übertrager Ü der Powerline Ankopplung PA), die Anschlüsse M0, M1, M2, M3, MU (welche mit den Ausgängen einer Messwerterfassung 11 zum Regeln, Steuern und Überwachen von Konstantstromquellen 10 verbunden sind) und die Anschlüsse Tx, T_EN zur Primärseite vom Übertrager Ü der Powerline Ankopplung PA auf. Weiterhin folgen in Reihe hierzu die Konstantstromquellen 10, die Messwerterfassung 11 (mit den Anschlüssen M0, M1, M2, M3, MU zum Mikroprozessor MP), die LED-Leuchtmittel 12, die Sensoren 13, der Bluetooth-Empfänger und Balun 14 sowie die Antenne D.

Für das Funksystem des Gesamtgeräts wird eine effiziente Antenne benötigt, die dennoch möglichst alle Raumbereiche gleichermaßen abdeckt und daher keine Richtwirkung aufweisen soll und welche näher anhand FIG. 9 beschrieben wird. Gemäß der Erfindung kommen im Gehäuse GH eine Leiterplattenantenne mit zusätzlichen Stiften D zum Einsatz. Durch die Stifte wird eine Homogenisierung der Richtcharakteristik erreicht, die breiten Leiterbahnen sorgen für eine ausreichende nutzbare Bandbreite, aber auch für eine höhere Toleranz gegen Umgebungseinflüsse.

Die funktionalen Ausgestaltungen des Gesamtgeräts sind:

a) Implementierung einer Gateway-Funktion zwischen BLE und PLC,
b) Nutzung von BLE oder PLC zur Steuerung/Überwachung der Lampe,
c) Aufbau eines PLC Netzwerks zur Anbindung an weitere Steuergeräte ohne BLE,

d) Datenaustausch mit Aktoren und Sensoren mittels PLC oder BLE, Aufnahme von Daten verschiedener Sensoren (z.B. Helligkeit, aber auch Schalter) mittels BLE,

e) Aufnahme von Zählerdaten von Energiezählern mit BLE, Weitergabe von Zählerdaten an Bridge zu ext. PLC-Netzwerk des Stromnetzbetreibers z.B. für Abrechnungszwecke,

f) Konfiguration des Netzwerks / Systems,

g) Anwendung von Sicherheitsfunktionen, insbesondere Authentifizierung, Verschlüsselung, Integritätsprüfung,

h) Software-Aktualisierung mittels PLC oder BLE,

i) Integration von Diagnose-Funktionen, hierbei verschiedene Detailgrade für entsprechende Nutzergruppen und

j) ggf. redundanter Übergang BLE-PLC bei Nutzung mehrerer Gesamtgeräte im gleichen Raum, auch zur Verbesserung der Funkabdeckung,

welche nachfolgend im Einzelnen beschrieben werden.

zu a)

Das Gesamtgerät ermöglicht einen bidirektionalen Datenaustausch zwischen dem Funk- und PLC-System. Damit können verschiedene Geräte kommunikativ miteinander verknüpft werden, die jeweils nur eines der beiden Systeme unterstützen. Weiterhin kann jedes System zur Reichweitenerweiterung des anderen dienen. Aufgrund der geringen Reichweite von BLE wird in der Regel PLC für eine Kommunikation über die Grenzen eines Raumes hinaus verwendet werden.

zu b)

Neben der Gateway-Funktion stellt die Steuerelektronik für die LEDs auch einen Datenendpunkt dar, der aus beiden Kommunikationssystemen erreichbar ist. Dies ermöglicht zum einen, den Schaltzustand und die Helligkeit der Lampe, zum anderen deren Status von außen zu beeinflussen oder zu überwachen. Hierzu kann der Datenaustausch mit Handy via BLE zur Steuerung der Geräte (Lampen, etc.) und zur Anzeige von Mess- / Sensordaten / Systemzustände erfolgen.

zu c)

In einer Mischinstallation verschiedener PLC-fähiger Geräte können diese durch das Gateway auch mittels BLE gesteuert, überwacht und konfiguriert werden, ohne selbst BLE-Funktechnik aufzuweisen. Umgekehrt können reine BLE-Geräte mit Hilfe des Gateways auch mittels PLC gesteuert, überwacht und konfiguriert werden. Dies bietet insbesondere den Vorteil, von einer Stelle aus das gesamte Hausautomatisierungssystem via BLE kontrollieren zu können, auch wenn die Funkreichweite hierfür direkt nicht ausreichend wäre.

zu d)

Sensoren wie z.B. Schalter, Helligkeitssensoren, Temperatursensoren und Aktoren wie z.B. Lampen, Steckdosen, Heizkörperventile, Rollladen können über PLC oder BLE angebunden werden. Die Wahl des Kommunikationssystems beeinflusst dabei aufgrund der Gatewayfunktion nicht die funktionalen Möglichkeiten, kann also rein anhand der vorhandenen Infrastruktur hinsichtlich Stromversorgung getroffen werden. So werden an Stellen mit Netzversorgung bevorzugt PLC-Komponenten verbaut, andere dagegen per Funk angebunden und ggf. mit Batterien versorgt.

zu e)

Der Datenaustausch beschränkt sich nicht nur auf Sensoren, die für die Hausautomatisierung verwendet werden. Durch die sichere Weiterleitung der Daten können auch Daten von Verbrauchszählern über Funk erfasst und durch das PLC-System an einen Weitergabepunkt nach extern übertragen werden. Dies erlaubt, im Haus frei platzierte Zähler, wie z.B. Wasserzähler im Bad oder Gaszähler im Keller mit geringem Aufwand in die Fernablesung zu integrieren.

Die Kommunikationsverbindung zur Abrechnungsstelle kann z.B. durch eine Bridge erfolgen, die im Zählerkasten oder in der Hauseinspeisung installiert ist. Je nach Ausstattung kann diese auch im elektronischen Stromzähler mit integriert sein.

zu f)

Das Smartphone oder alternativ der Laptop mit BLE-Schnittstelle werden zur Steuerzentrale des kompletten Automatisierungssystems. Da diese Schnittstelle in den fast allen aktuellen Geräten bereits enthalten ist, steht dem Benutzer mit hoher Wahrscheinlichkeit ein geeignetes Gerät unmittelbar zur Verfügung und muss nicht separat für die Automatisierungsanlage angeschafft werden. Durch die Gateway-Funktion kann über diesen Weg nun nicht nur die Funk-Komponenten erfasst werden, sondern die Steuerung, Überwachung und Konfiguration des Gesamtsystems einschließlich aller PLC-Komponenten wird ermöglicht.

zu g)

Die Kommunikation sowohl via BLE, als auch via PLC wird nach dem Stand der Technik hinsichtlich IT-Sicherheit geschützt. Dies beinhaltet insbesondere auch die Verarbeitung von Zählerdaten, damit diese für Abrechnungszwecke verwendet werden können. Aber auch die Kontrolle des Hausautomatisierungssystems bedarf guter Schutzmechanismen, um Eingriffe von außen zu verhindern.

zu h)

Eine aktualisierte Firmware kann über beide Kommunikationssysteme eingespeist und verteilt werden, so dass alle Geräte im Gesamtsystem erreicht werden.

zu i)

Durch Integration detaillierter Diagnose-Funktionen können zahlreiche Parameter im System erfasst werden, um den Zustand und die Reserven der Kommunikationssysteme zu beurteilen und bei Problemen Hinweise auf mögliche Fehler/Defekte zu erhalten. Dies schließt die Steuerelektronik für die LEDs sowie angebundene Geräte mit ein. Diese Diagnosedaten können entweder vom Nutzer selbst ausgewertet werden, oder durch einen Fachbetrieb beurteilt werden, abhängig von der Art des Fehlers und dem Ausbildungsstand des Nutzers.

zu j)

Die Gateway-Funktion zwischen Funk und PLC erlaubt die Nutzung von Gateways für eine einfache Erweiterung der Funkreichweite durch Installation weiterer Gesamtgeräte am Rand der Abdeckungsbereichs.
Alternativ können mehrere Gesamtgeräte im selben Raum zur Erzielung von Redundanz sinnvoll sein, sowohl hinsichtlich der Funkverbindung selbst, aber auch für den Datenaustausch mit dem PLC-System.
Im Rahmen der Erfindung sind andere Funk-Standards, wie beispielsweise ZigBee, WLAN, wMBus, für das Gerät alternativ auch denkbar, sofern diese entsprechend verbreitet und energiesparend betrieben werden können. Weiterhin kann eine Anpassung der Antenne an den Formfaktor des Gerätes erfolgen und je nach konstruktiver Gestaltung der Geräte auch andere Antennen benutzt werden. Auch kann eine Integration des Gateway in andere Geräte, z.B. Switch, LED-Driver, Meter o.ä, erfolgen. Insbesondere können die beschriebenen Funktionen des Gateways Funk-PLC neben Lampen auch in andere Geräte integriert werden, wobei dann deren Grundfunktion jeweils über die beiden Kommunikationswege kontrollierbar sind. Je nach Art des Gerätes entfällt dann der Vorteil der einfachen Installation durch den Verbraucher. An das Gesamtsystem können Geräte mit beliebigen Kombinationen der entsprechenden Kommunikationssysteme angebunden werden. Durch das Gateway stehen unabhängig davon alle Funktionen zur Verfügung. Insbesondere kann im Hinblick auf IoT die Steuerung verschiedener Verbraucher und Geräte außer Licht, z.B. Heizung, Thermostate o.ä. erfolgen. Dies gilt auch für den industriellen Bereich im Rahmen von IIOT.
Im Rahmen der Erfindung kann eine gewinkelte Dipolantenne auf einer Leiterplatte des Betriebsgeräts in Form einer Stiftleiste am Ende der Streifenleitung Anwendung finden (siehe im Einzelnen FIG. 9). Vorschläge hinsichtlich der Wirkung der Lage des Einspeisepunktes, Schlitzform, Schlitzgröße, Schlitzposition sind im Stand der Technik bekannt. Beispielsweise ist aus der DE 60 2005 002 799 T2 eine kleine gleichgerichtete Antenne bekannt. Um die Antenne in der Bandbreite eines RFID-Systems betreiben zu können, muss folglich das Problem der komplexen konjugierten Anpassung zwischen der Transponder-Antenne und dem Halbleiter-Chip gelöst werden. Die Antenne gemäß der DE 60 2005 002 799 T2 umfasst ein dielektrisches Substrat, eine auf dem oberen Teil des dielektrischen Substrats ausgebildete Metallschicht, einen als Muster auf der Metallschicht ausgebildeten Hauptschlitz, der eine Längsachse, zwei Enden und obere und untere Teile aufweist, eine Mehrzahl von Subschlitzen, die an das eine oder andere Ende des Hauptschlitzes angeschlossen sind und in einer vorgegebenen Richtung drehen, eine Mehrzahl von ersten Querschlitzen, die sich auf dem oberen Teil des Hauptschlitzes im rechten Winkel zum Hauptschlitz erstrecken, eine Mehrzahl von zweiten Querschlitzen, die sich unter einem unteren Teil des Hauptschlitzes im rechten Winkel zum Hauptschlitz erstrecken und einen innerhalb des Hauptschlitzes ausgebildeten Einlass eines Halbleiter-Chips. Der Hauptschlitz, die Mehrzahl von Subschlitzen und die Mehrzahl von ersten und zweiten Querschlitzen können eine konjugierte Widerstandsanpassung der kleinen Antenne ohne ein externes Anpassungselement durchführen. Die ersten und zweiten Querschlitze können durch die Längsachse des Hauptschlitzes in jeweils zwei symmetrische Gruppen aufgeteilt sein und die vorgegebene Richtung kann rechtsdrehend oder linksdrehend sein. Die kleine Antenne weist einen verbesserten RCS (Radar Cross Section) in einer Betriebsbandbreite eines Transponders auf, ohne das Strahlungsdiagramm, die Polarisierungsreinheit usw. der Antenne nachteilig zu beeinflussen.

Weiterhin ist aus der DE 601 22 698 T2 eine verbesserte Mehrband-Planarantenne bekannt. Die Flachantenne umfasst eine im allgemeinen rechteckige leitfähige Platte, die durch ein erstes und zweites Paar gegenüberliegende Seiten abgegrenzt ist; eine Masseebene, ein dielektrisches Substrat zwischen der Platte und der Masseebene, einen Speisemechanismus zum Anlegen elektromagnetischer Signale an einen Speisepunkt, der sich auf der leitfähigen Platte befindet und einen oder mehrere Schlitze, die in der Platte gebildet sind, wobei jeder Schlitz von den Seiten der Platte beabstandet ist, wobei der Speisepunkt auf einer gedachten Linie durch eine Ecke und die Mitte der leitfähigen Platte angeordnet ist oder mit dieser übereinstimmt, ein erster Schlitz einen länglichen Körperabschnitt umfasst, der benachbart und parallel zu einer der ersten Seiten der Platte angeordnet ist. Weiterhin umfasst die Antenne einen zweiten Schlitz, der einen länglichen Körperabschnitt umfasst, der benachbart und parallel zu der anderen der ersten Seiten der Platte angeordnet ist, der erste Schlitz umfasst einen entsprechenden Fußschlitzabschnitt, der benachbart und parallel zu einer entsprechenden zweiten Seite der Platte angeordnet ist, wobei der zweite Schlitz einen entsprechenden Fußschlitzabschnitt umfasst, der benachbart und parallel zu den entsprechenden zweiten Seiten der Platte angeordnet ist. Die Antenne kann in einer Vielzahl von getrennten Frequenzbändern mitschwingen. Dies bedeutet, dass die Antenne zu einem Mehrbandbetrieb in der Lage ist, ohne dass zusätzliche Resonanzplatten, Kurzschlussstifte, passende Schaltkreise oder mehrere Speisepunkte benötigt werden. Der Speisemechanismus ist so ausgelegt, dass er der leitfähigen Platte eine direkte Einspeisung bereitstellt alternativ kann die Platte durch indirekte Kopplung gespeist werden. Vorzugsweise ist die Antenne aus Mikrostreifen gebildet. Bei einer bevorzugten Ausführungsform weist die leitende Platte eine im Allgemeinen rechteckige Form auf und umfasst einen ersten und einen zweiten Schlitz, jeweils einen auf beiden Seiten des Speisepunktes, wobei jeder Schlitz einen länglichen Körperabschnitt mit einem jeweiligen Fußabschnitt an beiden Enden des Körperabschnitts oder benachbart zu diesen aufweist, die Schlitze so ausgelegt sind, dass die jeweiligen länglichen Körperabschnitte im Wesentlichen parallel im Verhältnis zu einem Paar gegenüberliegender Kanten der Platte angeordnet sind und dass sich die jeweiligen Fußabschnitte in nächster Nähe zu dem anderen Paar gegenüberliegende Plattenkanten befinden. Vorzugsweise besteht das eine Paar gegenüberliegende Plattenkanten aus den Plattenkanten, die während der Resonanz in einem Frequenzband elektromagnetische Energie abstrahlen, wobei die leitfähige Platte primär dafür konstruiert ist, in Bezug auf das Frequenzband mitzuschwingen. Der erste und zweite Schlitz ist im Wesentlichen I-förmig und die jeweiligen Fußabschnitte sind so ausgelegt, dass sie im Wesentlichen parallel zu den anderen gegenüberliegenden Plattenkanten angeordnet sind.

Weiterhin ist aus der DE 602 16 670 T2 eine Antenne mit relativ hoher gemittelter Mustergewinnzahl (Pattern Averaged Gain, PAG) bekannt. Die Antenne umfasst

- ein erstes Element, das eine erste Länge in einer ersten Richtung aufweist und ein erstes Ende an einem Endpunkt seiner Länge, ein zweites Ende am anderen Endpunkt seiner Länge und einen Einspeisepunkt umfasst, wobei das erste Ende ein offener Kreis ist, und das zweite Ende geerdet ist,
- ein zweites Element, das entfernt vom ersten angeordnet ist und eine zweite Länge in der ersten Richtung besitzt und ein erstes Ende an einem Endpunkt seiner Länge und ein zweites Ende am anderen Endpunkt seiner Länge umfasst, wobei das erste Ende ein offener Kreis ist, und das zweite Ende ein offener Kreis ist; wobei die erste Länge A/4 der Resonanzfrequenz entspricht, und die zweite Länge A/2 der Resonanzfrequenz entspricht,
- das erste Ende des ersten Elements und das erste Ende des zweiten Elements liegen im Wesentlichen in einer Linie mit einer zweiten Richtung, die im Wesentlichen rechtwinklig zur ersten Richtung ist.

Eine Antenne gemäß den Ausführungsformen der Erfindung weist eine höhere PAG-Zahl als eine Antenne, die nur aus einem der zwei Elemente, die die Antenne bilden, besteht. Eine höhere PAG trägt direkt zu einer längeren Gesprächszeit/Batterielebensdauer bei und es muss eine geringere Leistung von der Antenne gesendet werden, um eine gewünschte Signalstärke an einem gegebenen entfernten Punkt zu erzielen.

Schließlich ist aus der DE 697 01 837 T2 eine logarithmisch periodische Antenne mit Mikrostreifenleiterspeisung bekannt. Eine Dipolbaugruppe der logarithmisch-periodischen Dipolantenne, hat einen Mittelpunktspeisungsleiter, der zwischen den beiden Dipolstreifenleitern angeordnet und mit einem Dipolstreifenleiterverbinder verbunden ist, der zwischen den beiden Dipolstreifenleitern angeordnet ist. Die logarithmisch-periodische Dipolantenne gemäß der DE 697 01 837 T2 setzt die Auswirkung der Zuleitung auf die Antennenleistung auf ein Minimum herab und schützt dieselbe vor Witterungseinflüssen, wodurch die Antenne robuster wird. Außerdem weist sie eine gute Impedanzanpassung zwischen den Dipolen und dem Eingangsanschluss, eine hohe Rückstrahldämpfung und ausgezeichnete Richtungseigenschaften auf, insbesondere im Frequenzband von 824 bis 894 MHz.

Die im Rahmen des erfindungsgemäßen Betriebsgeräts benutzte Antenne D ist in FIG. 9 dargestellt. Erfindungsgemäß ist diese als gewinkelter Dipol D mit mindestens einem Strukturelement, welches die Antenne in die 3. Dimension erweitert, ausgestaltet, welche differentiell angekoppelt ist. Insbesondere sind gemäß FIG. 9 zwei Stiftleisten ST1, ST2 mit jeweils drei Stiften ST1, ST2 vorgesehen, welche sich senkrecht zur Leiterbahn des gewinkelten Dipols D erstrecken. Durch die Auslegung der Antenne D als Winkeldipol, wird das Richtdiagramm in einer Ebene bereits näherungsweise kreisförmig. Durch das Hinzufügen der erfindungsgemäßen Strukturelemente, werden "Nullstellen" im räumlichen Richtdiagramm ausgeglichen.

Weiterhin soll die Antenne D eine ausreichende nutzbare Bandbreite aufweisen, insbesondere eine breitbandige Anpassung ermöglichen. Im Stand der Technik werden hierzu "dicke" Antennenleiter benutzt. Erfindungsgemäß wird dies realisiert durch breite Leiterbahnen einer Leiterplatte PCB und Benutzung einer 3er Stiftleiste anstatt eines Einzelstiftes, um den "dicken" Leiter bis in die 3. Dimension fortzuführen. Als Nebeneffekt ist dies für die Fertigung sogar eher einfacher als ein einzelner Stift. Der Öffnungswinkel des gewinkelten Dipols D liegt zwischen 60° und 80°, vorzugsweise bei ca. 60°, der Spalt zwischen den parallel verlaufenden breiten Leiterbahnen, welche sich jeweils in einer noch breiteren Leiterbahn des Winkelstücks fortsetzen, ist ca. die Hälfte der Leiterbahnbreite. Im Rahmen der Erfindung kann ein zusätzlicher Anschluss für eine externe Antenne (insbesondere für Bluetooth) vorgesehen werden, sowie das Umschalten zwischen interner und externer Antenne erfolgen.

Die üblichen Bluetooth-Chips 14 besitzen einen differentiellen Antennenanschluss. Im Datenblatt/Applikationsschaltbild wird jeweils angegeben, welche Filter und Balun-Schaltungen notwendig sind, um diesen auf einen unsymmetrischen 50 $\Omega$-Anschluss umzusetzen. Dies erlaubt den einfachen Anschluss externer Antennen und Messgeräte. Das Design aus dem Datenblatt kann direkt verwendet werden. Wird eine unsymmetrische Antenne verwendet, so kann diese direkt an diese Struktur angeschlossen werden.

Bei einer unsymmetrischen Antenne wie einem Dipol D, auch den hier betrachteten gibt es zwei Varianten:

1. Nutzung eines weiteren Baluns für die Antenne D

Ein Standard-Balun-Bauelement bzw. Standard-Balun-Design kann für die Antennenseite verwendet werden. Für die Chipseite kann das Design aus dem Datenblatt verwendet werden und es steht ein unsymmetrischer 50 $\Omega$-Anschluss für den einfachen Anschluss externer Antennen und Messgeräte zur Verfügung.

2. Kombination von Filter/Balun 1 und Balun 2

Diese Ausgestaltung weist als Vorteil eine geringere Anzahl an Komponenten und eine geringere Dämpfung auf. Nachteilig ist, dass ein eigenes Design für die Kombination notwendig ist und dass kein unsymmetrischer 50 $\Omega$-Anschluss zur Verfügung steht, was eine wesentlich aufwändigere Messung nach sich zieht.

Die besonderen Vorteile des erfindungsgemäßen Gesamtgeräts nach FIG. 7 sind die einfache Installation durch Benutzer, d.h. es ist keine Installation durch eine Fachkraft - wie bei der ersten Ausgestaltung des Betriebsgeräts nach FIG. 1 bis FIG. 6 - notwendig und die Nutzung vorhandener Geräte des Benutzers für die Konfiguration, z.B. via Smartphone über BLE ist möglich. Durch die Benutzung der erfindungsgemäßen Antenne in Form eines gewinkelter Dipols D mit mindestens einem Strukturelement, insbesondere einer 3er Stiftleiste ist das Betriebsgerät aus jeder Raumrichtung bedienbar bzw. entstehen keine "Funklöcher".

Die vielfältigen Anwendungsmöglichen des erfindungsgemäßen Gesamtgeräts wird anhand dreier Anwendungsbeispiele noch weiter verdeutlicht. Beim ersten Anwendungsbeispiel ist Ausgangspunkt ein elektronischer Stromzähler mit CEN A-PLC-Anbindung (CEN A = A-Band nach Cenelec Norm DIN EN 50065, freigegeben für Netzbetreiber zum Netzbetrieb (Steuerung, Zählerabfrage, ...)) zum Netzbetreiber sowie einer Bridge CEN A-CEN BCD (CEN BCD = B- oder C- oder D-Band nach Cenelec Norm DIN EN 50065, freigegeben für Anwender, z.B. im Haushalt, in Industrieanlagen, aber auch für Straßenbeleuchtung) für Anzeige der Zählerwerte bei Nutzer. Nun sollen Funk-Zähler für Wasser und Gas in Bad und Keller in die Fernablesung integriert werden. Hierzu tauscht der Nutzer in Bad und Keller jeweils eine bestehende Lampe durch eine neue Lampe mit integriertem BLE-PLC-Gateway (siehe FIG. 7 und FIG. 8) aus und die Installation ist erfolgt. Die Daten der Zähler werden dann automatisch bis zur Erfassungsstelle für die Abrechnung weitergeleitet.

Beim zweiten Anwendungsbeispiel ist Ausgangspunkt eine Hausautomatisierung mittels powerline communication PLC über zentrales Steuergerät oder PLC-fähige Verbraucher. Nun soll an einer neuen Stelle ein weiteres Schalterelement installiert werden, an der keine Leitungen zur Verfügung stehen. Der Kunde nutzt einen Funk-Schalter und bindet diesen durch Austausch einer bestehenden Lampe durch eine neue Lampe mit integriertem BLE-PLC-Gateway (siehe FIG. 7 und FIG. 8) in das Automatisierungssystem ein. Über eine Konfigurationsapplikation auf seinem Smartphone konfiguriert der Nutzer die Funktion des neuen Schalters via BLE.

Beim dritten Anwendungsbeispiel ist Ausgangspunkt eine bereits vorhandene PLC-BLE-Infrastruktur zur Hausautomatisierung, z.B. in einem Wohnhaus. Der Kunde stellt fest, dass die Funkreichweite für eine weitere Expansion seiner Anlage nicht ausreichend ist, zur Installation von Geräten in der abgesetzten Garage mit Stromanschluss. Nun tauscht er im Bereich der geplanten Erweiterung eine bestehende Lampe durch eine neue Lampe mit integriertem BLE-PLC-Gateway (siehe FIG. 7 und FIG. 8) aus, womit die Funkreichweite entsprechend erweitert wird. Durch die Gateway-Funktion werden die Daten der neuen Funk-Elemente über PLC mit dem bisherigen System ausgetauscht, auch wenn keine direkte Funkverbindung möglich ist.

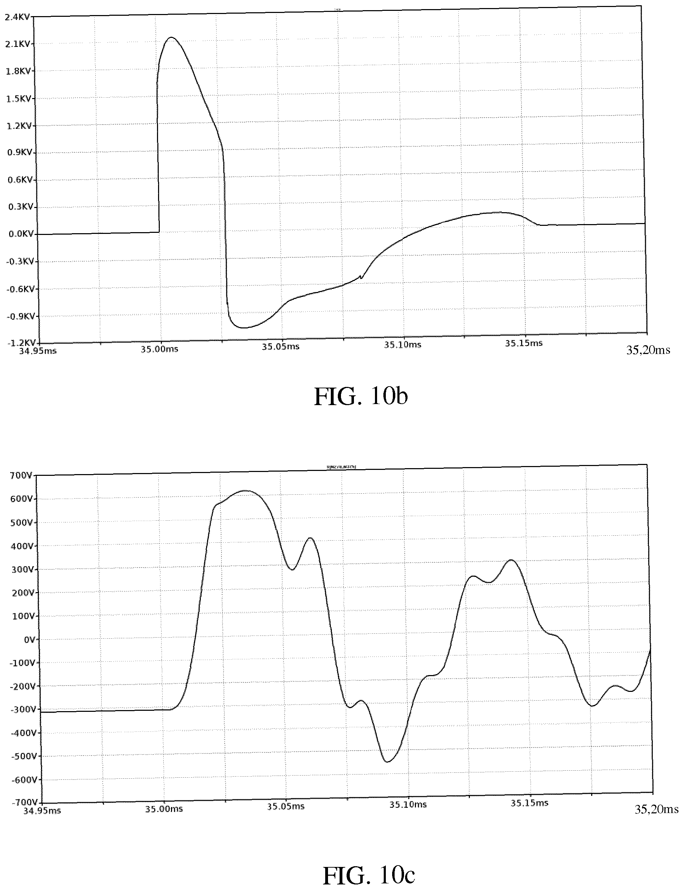

FIG. 10a bis FIG. 10d zeigen den zeitlichen Strom-Spannungsverlauf im erfindungsgemäßen Betriebsgerät, wobei die Strom- bzw. Spannungsamplituden ein Beispiel darstellen. Dabei ist in FIG. 10a der zeitliche Verlauf eines Norm-Strompulses 8/20µs mit einem Spitzenwert ca. 10kA dargestellt. Bei einem Pulsgenerator mit 20hm Innenwiderstand entspricht dies einen 1.5/50µs Spannungspuls mit einem Spitzenwert von 20kV am Eingang des Grobschutzes G. Weiterhin ist in FIG: 10b der zeitliche Verlauf der zugehörigen Klemmenspannung des Grobschutzes G, in FIG. 10c der zeitlichen Verlauf der Ausgangsspannung des Netzfilters NF und in FIG. 10d der zeitliche Verlauf des Stroms durch die Klemmschaltung K des erfindungsgemäßen Betriebsgeräts dargestellt.

Im ersten Zeitfenster wird beim Überschreiten der Zündspannung des Gasableiters 1 die größte Energie des Pulses kurzgeschlossen. Der verbleibende Puls der nicht durch den Grobschutz G kurzgeschlossen wird (wie vorstehend unter Bezugnahme auf das Netzfilter NF beschrieben) durch den Netzfilter NF verzögert und gefaltet.

Im zweiten Zeitfenster wird ein kleiner Energiebeitrag des Pulses vom Feinschutz F, der in der Klemmschaltung K enthalten ist, absorbiert.

Im dritten Zeitfenster wird der Energieabsorber E1 durch das Ansprechen des Feinschutzes F aktiviert. Dies bedeutet, dass die restliche Pulsenergie vom Energieabsorber E1 kurzgeschlossen wird. Beim nächsten Nulldurchgang der Netzspannung wird der Kurzschluss automatisch aufgehoben.

Die Erfindung ist nicht auf die dargestellten und beschriebenen Ausführungsbeispiele , sondern nur durch die Ansprüche beschränkt.

**Patentansprüche**

1. Betriebsgerät mit einem eingangsseitigen Grobschutz (G), einem Ausgang mit getrennten Schnittstellenschaltungen (SS1, SS2) und einem ausgangsseitigen Feinschutz (F) sowie ein an das Betriebsgerät angeschlossenes Leuchtmittel, wobei mit dem Grobschutz (G), welcher eingerichtet ist eine am Eingang des Betriebsgeräts auftretende Überspannung der Netzspannung kurzzuschließen, sowohl ein erster Zweig für den Anschluss des Leuchtmittels an eine erste der Schnittstellenschaltungen (SS1) als auch ein zweiter Zweig für den Anschluss mindestens eines Kommunikationsmoduls an eine zweite der Schnittstellenschaltungen (SS2) verbunden ist, wobei im ersten Zweig mit dem Grobschutz (G) ein Netzfilter (NF) verbunden ist, welches eingerichtet ist den durch den Grobschutz (G) begrenzten Überspannungspuls für die nachfolgenden Schaltungsteile zu verzögern, reduzieren und falten und die Anstiegsgeschwindigkeit des Überspannungspuls zu reduzieren, wobei mit dem Netzfilter (NF) eine Klemmschaltung (K), bestehend aus dem Feinschutz (F) und einem ersten Energieabsorber (E1), verbunden ist, wobei bei zu hoher Restspannung des Pulses der Feinschutz (F) eingerichtet ist den ersten Energieabsorber (E1) zu aktivieren und ein Kurzschluss des Überspannungspulses hervorzurufen und mit Erreichen des nächsten Nulldurchgangs der Netzspannung den Kurzschluss wieder zu deaktivieren, wobei mit dem ersten Energieabsorber (E1) ein zweiter Energieabsorber (E2) verbunden ist, welcher eingerichtet ist beim Einschalten mit Hilfe eines temperaturabhängigen Widerstands (NTC) den Strom zu begrenzen wobei zum Schutz der ersten ausgangsseitigen Schnittstellenschaltung (SS1) des Betriebsgeräts vor Überspannungen und Überströmen, die von dem Leuchtmittel auf das Betriebsgerät einwirken, die erste Schnittstellenschaltung (SS1) einen Überspannungs- und Überstromschutz (ÜS) aufweist und wobei im zweiten Zweig mit dem Grobschutz (G) ein Mittelschutz (M), bestehend aus einem Übertrager (Ü) und einer ersten Feinschutzschaltung (F1), verbunden ist, wobei der Übertrager (Ü) derart eingerichtet ist während des Überspannungspulses in Sättigung zu gehen, wobei mit der ersten Feinschutzschaltung (F1) ein Filter (FK) zur Trennung von parallel ins Stromversorgungsnetz eingespeisten Kommunikationssignalen verbunden ist, und mit diesem Filter (FK) eine zweite Feinschutzschaltung (F2) verbunden ist , und wobei zum Schutz der zweiten Schnittstellenschaltung (SS2) des Betriebsgeräts vor Überspannungen und Überströmen, die von dem Kommunikationsmodul auf das Betriebsgerät einwirken, die zweite Schnittstellenschaltung (SS2) einen Überspannungs- und Überstromschutz (ÜS) aufweist, wobei durch die gestaffelt aufgebauten Schutzmaßnahmen aus im ersten Zweig angeordneten Grobschutz (G) mit Netzfilter (NF), Klemmschaltung (K) mit Feinschutz (F) und ersten Energieabsorber (E1),dem zweiten Energieabsorber (E2) und im zweiten Zweig angeordneten Mittelschutz (M) mit Übertrager (Ü) und der ersten Feinschutzschaltung (F1), dem Filter (FK), der zweiten Feinschutzschaltung (F2) und der Überspannungs- und Überstromschutz (ÜS) vom Eingang und vom Ausgang her ein Schutz des gesamten Betriebsgeräts und diesem nachgeschalteten Kommunikationsmoduls und Leuchtmittels gewährleistet ist.

2. Betriebsgerät und Leuchtmittel nach Anspruch 1, wobei der Grobschutz (G) einen Gasableiter (1) und in Reihe zum Gasableiter (1) zwei Varistoren (2) und eine Thermosicherung (4) aufweist, welche Thermosicherung derart eingerichtet ist einen am Lebenszeitende der Varistoren (2) durch diese fließenden erhöhten Leckstrom zu detektieren.

3. Betriebsgerät und Leuchtmittel nach Anspruch 2, wobei das Betriebsgerät eine zwischen einem der Varistoren (2) und der Thermosicherung (4) angeschlossene Überwachungsschaltung (3) aufweist, welche derart eingerichtet ist das Abtrennen des Grobschutzes (G) von der Versorgungsspannung zu detektieren und einem Mikroprozessor des Betriebsgeräts zu melden.

4. Betriebsgerät und Leuchtmittel nach einem der Ansprüche 1 bis 3, wobei eine zweite Thermosicherung (5) zwischen einem N-Leiteranschluss und dem Grobschutz (G) angeordnet ist.

5. Betriebsgerät und Leuchtmittel nach Anspruch 4, wobei am Gehäuse des Betriebsgeräts ein Anzeigemittel (6) angeordnet ist, welches derart eingerichtet ist das Ansprechen der zweiten Thermosicherung (5) anzuzeigen.

6. Betriebsgerät und Leuchtmittel nach einem oder mehreren der Ansprüche 1 bis 5, wobei zum Schutz der Komponenten in der Klemmschaltung (K) vor schnellen Spannungs- und Stromanstiegen am Eingang der Klemmschaltung (K) eine Induktivität installiert ist und wobei der Feinschutz (F) der Klemmschaltung (K) durch Klemmdioden und der erste Energieabsorber (E1) mittels eines TRIAC realisiert ist.

7. Betriebsgerät und Leuchtmittel nach einem oder mehreren der Ansprüche 1 bis 6, wobei der zweite Energieabsorber (E2) derart eingerichtet ist nach wenigen Netzperioden den temperaturabhängigen Widerstand (NTC) über einen ersten Schalter (S1) kurzzuschließen und für den Fall, dass der zweite Energieabsorber (E2) während des Betriebs eine Überspannung detektiert, der zweite Energieabsorber (E2) derart eingerichtet ist den temperaturabhängigen Widerstand (NTC) mittels eines zweiten Schalters (S2) wieder in eine Masseleitung zu schalten und nach Abklingen des Spannungspulses, den temperaturabhängigen Widerstand (NTC) über den ersten Schalter (S1) kurz zu schließen.

8. Betriebsgerät und Leuchtmittel nach einem oder mehreren der Ansprüche 1 bis 7, wobei der am Ausgang des Betriebsgeräts in den Schnittstellenschaltungen (SS1, SS2) angeordnete Überspannungs- und Überstromschutz (ÜS) jeweils vom Ausgang her gesehen zunächst einen zweiten Grobschutz (GÜ), dann ein mit diesem verbundenes zweites Filter (FÜ), welches derart eingerichtet ist den durch den zweiten Grobschutz (GÜ) begrenzten Überspannungspuls für die nachfolgenden Schaltungsteile zu verzögern, zu reduzieren und zu falten, und schließlich einen mit diesem zweiten Filter (FÜ) verbundenen zweiten Feinschutz (FSÜ) aufweist.

9. Betriebsgerät und Leuchtmittel nach einem oder mehreren der Ansprüche 1 bis 8, wobei wenn keine Funktion des Betriebsgeräts benötigt wird, ein Mikroprozessor (MP) des Betriebsgeräts derart eingerichtet ist dieses auszuschalten, indem er eine Hilfsspannungsversorgung deaktiviert und in einen ECO-Mode umschaltet, und wobei das Verlassen des ECO - Modes mittels des Mikroprozessors (MP) zeitgesteuert oder durch Detektion des Aus- und wieder Einschalten der Netzspannung oder durch ein an das Betriebsgerät angeschlossenes Kommunikationsmodul erfolgt.

10. Betriebsgerät und Leuchtmittel nach einem oder mehreren der Ansprüche 1 bis 9, wobei das Betriebsgerät als Vorschaltgerät ausgestaltet ist und zur Steuerung, zur Abfrage von Statusmeldungen, zur Initialisierung der Parameter des Leuchtmittels (12) und zum Update der Firmware des Betriebsgeräts mindestens eine Powerline-Kommunikationsschnittstelle (PA) aufweist und wobei das Betriebsgerät derart eingerichtet ist zwischen den einzelnen Kommunikationsschnittstellen als Gateway zu arbeiten.

11. Betriebsgerät und Leuchtmittel nach Anspruch 1, wobei das Leuchtmittel aus einem oberen Leuchtmittelteil mit Leuchtdioden (12) und einem als Gerätefuß mit Anschlusssockel ausgestalteten unteren Leuchtmittelteil besteht und wobei der Anschlusssockel als Schraubgewinde-Ringkontakt (E) und Fußkontakt ausgeführt ist und in diesem die Elektronik sowohl für eine Leuchtmittel-Ansteuerung, als auch für eine powerline communication PLC- und Bluetooth Low Energy BLE-Kommunikation einschließlich ein Überspannungs- und Überstromschutz angeordnet ist.

12. Betriebsgerät und Leuchtmittel nach Anspruch 1 mit einer Antenne, wobei diese als gewinkelter Dipol (D) mit mindestens einem Strukturelement (ST1, ST2), welches die Antenne in die 3. Dimension erweitert, ausgestaltet ist.

13. Betriebsgerät und Leuchtmittel nach Anspruch 12, wobei das Strukturelement als Stiftleiste (ST1, ST2) ausgestaltet ist, welches sich senkrecht zur Leiterbahn des gewinkelten Dipols (D) erstreckt.

14. Betriebsgerät und Leuchtmittel nach einem der Ansprüche 1 bis 13, wobei das Netzfilter (NF) als LC-Filter 4. Ordnung mit Tiefpassverhalten aufgebaut ist und gegen Erdpotential (Erdleiter PE) isoliert ist.

15. Betriebsgerät und Leuchtmittel nach einem der Ansprüche 1 bis 14, wobei als Schutz gegen temporäre Überspannung das Netzfilter (NF) ein in einem Phasenleiter (L) liegendes Relais (Re) aufweist.

**Claims**

1. An operating device having an input-side coarse protection (G), an output with separate interface circuits (SS1, SS2) and a fine protection on the output side (F) and a lighting means connected to the operating device, wherein with the coarse protection (G) which is designed to short-circuit an overvoltage of the mains voltage occurring at the input of the operating device, both a first branch for the connection of the lighting means to a first of the interface circuits (SS1) as well as a second branch for connecting at least one communication module to a second of the interface circuits (SS2), wherein in the first branch with the coarse protection (G) a mains filter (NF) which is set up by the coarse protection (G) for the subsequent circuit parts, to reduce, fold and reduce the rate of rise of the overvoltage pulse, wherein a clamping circuit (K), consisting of the fine protection (F) and a first energy absorber (E1), is connected to the mains filter (NF), wherein, if the residual voltage of the pulse is too high, the fine protection (F) is designed to activate the first energy absorber (E1) and to cause a short circuit of the overvoltage pulse and to deactivate the short circuit once the next zero crossing of the network voltage has been reached, wherein a second energy absorber (E2) is connected to the first energy absorber (E1), which second energy absorber (E2) is designed to limit the current when switched on with the aid of a temperature-dependent resistor (NTC), wherein in order to protect the first output-side interface circuit (SS1) of the operating device before overvoltages and overcurrent, which act on the operating device by the lighting means, the first interface circuit (SS1) comprises an overvoltage protection and overcurrent protection (ÜS), and wherein, in the second branch, the coarse protection (G) is connected to a middle protection (M), having a transformer (Ü) and a first fine protection circuit (F1), wherein the transformer (Ü) is set up in such a way to go into saturation during the overvoltage pulse that, with the first fine protection circuit (F) a filter (FK) for separating communication signals fed in parallel into the power supply network, and with this filter (FK) a second fine protection circuit (F2) is connected, and in that, in order to protect the second interface circuit (SS2) of the operating device before overvoltages and overcurrent which act on the operating device by the communication module, the second interface circuit (SS2) having an overvoltage protection and overcurrent protection (ÜS), wherein, by means of the graduated protective measures with the coarse protection (G) with network filter (NF), clamping circuit (K) with fine protection (F) and first energy absorber (E1), with the second energy absorber (E2) arranged in the first branch and arranged in the second branch with medium protection (M) with transformer (Ü) and the first fine protection circuit (F1), the filter (FK), the second fine protection circuit (F2) and the overvoltage and overcurrent protection (ÜS), a protection of the entire operating device and the communication module and lighting means connected downstream thereof is ensured from the input and from the output.

2. Operating device and lighting means according to claim 1, wherein the coarse protection (G) has a gas arrester (1) and, in series with the gas arrester (1), two varistors (2), a thermal fuse (4), which thermal fuse (4) is set up in such a way that it detects an increased leakage current flowing through the latter at the service life of the varistors.

3. The operating device and lighting means according to claim 2, wherein the operating device has a monitoring circuit (3) connected between one of the varistors (2) and the thermal fuse (4), which monitoring circuit (3) is designed to detect the disconnection of the coarse protection (G) from the supply voltage and to report it to a microprocessor of the operating device.

4. Operating device and lighting means according to one of claims 1 to 3, wherein a second thermal fuse (5) is arranged between an N-conductor connection and the coarse protection (G).

5. Operating device and lighting means according to Claim 4, wherein a display means (6) is arranged on the housing of the operating device, which display means is designed to display the response of the second thermal fuse (5).

6. Operating device and lighting means according to one or more of claims 1 to 5, wherein an inductor is installed in the clamping circuit (K) in order to protect the components in the clamping circuit (K) from rapid voltage and current increases at the input of the clamping circuit (K), and wherein the fine protection (F) of the clamping circuit (K) is implemented by clamping diodes and the first energy absorber (E1) is implemented by means of a TRIAC.

7. Operating device and lighting means according to one or more of claims 1 to 6, wherein the second energy absorber (E2) is designed such that, after a few grid periods, the temperature-dependent resistor (NTC) is short-circuited via a first switch (S1) and, in the event that the second energy absorber (E2) detects an overvoltage during operation, the second energy absorber (E2) is set up to switch the temperature-dependent resistor (NTC) back into a ground line by means of a second switch (S2) and, after the voltage pulse has decayed, short the temperature-dependent resistor (NTC) via the first switch (S1)..

8. Operating device and lighting means according to one or more of claims 1 to 7, wherein the operating device arranged at the output of the operating device in the interface circuits (SS1, SS2), in each case seen from the output, first of all a second coarse protection (GÜ), then a second filter (FÜ) connected to the latter, which second filter (FÜ) is set up to reduce and fold the overvoltage pulse limited by the second coarse protection (GÜ) for the subsequent circuit parts in a delayed manner, and finally to have a second fine protection (FSÜ) connected to this second filter (FÜ).

9. Operating device and lighting means according to one or more of claims 1 to 8, wherein if no function of the operating device is required, a microprocessor (MP) of the operating device is set up in such a way that it deactivates an auxiliary voltage supply and switches it into an ECO mode, and wherein the leaving of the ECO mode is carried out by means of the microprocessor (MP) in a time-controlled manner or by detecting the switching on and off of the mains voltage or by a communication module connected to the operating device.

10. Operating device and lighting means according to one or more of claims 1 to 9, wherein the operating device is designed as a ballast and has at least one power line communication interface (PA) for controlling, querying status messages, for initializing the parameters of the lighting means and for updating the firmware of the operating device, and wherein the operating device is designed to operate as a gateway between the individual communication interfaces.

11. Operating device and lighting means according to claim 1, wherein the lighting means consists of an upper luminous-means part with light-emitting diodes and a lower luminous-means part which is designed as a device foot with connecting socket, and wherein the connecting socket is designed as a screw-thread ring contact (E) and foot contact (FK) and in this an electronic circuit is arranged both for luminous means control and for powerline communication PLC and Bluetooth low energy BLE communication, including overvoltage protection and overcurrent protection.

12. Operating device and lighting means according to claim 1, having an antenna, wherein said antenna is designed as an angled dipole (D) having at least one structural element (ST1, ST2), which widens the antenna into the third dimension.

13. Operating device and lighting means according to claim 12, wherein the structural element is designed as a pin stripe (ST1, ST2), which extends perpendicularly to the conductor path of the angled dipole (D).

14. Operating device and lighting means according to one of claims 1 to 13, wherein the mains filter (NF) is constructed as an LC filter forth order with low-pass behavior and is insulated from earth conductor (PE).

15. Operating device and lighting means according to one of claims 1 to 14, wherein the mains filter (NF) has a relay (Re) lying in a phase conductor (L) as protection against temporary overvoltage.

**Revendications**

1. Dispositif de commande ayant une protection grossière côté entrée (G), une sortie avec des circuits d'interface séparés (SS1, SS2) et une protection fine du côté sortie (F) et un moyen d'éclairage connecté au dispositif de commande, dans lequel avec le grossier protection (G) qui est destinée à court-circuiter une surtension de la tension du secteur apparaissant à l'entrée du dispositif de commande, à la fois une première branche pour le raccordement des moyens d'éclairage à un premier des circuits d'interface (SS1) ainsi que une deuxième branche pour connecter au moins un module de communication à un deuxième des circuits d'interface (SS2), dans laquelle dans la première branche avec la protection grossière (G) un filtre secteur (NF) est connecté, qui est mis en place par la protection grossière (G) pour les parties de circuit suivantes, pour réduire, plier et réduire la vitesse de montée de l'impulsion de surtension, dans lequel un circuit de blocage (K), constitué de la protection fine (F) et d'un premier absorbeur d'énergie (E1), est connecté au filtre secteur (NF), dans lequel, si la tension résiduelle de l'impulsion est trop élevée, la protection fine (F) est conçue pour activer le premier absorbeur d'énergie (E1) et provoquer un court-circuit de l'impulsion de surtension et désactiver le court-circuit lors du prochain passage à zéro de la tension du réseau a été atteint, dans lequel un deuxième absorbeur d'énergie (E2) est connecté au premier absorbeur d'énergie (E1), lequel deuxième absorbeur d'énergie (E2) est conçu pour limiter le courant lorsqu'il est allumé à l'aide d'une résistance dépendant de la température (NTC), dans lequel, afin de protéger le premier circuit d'interface côté sortie (SS1) du dispositif de commande avant les surtensions et les surintensités, qui agissent sur le dispositif de commande par les moyens d'éclairage, le premier circuit d'interface (SS1) comprend une protection contre les surtensions et les surintensités protection (ÜS), et dans lequel, dans la deuxième branche, la protection grossière (G) est connectée à une protection intermédiaire (M), ayant un transformateur (Ü) et un premier circuit de protection fine (F1), dans lequel le transformateur (Ü) est installé dans une manière d'entrer en saturation pendant l'impulsion de surtension qui, avec la première protection fine circuit (F) un filtre (FK) est connectée pour séparer les signaux de communication alimentés en parallèle dans le réseau d'alimentation, et avec ce filtre (FK) un deuxième circuit de protection fine (F2) est connecté, et en cela, afin de protéger le deuxième circuit d'interface (SS2) du dispositif de commande avant les surtensions et les surintensités qui agissent sur le dispositif de commande par le module de communication, le deuxième circuit d'interface (SS2) ayant une protection contre les surtensions et une protection contre les surintensités (ÜS), dans lequel, au moyen du protecteur gradué mesure avec la protection grossière (G) avec filtre réseau (NF), circuit de serrage (K) avec protection fine (F) et premier absorbeur d'énergie (E1), avec le deuxième absorbeur d'énergie (E2) disposé dans la première branche et disposé en la deuxième branche avec protection moyenne (M) avec transformateur (Ü) et le premier circuit de protection fine (F1), le filtre (FK), le deuxième circuit de protection fine (F2) et la protection contre les surtensions et surintensités (ÜS) de l'ensemble dispositif de commande et le module de communication et les moyens d'éclairage connectés en aval de celui-ci sont assurés à partir de l'entrée et de la sortie.

2. Dispositif de commande et moyen d'éclairage selon la revendication 1, dans lesquels la protection grossière (G) comporte un parafoudre (1) et, en série avec le parafoudre (1), deux varistances (2), un fusible thermique (4), qui le fusible thermique (4) est installé de telle sorte qu'il détecte un courant de fuite accru circulant à travers ce dernier au cours de la durée de vie des varistances.

3. Dispositif de commande et moyen d'éclairage selon la revendication 2, dans lequel le dispositif de commande a un circuit de surveillance (3) connecté entre l'une des varistances (2) et le fusible thermique (4), lequel circuit de surveillance (3) est conçu pour détecter la déconnexion de la protection grossière (G) de la tension d'alimentation et de la signaler à un microprocesseur du dispositif de commande.

4. Dispositif de commande et moyen d'éclairage selon l'une des revendications 1 à 3, dans lesquels un deuxième fusible thermique (5) est disposé entre une connexion à conducteur N et la protection grossière (G).

5. Dispositif de commande et moyen d'éclairage selon la revendication 4, dans lesquels un moyen d'affichage (6) est agencé sur le boîtier du dispositif de commande, lequel moyen d'affichage (6) est conçu pour afficher la réponse du deuxième fusible thermique (5).

6. Dispositif de commande et moyen d'éclairage selon une ou plusieurs des revendications 1 à 5, dans lesquels un inducteur est installé dans le circuit de serrage (K) afin de protéger les composants du circuit de serrage (K) contre les augmentations rapides de tension et de courant à l'entrée du circuit de serrage (K), et dans lequel la protection fine (F) du circuit de serrage (K) est réalisée par des diodes de serrage et le premier absorbeur d'énergie (E1) est réalisé au moyen d'un TRIAC.

7. Dispositif de commande et moyen d'éclairage selon une ou plusieurs des revendications 1 à 6, dans lesquels le deuxième absorbeur d'énergie (E2) est conçu de telle sorte qu'après quelques périodes de grille, la résistance dépendant de la température (NTC) soit court-circuitée via un premier interrupteur (S1) et, dans le cas où le deuxième absorbeur d'énergie (E2) détecte une surtension pendant le fonctionnement, le deuxième absorbeur d'énergie (E2) est configuré pour ramener la résistance dépendant de la température (NTC) dans une ligne de masse au moyen d'un deuxième interrupteur (S2) et, après la décroissance de l'impulsion de tension, court-circuiter la résistance dépendant de la température (NTC) via le premier interrupteur (S1)..

8. Dispositif de commande et moyen d'éclairage selon une ou plusieurs des revendications 1 à 7, dans lequel le dispositif de commande disposé à la sortie du dispositif de commande dans les circuits d'interface (SS1, SS2), dans chaque cas vu de la sortie, tout d'abord un deuxième protection grossière (GÜ), puis un deuxième filtre (FÜ) connecté à ce dernier, lequel deuxième filtre (FÜ) est mis en place pour réduire et plier l'impulsion de surtension limitée par la deuxième protection grossière (GÜ) pour les parties de circuit suivantes dans de manière retardée, et enfin d'avoir une seconde protection fine (FSÜ) connectée à ce second filtre (FÜ).

**9.** Dispositif de commande et moyen d'éclairage selon une ou plusieurs des revendications 1 à 8, dans lesquels si aucune fonction du dispositif de commande n'est requise, un microprocesseur (MP) du dispositif de commande est configuré de manière à désactiver une alimentation en tension auxiliaire et le commute dans un mode ECO, et dans lequel la sortie du mode ECO est effectuée au moyen du microprocesseur (MP) de manière contrôlée par le temps ou en détectant la mise en marche et l'arrêt de la tension secteur ou par un module de communication connecté au dispositif de commande.

**10.** Dispositif de commande et moyen d'éclairage selon une ou plusieurs des revendications 1 à 9, dans lequel le dispositif de commande est conçu comme un ballast et possède au moins une interface de communication de ligne électrique (PA) pour commander, interroger des messages d'état, pour initialiser les paramètres du des moyens d'éclairage et pour mettre à jour le micrologiciel du dispositif de commande, et dans lequel le dispositif de commande est conçu pour fonctionner comme une passerelle entre les interfaces de communication individuelles.

**11.** Dispositif de commande et moyen d'éclairage selon la revendication 1, dans lequel le moyen d'éclairage se compose d'une partie supérieure de moyen lumineux avec des diodes électroluminescentes et d'une partie inférieure de moyen lumineux qui est conçue comme un pied de dispositif avec douille de connexion, et dans laquelle la douille de connexion est conçu comme un contact à bague filetée (E) et un contact de pied (FK) et un circuit électronique est agencé à la fois pour le contrôle des moyens lumineux et pour la communication CPL et communication BLE basse énergie et Bluetooth, y compris la protection contre les surtensions et la protection contre les surintensités.

**12.** Dispositif de commande et moyen d'éclairage selon la revendication 1, ayant une antenne, dans lesquels ladite antenne est conçue comme un dipôle coudé (D) ayant au moins un élément structurel (ST1, ST2), qui élargit l'antenne dans la troisième dimension.

**13.** Dispositif de commande et moyen d'éclairage selon la revendication 12, dans lesquels l'élément structurel est conçu comme une bande à broches (ST1, ST2), qui s'étend perpendiculairement au trajet conducteur du dipôle coudé (D).

**14.** Dispositif de commande et moyen d'éclairage selon l'une des revendications 1 à 13, dans lesquels le filtre secteur (NF) est réalisé sous la forme d'un filtre LC du quatrième ordre avec un comportement passe-bas et est isolé du conducteur de terre (PE).

**15.** Dispositif de commande et moyen d'éclairage selon l'une des revendications 1 à 14, dans lequel le filtre secteur (NF) comporte un relais (Re) situé dans un conducteur de phase (L) comme protection contre les surtensions temporaires.

FIG. 1

FIG. 2

**FIG. 3**

**FIG. 4**

**FIG. 5a**

Primär
Netz-Anschluss

Ü

Sekundär
Last-Anschluss / Verbraucher

L

DC+ / AC1

GAP A

GAP B

1

2

PE

2

1

Funktions-
Potential / Erde

3

3

N

DC- / AC2

F

## FIG. 5b

L

DLCB

K1
K2
K3
K4

4

1

DL-
XX

N

12

PE

DL-SS

Interface Module

POE*

Wi-Fi

POE*

Wi-Fi

DLCB

POE*

Sensors
&
Actors

K

DL-SS

Interface Module

POE*

Video

## FIG. 6

**FIG. 7**

SK

13a

13b

12

D

D

11

10

MP

STR

NF

PA

GH

14

G

E

**Fuss Kontakt**

FIG. 8

FIG. 9

FIG. 10a

FIG. 10b

FIG. 10c

FIG. 10d

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 260153 A1
- DD 264094 A1
- DD 300256 A1
- DE 202006016649 U1
- DE 102005063443 A1
- DE 29602914 U1
- DE 102009031967 B3
- DE 102013102312 B3
- DE 202004020723 U1
- EP 1850500 B1
- US 2014300293 A1
- CN 204291046 U
- US 7079808 B2
- DE 102011007416 A1
- DE 102012109829 A1

- DE 102006037803 A1
- US 20150279207 A1
- US 20150279207 A
- WO 2012146212 A1
- WO 2012022555 A1
- FR 2665031 A1
- US 20150048754 A1
- US 20100085179 A1
- US 20150259078 A1
- WO 2015179200 A1
- US 20150342006 A1
- DE 602005002799 T2
- DE 60122698 T2
- DE 60216670 T2
- DE 69701837 T2